(19) **Europäisches Patentamt / European Patent Office / Office européen des brevets**

(11) **EP 1 902 423 B1**

(12) **FASCICULE DE BREVET EUROPEEN**

(45) Date de publication et mention
de la délivrance du brevet:
**20.06.2012 Bulletin 2012/25**

(21) Numéro de dépôt: **06754711.7**

(22) Date de dépôt: **10.07.2006**

(51) Int Cl.:
***G06T 11/00*** *(2006.01)*

(86) Numéro de dépôt international:
**PCT/EP2006/006802**

(87) Numéro de publication internationale:
**WO 2007/006560 (18.01.2007 Gazette 2007/03)**

(54) **PROCEDE ET DISPOSITIF D'IMAGERIE X OU INFRAROUGE**

RÖNTGEN- ODER INFRAROT-BILDGEBUNGSVERFAHREN UND -EINRICHTUNG

X-RAY OR INFRARED IMAGING METHOD AND DEVICE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **11.07.2005 FR 0507362
20.04.2006 FR 0603464**

(43) Date de publication de la demande:
**26.03.2008 Bulletin 2008/13**

(73) Titulaire: **Beyrard, Norbert
01220 Divonne-Les-Bains (FR)**

(72) Inventeur: **Beyrard, Norbert
01220 Divonne-Les-Bains (FR)**

(74) Mandataire: **Gaglione, Renaud
240, rue du Quart
01710 Thoiry (FR)**

(56) Documents cités:
**US-A- 5 375 156      US-A- 5 414 623
US-B1- 6 233 305**

- **KAK A.C. AND SLANEY M.: "PRINCIPLES OF
COMPUTARIZED TOMOGRAPHIC IMAGING"
SIAM - CLASSICS IN APPLIED MATHEMATICS
VOLUME 33, 2001, XP002416044**
- **HERMAN G.T.: "IMAGE RECONSTRUCTIONS
FROM PROJECTIONS- THE FUNDAMENTALS"
1993, ACADEMIC PRESS , NEW-YORK ,
XP002416106 page 180 - page 193**
- **KROHMER J.S.: "RADIOGRAPHY AND
FLUOROSCOPY 1920 TO THE PRESENT"
RADIOGRAPHICS, vol. 9, no. 6, novembre 1989
(1989-11), pages 1129-1153, XP002416448**

EP 1 902 423 B1

**Description**

L'invention se rapporte à un procédé et à un dispositif d'imagerie X ou infrarouge d'un corps comprenant plus particulièrement, un support pour recevoir un corps à examiner, une source émettant un faisceau de rayons X ou lumineux suivant une direction de propagation pour irradier ou illuminer le corps à examiner, un détecteur irradié ou illuminé par le faisceau pour détecter une intensité atténuée en fonction d'une traversée des rayons X ou lumineux à travers le corps à examiner, et un convertisseur analogique-numérique pour convertir les intensités détectées en données permettant de déterminer une atténuation par le corps à examiner des rayons X ou lumineux.

Un tel dispositif est connu par exemple du brevet US 3 924 131 ou US 3 919 552. Rappelons que la scannographie (ou tomodensitométrie), a été découverte par un ingénieur de la firme EMI, G. N. Hounsfield, en 1968. Le brevet de 1972 s'intitule : "A method and apparatus for examination of a body by radiation such as X or gamma-radiation". Cette invention valut en 1979 le prix NOBEL à son inventeur.

Le principe est le suivant :

Un faisceau de rayons X, balaye un plan défini, il traverse un organe de manière linéaire et frappe une plaque ou un détecteur radiographique. La traversée de l'organe provoque une atténuation du faisceau, dont la mesure peut être effectuée grâce au détecteur. Le balayage de manière croisée, dans le plan de coupe, produit une série d'informations traitée par des logiciels appropriés sur un ordinateur associé.

En effet suivant chaque axe de balayage dans un milieu hétérogène l'atténuation peut s'exprimer par une loi exponentielle, tenant compte de l'absorption photoélectrique et de la diffusion par effet Compton.

Soit 10, la valeur de référence
I x la valeur en un point X,
On peut écrire la relation suivante :

$$\int A\,(x)\,dx = F$$

$$I = Io\,e^{-F}$$

$$In = Io\,E$$

$$Ln = \frac{Io}{Ik} = \int_0^t A\,(x)\,dx$$

Dont on déduit par discrétisation :

$$Ln\,\frac{Io}{In} = \int_0^t A\,(x)\,dx = A_1X_1 + A_2X_2 + \ldots\ldots + A_nX_n$$

Les valeurs successives, $A_1$, $A_2$,........., $A_n$ correspondent aux valeurs de chaque segment définis par $X_1$, $X_2$, ......, $X_n$.

On peut alors exprimer par une série d'équations, les profils de chaque balayage associé à un angle (ou à une position) précis.

On peut définir une échelle particulière par la valeur, relative à une valeur de référence du coefficient d'atténuation, celle de l'eau par exemple, ou toute autre molécule convenablement choisie.

L'échelle, utilisée le plus souvent est celle relative à une molécule, abondante dans tous les organismes vivants, l'eau.

Si l'on appelle A (h2o), le coefficient d'atténuation de l'eau, on peut utiliser une échelle relative telle que :

$$Bn = [An - A(h2o)] * 1000 \;/\; A(h2o)$$

La valeur du coefficient de l'eau peut être définie comme égale à 1 ou à 0, créant ainsi un système de notation facile à utiliser puisque l'eau est un composant essentiel du corps humain.

D'autres systèmes peuvent d'ailleurs être utilisés, en fonction de la manière dont l'information obtenue sera exprimée (de manière visuelle). On choisit souvent la valeur de 1000 pour l'os et de -1000 pour l'air.

Le traitement informatique d'un nombre suffisant de balayages croisés, définissant en fait des petites cellules ou zones élémentaires, permet la résolution d'un ensemble d'équations linéaires à condition que le nombre de balayages soit égal aux nombre de cellules.

L'édition et l'utilisation de l'information sont effectuées par un ordinateur associé.

L'ordinateur collecte l'ensemble des données et calcule ainsi la valeur du coefficient d'atténuation de chaque zone élémentaire.

L'information résultant des calculs est traduite par une carte du plan de coupe tomographique.

L'ensemble des cartes constitue l'image scanner en trois dimensions de l'analyse, ce qui autorise des coupes longitudinales ou transversales.

L'interprétation médicale s'appuie ainsi sur une véritable image intérieure des tissus.

De telles images permettent de vérifier l'état de certains os, aussi bien que l'état du cerveau, pour détecter tumeur ou autre anomalie.

Les explorations sont précédées ou complétées par d'autres explorations par exemple échographie ultrasonore ou imagerie par résonance magnétique.

Le scanner et les méthodes qu'il a initiées restent un outil essentiel de l'exploration médicale.

A l'origine on procédait à une série de déplacements angulaires de l'ordre de 3 degrés, répétés une centaine de fois.

Les perfectionnements apportés depuis permettent d'associer plusieurs faisceaux à des barrettes de détection d'une longueur suffisante pour multiplier le nombre de mesures effectuées au même instant grâce à des détecteurs multiples.

Dans les scanners de cinquième génération on utilise des barrettes de détecteur perpendiculaires aux plans de coupe pour éviter tout déplacement.

L'image obtenue résulte d'un processus par étapes:

- Obtention des valeurs des atténuations pour chaque projection,

- Calculs des valeurs d'un profil,

- Représentation matricielle de chaque plan de coupe,

- Traduction de chaque représentation par une carte particulière,

- Etablissement d'un système cartographique spatialisé.

On arrive aujourd'hui à des volumes de chaque zone élémentaire de l'ordre du $mm^3$.

C'est cependant loin de l'échelle microscopique puisque le nombre de cellules vivantes est de l'ordre du milliard dans un $mm^3$. Les cellules humaines ont en moyenne une taille de 10 microns. Les microorganismes que l'on trouve dans le corps humain peuvent avoir une taille de l'ordre de 1 micromètre au cube.

La détection précoce du cancer suppose un gain considérable de la définition. Mais le temps d'utilisation du système pour un patient déterminé ne saurait dépasser un seuil économique évident. Mais surtout l'accroissement du nombre de profils augmente la dose d'irradiation.

On admet en effet qu'un nodule cancéreux accélère son développement lorsqu'il provoque une vascularisation associée, ce phénomène apparaît lorsqu'une taille critique est atteinte soit par exemple 50 à 500 microns. Dans les procédés classiques la dose d'irradiation et le temps de calcul sont multipliés par 8000, pour atteindre la définition égale à 50 microns.

Le but de l'invention est de modifier un dispositif connu dans l'état de la technique rappelé ci-dessus pour réduire à la fois la dose d'irradiation et le temps de calcul de l'ordinateur dans le traitement des données pour et ainsi permettre d'augmenter la définition de l'exploration et des images en résultant.

A cet effet, l'invention a pour objet un procédé d'imagerie X ou infrarouge d'un corps dans lequel, un corps à examiner étant reçu par un support,

- on irradie ou illumine le corps à examiner à l'aide d'une source émettant un faisceau de rayons X ou lumineux suivant une direction de propagation,

- on détecte une intensité atténuée en fonction d'une traversée des rayons X ou lumineux à travers le corps à examiner, à l'aide d'un détecteur irradié ou illuminé par le faisceau,

- on convertit les intensités détectées en données permettant de déterminer une atténuation par le corps à examiner des rayons X ou lumineux, à l'aide d'un convertisseur analogique-numérique,

- on fait tourner d'un angle de rotation le support monté mobile autour d'un axe de rotation par rapport à la source et au détecteur montés sur un bâti ou tourner d'un angle de rotation la source et le détecteur montés sur un bâti mobile autour d'un axe de rotation par rapport au support, et

- à l'aide d'un ordinateur dûment programmé, on effectue les étapes suivantes :

(1) moyenner les données provenant de la conversion des intensités détectées, dans une bande du détecteur pour un premier angle de rotation, en n valeurs moyennes à l'intérieur de n segments élémentaires de la bande et moyenner les données provenant de la conversion des intensités détectées dans la bande du détecteur pour un deuxième angle de rotation, de préférence différent de 90 degrés du premier angle de rotation, en m valeurs moyennes à l'intérieur de m segments élémentaires de la bande les n et m segments élémentaires correspondant à un quadrillage en n x m zones élémentaires d'un plan de coupe de l'objet perpendiculaire à l'axe de rotation, les n et m valeurs moyennes obtenues constituant les termes respectivement d'un vecteur générateur colonne et d'un vecteur générateur ligne,

(2) construire une matrice initiale (n,m) avec les termes des deux vecteurs générateurs, en affectant à chaque zone élémentaire un terme de ligne et de colonne (Bij) représentant un coefficient d'atténuation et défini par la demi-somme, du terme homologue (i) du vecteur générateur colonne divisé par le nombre (m) de termes du vecteur générateur ligne et du terme homologue (j) du vecteur générateur ligne divisé par le nombre (n) de termes du vecteur générateur colonne,

(3) ajuster le coefficient d'atténuation en chaque zone élémentaire par une méthode des moindres carrés en tenant compte, des valeurs de bordure de ligne définies par la somme des termes (Bij) sur chacune des lignes de la matrice initiale et des valeurs de bordure de colonne définies par la somme des termes (Bij) sur chacune des colonnes de la matrice initiale, des termes des vecteurs générateurs comme contraintes de ligne ou de colonne et en utilisant la formule suivante :

$$C_{ij} = B_{ij} + \left(\frac{1}{n}\right)^{\star} (\rho_j - \sum_{1}^{n} B_{ij}) + \left(\frac{1}{m}\right)^{\star} (c_i - \sum_{j=1}^{m} B_{ij})$$

où, dans cette formule,
$C_{ij}$ = la valeur recherchée
$B_{ij}$ = la valeur estimée initialement
(n) = le nombre de lignes de la matrice initiale
(m) = le nombre de colonnes de la matrice initiale

$$\sum_{i=1}^{n} C_{ij} = \rho_j$$ pour toutes les valeurs de i, la contrainte de la colonne j

$$\sum_{j=1}^{m} C_{ij} = c_i$$ pour toutes les les valeurs de j, la contrainte de la ligne i,

pour aboutir à une matrice ajustée pour laquelle les valeurs de bordure de ligne et de colonne calculées à l'aide des valeurs ajustées ($C_{ij}$) sont égales, pour chaque ligne et pour chaque colonne, respectivement aux termes des vecteurs générateurs ligne et colonne,

(4) répéter les étapes (1) à (3) pour des données acquises avec différentes paires d'angles de rotation, et

(5) traiter les matrices ajustées, obtenues pour les différentes paires d'angles, par un opérateur de rotation pour toutes les superposer sur une même paire d'angles (0°-90°) puis moyenner terme à terme les matrices ajustées et superposées pour aboutir à une matrice de synthèse exprimant une image des coefficients d'atténuation du corps examiné sous une définition déterminée par le quadrillage.

Pour une double détection, le bâti comprend deux sources émettant un premier et un deuxième faisceau de rayons X ou lumineux suivant une première et une deuxième direction axiale de propagation, de préférence différentes de 90 degrés, et deux détecteurs irradiés ou illuminés par le premier et le deuxième faisceau, et :

- à l'aide de l'ordinateur dûment programmé :

- on effectue l'étape (1) en moyennant les données provenant de la conversion des intensités détectées dans une première bande du premier détecteur (13a) et en moyennant les données provenant de la conversion des intensités détectées dans une deuxième bande du deuxième détecteur, pour le plan de coupe de l'objet perpendiculaire à l'axe de rotation (19) dans lequel les première et deuxième bandes s'étendent.

Pour des raisons de simplicité, les coupes sont généralement fabriquées de sorte à ce que le nombre de ligne et le nombre de colonne soient égaux, ainsi n est égal à m.

Pour une mise en oeuvre sur une étendue large, on irradie ou illumine en une ou plusieurs impulsions de commande de la source, une étendue du corps à examiner parallèlement à l'axe de rotation et, à l'aide de l'ordinateur dûment programmé,on effectue les étapes supplémentaires suivantes :

(6) enregistrer les données provenant de la conversion des intensités détectées dans toute l'étendue irradiée ou illuminée du détecteur,

(7) appeler les données provenant de la conversion des intensités détectées dans la bande de l'étendue irradiée ou illuminée du détecteur pour le premier et le deuxième angle de rotation ou dans la première et la deuxième bande respectivement du premier et du deuxième détecteur, et

- effectuer les étapes (1) à (5) à partir des données appelées.

Dans le cas où l'on irradie ou illumine l'étendue, voire la totalité, du corps à examiner, en projetant la source en un faisceau conique ou pyramidal, et

- à l'aide de l'ordinateur dûment programmé:

(8) on corrige les données appelées en les multipliant par un facteur correctif dépendant d'une part de la distance entre le sommet géométrique du faisceau conique ou pyramidal et le détecteur suivant la direction axiale du faisceau et de la distance d'autre part, entre le sommet géométrique et un segment élémentaire de la bande de l'étendue irradiée ou illuminée du détecteur, cette correction correspondant à un grossissement virtuel de l'objet à examiner suivant l'axe de rotation, et

- on effectue les étapes (1) à (5) à partir des données appelées et corrigées.

L'invention s'étend à un dispositif spécialement conçu pour la mise en oeuvre d'un procédé selon l'invention, notamment dans le cas où le corps à examiner est le corps d'un individu, comprenant, dans un premier mode d'exécution :

- un support pour recevoir un corps à examiner,

- une source émettant un faisceau de rayons X ou lumineux suivant une direction de propagation pour irradier ou illuminer le corps à examiner,

- un détecteur irradié ou illuminé par le faisceau pour détecter une intensité atténuée en fonction d'une traversée des rayons X ou lumineux à travers le corps à examiner,
  et dans lequel,

- le support d'une part, la source et le détecteur d'autre part, sont mobiles le premier par rapport aux deux autres autour d'un axe de rotation vertical pour que l'individu soit reçu en position debout ou assise par le support.

Le support peut comprendre un plateau tournant autour de l'axe de rotation vertical et est de préférence pourvu d'un moyen d'immobilisation de l'individu ou d'un fauteuil transparent aux rayons X.

La source et le détecteur peuvent être dédoublés en deux sources et deux détecteurs pour former deux faisceaux de rayons X ou lumineux se propageant de préférence suivant deux directions orthogonales pour irradier ou illuminer respectivement les deux détecteurs.

Le support, et le cas échéant, le plateau tournant, sont de préférence disposés dans une cabine étanche aux rayons X et la source ou le détecteur émet ou reçoit les rayons X à travers un module de jonction mobile en translation verticale à l'aide de moyens de déplacement verticaux pour être déplacé en regard d'une fenêtre de la cabine formée dans une paroi et mobile en translation horizontale à l'aide de moyens de déplacement horizontaux pour être déplacé à travers la fenêtre et déboucher dans la cabine.

La source et le détecteur sont mobiles en translation verticale par rapport aux module de jonction à l'aide de moyens de déplacement verticaux commandés de façon synchrone.

Des panneaux coulissants sont avantageusement relevés par groupe dans des portiques de la cabine par des moyens de levage pour ouvrir une ouverture formant la fenêtre à travers laquelle les modules de jonction sont déplacés horizontalement pour déboucher dans la cabine.

La source et le détecteur peuvent être mobiles en rotation autour de l'axe de rotation vertical en étant portés par une potence.

Dans un deuxième mode d'exécution, le dispositif spécialement conçu pour la mise en oeuvre d'un procédé selon l'invention comprend :

- un support pour recevoir un corps à examiner,

- une source émettant un faisceau de rayons X ou lumineux suivant une direction de propagation pour irradier ou illuminer le corps à examiner,

- un détecteur irradié ou illuminé par le faisceau pour détecter une intensité atténuée en fonction d'une traversée des rayons X ou lumineux à travers le corps à examiner,

- le support d'une part et la source et le détecteur d'autre part étant mobiles le premier par rapport aux deux autres autour d'un axe de rotation horizontal, et dans lequel,

- la source et le détecteur sont dédoublés en deux sources et deux détecteurs pour former deux faisceaux de rayons X ou lumineux se propageant de préférence suivant deux directions orthogonales pour irradier ou illuminer respectivement les deux détecteurs.

La première amélioration du procédé concerne l'acquisition des données, relatives aux coefficients d'atténuation point par point. L'auteur a choisi d'utiliser de préférence la projection de l'image sur un détecteur. Cette méthode est destinée normalement à obtenir une radiographie de l'objet à examiner, conduisant à produire sur un écran d'ordinateur, puis sur une imprimante, une image de type radiographique.

L'acquisition de l'information peut se faire de deux manières : en produisant l'image radiographique puis en traitant celle-ci, ou en prenant l'information à la sortie du détecteur, en la traitant par conversion de l'information analogique en information digitale puis en traitant cette information.

On dispose de cette manière d'une masse considérable d'informations, puisque comme nous le verrons plus loin, un détecteur existant sur le marché permet de recueillir plusieurs millions d'informations élémentaires correspondant à des pixels dont la dimension est de l'ordre de 25 microns. La multiplication de l'information obtenue instantanément par cette technique conduit à des besoins de traitement eux mêmes considérablement amplifiés, ce qui a conduit à revoir le processus de traitement.

La deuxième amélioration concerne donc le traitement de l'information en substituant au traitement classique par l'algèbre linéaire, une autre méthode se résumant ainsi :

a) on relève, par exemple, dans une première image obtenue, une bande correspondant à une épaisseur de par exemple 1 mm et pouvant descendre jusqu'à 25 μm, cette bande étant découpée en segments élémentaires de 1 mm de longueur correspondant à autant de couches élémentaires parallèles à la direction du faisceau et perpendiculaires à l'axe de rotation de l'objet à examiner. On peut grâce au logiciel de lecture de l'image mesurer la moyenne des intensités élémentaires, en déduire la moyenne des coefficients d'absorption par le corps à examiner, et ce pour chaque segment élémentaire et tirer le coefficient d'atténuation associé à chaque segment. De chaque coupe on déduit ainsi un premier vecteur.

Puis on prend une deuxième image obtenue sous un angle différent décalé par exemple de 90 degrés par rotation de l'objet ou de la prise de vue. On découpe de la même manière une bande située dans le même plan de coupe dont on tire un deuxième vecteur. On dispose ainsi de deux vecteurs orthogonaux.

b) Ces deux vecteurs orthogonaux (ou en tous cas sécants) permettent d'engendrer une première matrice initiale de la manière suivante : chaque vecteur est considéré comme un vecteur générateur de la matrice initiale. Chaque ligne ou colonne de la matrice est divisée par un nombre égal au nombre de termes de l'autre vecteur, ce qui donne deux séries de termes élémentaires associés aux différentes lignes ou colonnes. On peut alors évaluer chaque terme de la matrice en prenant la moyenne arithmétique (ou géométrique) du terme correspondant à la ligne et du terme correspondant à la colonne sur lequel le terme est situé. On a ainsi créé une matrice initiale correspondant à un découpage millimétrique si les vecteurs sont eux mêmes obtenus ainsi.

c) Cette matrice initiale est ajustée en considérant les termes de chaque vecteur comme des contraintes de ligne ou de colonne, par la méthode d'ajustement qui est décrite ci-dessous.

On peut traduire cette matrice résultat ajustée par une image sur un écran donnant déjà une première image. Pour parfaire la recherche, on peut réaliser une série de couples d'images décalées de 90°, d'où l'on tire autant de matrices élémentaires que de couples, le nombre de ces derniers pouvant être égal au nombre de vecteurs élémentaires. On peut alors calculer une matrice de termes égaux à la moyenne des termes homologues des matrices individuelles. On peut enfin calculer un écart type pour chaque terme et si l'ensemble est satisfaisant produire l'image correspondant à la matrice des moyennes.

L'avantage du dispositif selon l'invention est double :

- l'acquisition des données est beaucoup plus rapide et moins contraignante que par le système des balayages point à point. Si le détecteur a une définition des pixels de 25 microns approximativement (par exemple le détecteur de la société ATMEL dont la taille est de 23x0,6 cm offre sur sa surface 2 millions de zones de 25 microns de côté), il permet d'obtenir plusieurs millions de points même si l'on tient compte des espaces libres, à condition par exemple d'obtenir deux images décalées l'une par rapport à l'autre.

Par la haute résolution, un seul flash durant quelques fractions de seconde remplace plusieurs millions de balayages et il en résulte que l'analyse par balayage physique est remplacée par une série de balayages informatiques.

Ainsi la quantité de radiations mise en jeu est particulièrement réduite.

- le traitement des données peut être extrêmement simplifié par le calcul de l'ajustement utilisé ainsi d'emblée, puis réitéré pour obtenir un nombre de matrices ajustées égales à p pour p prises de vue. Ces prises de vue sous des angles régulièrement décalés au cours d'un tour complet sont appairées par couple décalés de 90°. L'image de synthèse est obtenue par superposition dans un même plan après rotation, et, par calcul des moyennes des valeurs homologues obtenues.

Pour une matrice de 1 440 000 termes, le temps de calcul est de 120 secondes sur un ordinateur PC disponible sur le marché. Ce temps de calcul est ramené à 8 secondes par la mise en oeuvre du procédé effectuée par groupement des paires d'angles de rotation par quatre. Les améliorations apportées au processus de calcul qui sont exposées en détail dans le présent brevet, ont conduit aux résultats expérimentaux suivants : il est possible d'atteindre des chiffres encore meilleurs avec le même PC, le temps de calcul pour 1 440 000 termes est de l'ordre de la seconde, soit une amélioration très sensible.

Avec des PC plus puissants, les prévisions sont les suivantes :

- temps de calcul pour 5 millions de termes : 1 seconde

- temps de calcul pour 1000 coupes : 1000 secondes, soit environ 15 minutes

C'est la raison pour laquelle un multiprocesseur existant sur le marché pourra être utilisé pour scanner les patients. Ce système permettra, avec une définition de 1mm, de scanner un individu entier en une seconde et avec une définition de 100 microns, de scanner un individu normal sur une hauteur d'une dizaine de centimètres, avec la possibilité grâce à un logiciel de zoom, de scanner des organes comme la prostate à 25 microns, dans un temps qui sera de l'ordre de la minute. Un ensemble multiprocesseur utilisant des processeurs standards sur des PC coûte environ 10 000 euros.

Bien entendu, en utilisant des super calculateurs qui sont associés aux scanners actuels, les temps seraient encore améliorés avec un coût, pouvant atteindre 200 000 euros, qu'il est possible aujourd'hui d'éviter grâce à l'amélioration des performances résultant des procédés de calcul qui apparaissent dans ce brevet.

Lorsque le procédé, au plan de l'acquisition des données, est mis en oeuvre avec une source à rayons X émettant un faisceau continu et un détecteur ayant une définition par exemple de 27 microns, l'étape (1) du programme d'ordinateur, au plan du traitement des données, permet de choisir informatiquement la définition de l'image initiale à ajuster, correspondant au quadrillage en n x m zones élémentaires du corps à examiner. Dans l'exemple cité précédemment, l'image ajustée aura, au choix de l'utilisateur, la définition égale à 27 microns ou à un multiple de ce nombre, soit 54, 108, 216 ou 432. L'intervalle entre deux images sera lui aussi de 27, 54, 108, 216 ou 432 microns. Comme le procédé conduit à un calcul point par point du coefficient d'atténuation, on pourra de plus faire un effet de zoom : sélectionner une zone déterminée, par exemple le bassin du corps d'un individu, produire pour cette zone une image à définition moyenne, puis dans la zone sélectionnée, définir une zone plus petite, par exemple la partie du bassin de l'individu correspondant à la prostate, pour laquelle on effectuera un calcul à définition élevée.

Mais on objectera qu'une image obtenue par un faisceau large peut être de moindre qualité, en effet chaque rayon du faisceau légèrement conique produit une image influencée par les images des rayons voisins ou par les échos dus aux singularités fortes (par exemple aux inclusions métalliques).

L'expérience montre que cette influence n'est pas considérable. De plus, un traitement mathématique peut faciliter l'analyse, en effet les valeurs obtenues sur une ligne ou une colonne de la matrice résultats peuvent être traitées comme valeurs redressables par un ajustement par exemple polynomial, ce qui a deux conséquences, les erreurs aléatoires sont lissées, mais on peut aussi améliorer la définition par interpolation entre les points mesurés et utilisation de la fonction de redressement en tenant compte de deux ou plusieurs interpolations croisées.

L'utilisation d'une image de synthèse à partir de 36 images de base élimine très largement les erreurs dues à la géométrie du faisceau.

Cette recherche aboutit ainsi à une très grande économie de moyens techniques ou informatiques dans un domaine où le coût reste aujourd'hui trop élevé pour envisager dans beaucoup de pays des explorations systématiques dans la recherche de maladies comme le cancer.

La description qui va suivre expose donc la méthode de calcul d'ajustement proprement dite selon l'invention Cette méthode joue un rôle important dans le traitement des signaux résultant de la mesure, par les détecteurs radiographiques, de l'intensité ou de la valeur résiduelle du faisceau élémentaire produit par le dispositif à rayons X, après le parcours dans l'organisme à étudier.

Si l'on veut traiter une matrice de dimensions n lignes et m colonnes

si on appelle $Bij$ la valeur estimée à la ligne $i$ et à la colonne j,

si on appelle $Cij$ la valeur la plus probable du terme correspondant de la matrice,

si on appelle $\rho j$ la somme des termes de la colonne j,

si on appelle c$j$ la somme des termes de la ligne i.

L'estimation de Bij résulte d'une méthode d'ajustement linéaire ou polynomial, ou plus simplement d'une moyenne arithmétique ou géométrique.

Dans le cas présent, on recherchera la solution des valeurs de $Cij$ en tenant compte des contraintes de lignes et de colonnes, c'est à dire le minimum de la fonction :

$$\sum (Cij - Bij)^2 \text{ Pour toutes valeurs de i et de j}$$

sous les contraintes :

$$\sum Cij = \rho j \text{ pour toutes les valeurs de j}$$

$$\sum Cij = ci \text{ pour toutes les valeurs de i}$$

La recherche d'un minimum de la fonction sous contraintes sera faite en utilisant la méthode des multiplicateurs de Lagrange, le Lagrangien s'écrira :

$$L = - \sum ij \ (Cij - Bij)^2 + \sum_{j=1}^{m} \lambda j \left( \sum_{i=1}^{n} (Cij - \rho j) \right) + \sum_{i=1}^{n} \mu i \left( \sum_{j=1}^{m} (Cij - ci) \right)$$

Cette fonction est composée de deux parties, une première n'a pas un caractère gauche et la deuxième est un ensemble de relations linéaires.

Le Lagrangien est donc dérivable pour les variables $Cij$ et $\lambda j$ et $\mu i$, multiplicateurs de Lagrange associés aux contraintes de lignes et colonnes (nous disposons en effet de deux groupes de contraintes, les contraintes de ligne et les contraintes de colonne).

Dans ces conditions nous sommes en mesure d'obtenir un ensemble de relations linéaires concernant les $Cij$ par dérivation du Lagrangien et un ensemble de valeur de relations relatives aux valeurs de contraintes, ce qui s'écrit :

En précisant que le $dL/dCij$ désigne une dérivée partielle, de la fonction L pour la variable Cij.

$$\underline{dL} = -2\,(Cij - Bij) + \lambda j + \mu i = 0 \quad \underline{1}$$
$$dCij$$

et les contraintes

$$\sum_{i=1}^{n}\ Cij = \rho j\ ,\ \text{pour tout } j$$

$$\underline{2}$$

$$\sum_{j=1}^{m}\ Cij = ci\ ,\ \text{pour tout } i$$

$$\underline{1} \Leftrightarrow Cij = Bij + (\lambda j + \mu i)/2$$

L'ensemble des n*m relations correspondant aux dérivées partielles plus les n+m relations de contraintes est linéaire et n'admet qu'une solution correspondant aux nm+n+m variables.

Si par exemple on veut traiter une matrice où n, le nombre de lignes, est égal à 25 et m, le nombre de colonnes, est égal à 30, la solution par l'algèbre linéaire consiste à traiter :

750 variables Cij

25 variables correspondant aux multiplicateurs de lignes, les $\mu$ i

30 variables correspondant aux multiplicateurs de colonnes, les $\lambda$ j

Un premier objectif est déjà atteint puisque seulement 55 profils doivent être établis au lieu de 750.

Nous disposons au total de 750 relations correspondant aux dérivés partielles et de 55 relations correspondant aux contraintes, pour 805 variables. La résolution de ce problème en faisant appel au calcul matriciel est la solution la plus évidente mais elle implique des calculs très lourds, légèrement plus lourds que ceux impliqués par les méthodes classiques. L'auteur a d'abord tablé sur l'amélioration rapide des processus de calculs, mais au delà de ce qui était son objectif essentiel, la limitation de taux d'irradiation en cours d'examen, il a poursuivi sa recherche pour tenter d'améliorer le temps de calcul.

De la combinaison des relations 1 et 2 on déduit :

$$\sum_{i=1}^{n} Bij + \frac{n}{2} * \lambda j + \left(\sum_{i=1}^{n} \mu\ i\ /\ 2\right) = \rho j$$

$$\sum_{i=1}^{m} Bij + \frac{m}{2} * \mu i + \left(\sum_{j=1}^{m} \lambda\ j\ /\ 2\right) = ci$$

On peut déduire de ces relations :

$$\lambda j = \left(\frac{1}{n}\right) * \left(2 * \left(\rho j - \sum_{i=1}^{n} Bij\right) - \sum_{i=1}^{n} \mu\ i\right)$$

$$\mu i = \left(\frac{1}{m}\right)^{*} (2^{*} (ci - \sum_{j=1}^{m} Bij) - \sum_{j=1}^{m} \lambda \, j)$$

Dans ces conditions en reportant par exemple la valeur de $\lambda j$ dans pi, on obtient :

$$\text{Pour tout j } \lambda j = \left(\frac{2}{n}\right)^{*} ((\rho j - \sum_{i=1}^{n} Bij) - \frac{1}{2}^{*} \sum_{i=1}^{n} \mu \, i)$$

$$\text{Pour tout i } \mu i$$

$$= \left(\frac{1}{n}\right)( \sum_{i=1}^{n} \mu \, i) + \left(\frac{2}{m}\right)(ci - \sum_{j=1}^{m} Bij - \left(\frac{1}{n}\right)^{*} \sum_{j=1}^{m} \rho \, j + \sum_{i}^{n} \sum_{j}^{m} Bij ^{*}$$

$$\left(\frac{1}{n}\right))$$

Si l'on précise que $\mu^{-} = (1/n) \sum(i=1\text{à } n) \, \mu i$ soit la moyenne des multiplicateurs liée à la contrainte des lignes, on est conduit aux deux relations suivantes :

$$\text{Pour tout j } \lambda j = \left(\frac{2}{n}\right)^{*} (\rho j - \sum_{i=1}^{n} Bij) - \mu^{-}$$

$$\text{Pour tout i } \mu i = \mu^{-} + \left(\frac{2}{m}\right)^{*}(ci - \sum_{j=1}^{m} Bij - \left(\frac{1}{n}\right)^{*} (\sum_{j=1}^{m} \rho \, j - \sum_{i}^{n} \sum_{j}^{m} Bij))$$

En effet : $\mu i$ est égal à $n^{*}\mu^{-}$

Dans ces conditions en reportant dans la relation :

$Cij = Bij + (\frac{1}{2})^{*} (\lambda j + \mu i)$ on est conduit à la relation algébrique

Cette formule d'ajustement permet de déduire la matrice des Cij de la matrice des Bij, par un calcul terme à terme

$$Cij = Bij + \left(\frac{1}{n}\right)^{*} (\rho j - \sum_{1}^{n} Bij) + \left(\frac{1}{m}\right)^{*} (ci - \sum_{j=1}^{m} Bij)$$

L'auteur a ainsi réussi à aboutir de manière tout à fait surprenante à un calcul de nature algébrique ne nécessitant pas le recours au calcul matriciel.

La méthode algébrique autorise le traitement partiel de la matrice de référence qui dans beaucoup de cas peut suffire.

La validation numérique de cette formule de traitement de signaux et d'établissement des valeurs de définition de l'image recherchée sur le plan médical, apparaît ci après.

*Exemple d'application de la méthode, sur un modèle réduit*

Soit donc une matrice de n lignes et m colonnes dans laquelle n=3, m=4

**MATRICE INITIALE**

|          | 1  | 2  | 3  | 4  | $\sum$ lignes | C   |
|----------|----|----|----|----|---------------|-----|
| 1        | 22 | 24 | 18 | 16 | 80            | 78  |
| 2        | 24 | 22 | 18 | 20 | 84            | 85  |
| 3        | 26 | 20 | 22 | 24 | 92            | 93  |
| $\sum$ colonnes | 72 | 66 | 58 | 60 | 256    |     |
| P        | 70 | 67 | 59 | 60 |               | 256 |

Dans cette matrice, les valeurs estimées sont inscrites, sur les trois lignes et les quatre colonnes, les contraintes de lignes sont inscrites dans la colonne C.
Les contraintes de colonnes sont inscrites dans la dernière ligne P.
L'application de la formule ci dessus se simplifie puisque le total des contraintes de colonnes (ou de lignes) est égal à la somme des termes et conduit à:

**EQUILIBRE APRES CALCULS**

|          | 1        | 2        | 3        | 4     | $\sum 2$ | C  | $\Delta$ |
|----------|----------|----------|----------|-------|----------|----|----------|
| 1        | 20.83333 | 23.83333 | 17.8333  | 15.5  | 78       | 78 | 0        |
| 2        | 23.5833  | 22.58333 | 18.5833  | 20.25 | 85       | 85 | 0        |
| 3        | 25.5833  | 20.5333  | 22.583   | 24.25 | 93       | 93 | 0        |
| $\sum 2$ | 70       | 67       | 59       | 60    | 256      |    |          |
| P        | 70       | 67       | 59       | 60    |          |    |          |
| $\Delta$ | 0        | 0        | 0        | 0     |          |    |          |

On peut vérifier, en tenant compte de calculs réalisés par une simple calculatrice que la valeur des termes sommés verticalement ou horizontalement satisfont les contraintes, mais aussi qu'il conduisent bien aux résultats recherchés.

Equilibrage en utilisant la méthode de l'algèbre linéaire

Cette méthode exprime directement les relations linéaires entre les variables Cij et Bij, et les variables $\lambda$ j et $\mu$i.
La méthode classique de résolution d'un système linéaire implique l'inversion de la matrice des coefficients des relations entre les variables et la multiplication par cette matrice inverse, du vecteur exprimant les seconds membres des relations.

   a) Il existe 12 relations entre les variables résultant de l'expression des dérivées partielles du LAGRANGIEN de la forme :

$$Cij - \lambda j / 2 - \mu i / 2 = Bij$$

   b) Il existe 4 relations de contraintes relatives aux colonnes et 3 relations de contraintes relatives aux lignes, de la forme :

$$\sum_{i=1}^{m} Cij = \rho j$$

$$\sum_{i=1}^{n} Cij \ = \ \text{ci}$$

La méthode classique nécessite alors l'inversion d'une matrice d'une taille égale à n * m + n + m soit dans notre cas 19x19, dont le temps de calcul est évidemment beaucoup plus élevé.

Dans l'exemple qui vient d'être exposé, comme dans l'exemple à 31x31 termes illustré par les tableaux 4, 5 et 6, les valeurs initiales Bij ont été estimées par une méthode d'amplification matricielle ou établie de façon empirique. Toutefois, une telle méthode n'est pas considérée comme spécifique à la présente invention, laquelle utilise, pour l'estimation des valeurs initiales Bij, une méthode de génération à partir des vecteurs contraintes eux-mêmes, comme cela est exposé plus après. Nous donnons ci-dessous un exemple réduit de génération des valeurs initiales Bij, ne comprenant, dans un but de clarté, que 3x4 termes.

Soit donc la matrice de n lignes et m colonnes dans laquelle n=3, m=4

**MATRICE INITIALE**

|  | 1 | 2 | 3 | 4 | ∑ lignes | C |
|---|---|---|---|---|---|---|
| 1 | 21,42 | 20,92 | 19,58 | 19,75 | 81,67 | 78 |
| 2 | 22,29 | 21,79 | 20,46 | 20,63 | 85,17 | 85 |
| 3 | 23,29 | 22,79 | 21,46 | 21,63 | 89,17 | 93 |
| ∑ colonnes | 67,00 | 65,50 | 61,50 | 62,00 | 256 | |
| P | 70 | 67 | 59 | 60 | | 256 |

Dans cette matrice, les valeurs estimées sont inscrites sur les trois lignes et les quatre colonnes, les contraintes de lignes sont inscrites dans la colonne C. Les contraintes de colonnes sont inscrites dans la dernière ligne P. Les valeurs initiales Bij ont été générées à partir des valeurs contraintes de ligne et de colonne en utilisant une moyenne arithmétique. Ainsi :

21,417=(78/4+70/3)/2 ; 20,92=(78/4+67/3)/2 ; 19,58=(78/4+59/3)/2 ; 19,75=(78/4+60/3)/2 ;
22,292=(85/4+70/3)/2 ; 21,79=(85/4+67/3)2 ; 20,46=(85/4+59/3)/2 ; 20,625=(85/4+60/3)/2 ;
23,292=(93/4+70/3)/2 ; 22,79=(93/4+67/3)/2 ; 21,46=(93/4+59/3)/2 ; 21,625=(93/4+60/3)/2 ;

Ensuite, les valeurs initiales Bij ont été sommées par ligne et par colonne. Les sommes obtenues ont été portées dans le tableau. Ainsi,

21,417 + 20,9 + 19,58 + 19,75 = 81,647 ; 22,292 + 21,8 + 20,46 + 20,625 = 85,177 ;
23,292 + 22,8 + 21,46 + 21,625 = 89,177 ; 21,417 + 22,292 + 23,292 = 67 ;
20,9 + 21,8 + 22,8 = 65,5 ; 19,58 + 20,46 + 21,46 = 61,5 ; 19,75 + 20,625 + 21,625 = 62 ;

L'application de la formule générale d'ajustement se simplifie ici puisque le total des contraintes de colonne (ou de ligne), 256, est égal à la somme des termes de colonne (ou de ligne), 256, et conduit à :

**EQUILIBRE APRES CALCULS**

|  | 1 | 2 | 3 | 4 | ∑2 | C | Δ |
|---|---|---|---|---|---|---|---|
| 1 | 21,50 | 20,50 | 17,83 | 18,17 | 78 | 78 | 0 |
| 2 | 23,25 | 22,25 | 19,58 | 19,92 | 78 | 85 | 0 |
| 3 | 25,25 | 24,25 | 21,58 | 21,92 | 93 | 93 | 0 |
| ∑2 | 70 | 67 | 59 | 60 | 256 | | |
| P | 70 | 67 | 59 | 60 | | | |
| Δ | 0 | 0 | 0 | 0 | | | |

Chaque valeur a été ajustée de la façon suivante :

21,5=21,417 + (78-81,647)/4 + (70-67)/3 ;     23,25=22,292 + (85-85,177)/4 + (70-67)/3 ;
25,25=23,29 + (93-89,18)/4 + (70-67)/3 ;     20,5=20,9 + (78-81,65)/4 + (67-65,5)/3 ;
22,25=21,80 + (85-85,18)/4 + (67-65,5)/3 ;     24,25=22,8 + (93-89,18)/4 + (67-65,5)/3 ;
17,83=19,58 + ((78-81,65)/4 + (59-61,5)3 ;     19,58= 20,46 + (85-85,18)/4 + (59-61,5)/3 ;
21,58=21,46 + (93-89,18)/4 + (59-61,5)/3 ;     18,167=19,75 + (78-81,65)/4 + (60-62)/3 ;
19,917=20,63 + (85-85,18)/4 + (60-62)/3 ;     21,917=21,63 + (93-89,18)/4 + (60-62)/3 ;

On peut vérifier, en tenant compte de calculs réalisés par une simple calculatrice que la valeur des termes sommés verticalement ou horizontalement satisfont les contraintes, mais aussi qu'il conduisent bien aux résultats recherchés.

Dans cet exemple réduit, on a utilisé une moyenne arithmétique pour calculer les valeurs initiales Bij à partir des valeurs de contrainte de ligne et de colonne. Il est également possible d'utiliser d'autres moyennes et par exemple une moyenne géométrique. Dans ce cas, chaque valeur Bij est égale à la racine carrée du produit du terme homologue du vecteur contrainte de ligne par le terme homologue du vecteur contrainte de colonne. Cette moyenne augmente toutefois le temps de calcul, c'est pourquoi l'on préfère utiliser la moyenne arithmétique.

Dans la pratique, on est amené à générer des matrices dont le nombre de lignes est égal au nombre de colonnes, à partir de vecteurs de tailles identiques et dont la somme des termes est, pour des raisons physiques, égale à une même valeur pour chacun des vecteurs. Dans ces conditions, le troisième terme de la formule générale est nul. On peut alors générer directement la matrice résultat de taille n à partir de deux vecteurs générateurs tels que le premier corresponde au vecteur vertical représentatif des contraintes de lignes et le second, au vecteur horizontal représentatif des contraintes de colonnes.

Les vecteurs de génération directe sont tels que chaque terme du vecteur vertical est égal à la contrainte de ligne divisée par n, moins la somme des termes du vecteur divisée par $2n^2$. De manière symétrique, les termes du vecteur horizontal sont égaux à la contrainte de colonnes divisée par n, moins la somme des termes du vecteur divisée par $2n^2$. Du point de vue du calcul, on divise par deux le temps de calcul.

La figure 1 montre de façon schématique un premier dispositif selon l'invention.

La figure 2 montre le dispositif de la figure 1 selon une vue plus détaillée.

Les figures 3a à 3d montrent des images d'un os de poulet obtenues respectivement à 0°, 90°, 180° et 270°.

La figure 4 est un tableau des intensités détectées respectivement à 0°, 90°, 180° et 270°.

La figure 5 est un tableau représentant une matrice initiale.

La figure 6 est un tableau représentant une matrice résultat ajustée.

Les figures 7 et 8 indiquent un tableau de matrice de synthèse agrégeant les matrices résultat ajustées pour respectivement les couples 0° - 90°, 90° - 180°, 180° - 270° et 270° - 360°.

La figure 9 montre l'une des images de l'os de poulet illustré par les figures 3a à 3d, sur laquelle une bande étroite est sélectionnée en rapport avec un plan de coupe de l'étendue irradiée.

La figure 10 est une coupe de l'os montrant une singularité à une résolution donnée.

La figure 11 est un agrandissement de la figure 10 montrant la singularité à plus grande résolution.

La figure 12 est un autre exemple montrant une singularité à une résolution de 100 microns.

La figure 13 est un agrandissement de la singularité montrée à la figure 12, à une résolution de 25 microns.

Les figures 14a à 14d montrent quatre tableaux illustrant un traitement de rotation, respectivement de 90°, 180°, 270° et 360°.

Les figures 15 à 18 montrent respectivement, une matrice initiale, le déploiement de la matrice initiale en une matrice déployée, la rotation de la matrice déployée d'un angle de 30°, et la constitution d'une matrice déployée et tournée de 30°, avec un arrondi aux valeurs entières des coordonnées ayant tourné.

La figure 19 montre de façon schématique un deuxième dispositif selon l'invention.

La figure 20 montre plus particulièrement un fauteuil utilisé dans le deuxième dispositif.

Les figures 21 à 24 illustrent l'utilisation du fauteuil monté sur un pied télescopique.

La figure 25 illustre de façon schématique un troisième dispositif selon l'invention.

La figure 26 est une vue de dessus du troisième dispositif.

La figure 27 montre de façon schématique le relevage de panneaux coulissants montés dans une paroi latérale d'une cabine selon le troisième dispositif.

Les figures 28, 29 et 30 montrent de façon schématique un détecteur utilisé dans le troisième dispositif, mobile par rapport à un parallélépipède de jonction.

La figure 31 montre un agencement particulier d'un parallélépipède de jonction muni d'un collimateur.

La figure 32 illustre de façon schématique un excentrage de l'axe de rotation du troisième dispositif.

Les figures 33 et 34 montrent de façon schématique un quatrième dispositif selon l'invention.

La figure 35 illustre un cinquième dispositif selon l'invention.

Les figures 36 et 37 illustrent la précision des calculs et des images obtenues, point par point.

La figure 38 montre de façon schématique un sixième mode d'exécution de l'invention, avec un moyen de projection de la source à rayons X en un faisceau conique.

La figure 39 montre le sixième mode d'exécution de l'invention avec un moyen de projection comprenant un étranglement.

La figure 40 montre une vue schématique en perspective du sixième mode d'exécution de l'invention pour un faisceau conique.

La figure 41 montre une vue schématique en perspective du sixième mode d'exécution de l'invention pour un faisceau pyramidal.

La figure 42 montre de façon schématique le sixième mode d'exécution de l'invention avec une source à anode tournante.

La figure 43 montre une vue d'ensemble du sixième mode d'exécution de l'invention.

Pour permettre de vérifier le fonctionnement du dispositif, l'auteur a réalisé un prototype comportant les équipements suivants :

- un faisceau à rayons X, de 70 kv, issu d'un tube en plomb d'une source 11 comprenant dont le diamètre est de 6 cm et constitue l'embout 29,

- un détecteur 13 de petite dimension, de 45 x 30 mm,

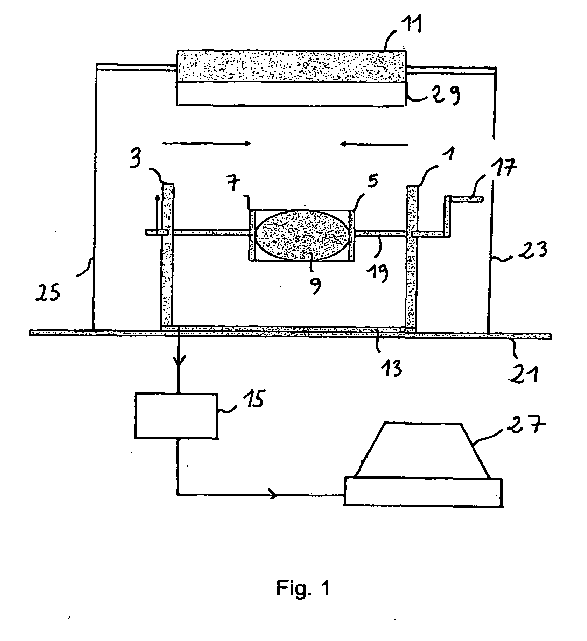

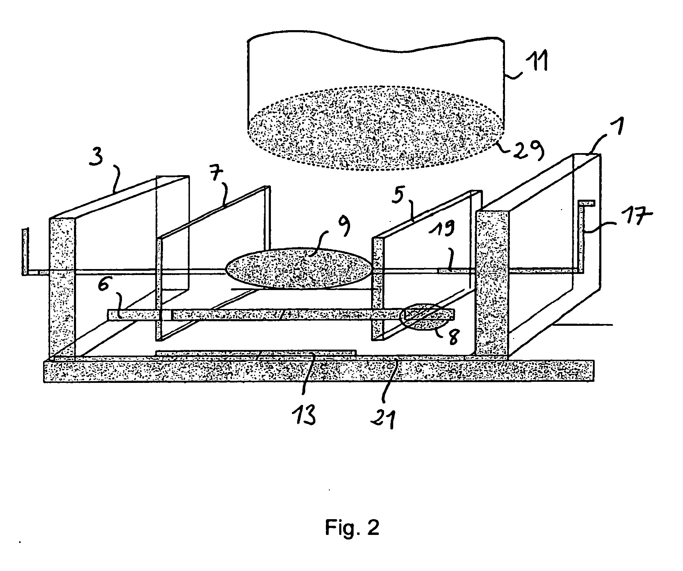

- un moyen 17 permettant de faire tourner un objet à examiner 9 placé entre le faisceau et le détecteur 13, avec un pas de 1, (voir figures 1 et 2),

- un micro ordinateur 27 sur lequel est logé un logiciel d'imagerie médicale (de la société KODAK), qui permet d'obtenir une image radiographique à différents pas de rotation de l'objet à examiner 9,

a) Dans un premier temps, 36 images ont été réalisées avec des pas de 10°, c'est à dire : 0, 10, 20,.....90, ..... 180,.....270,.....360

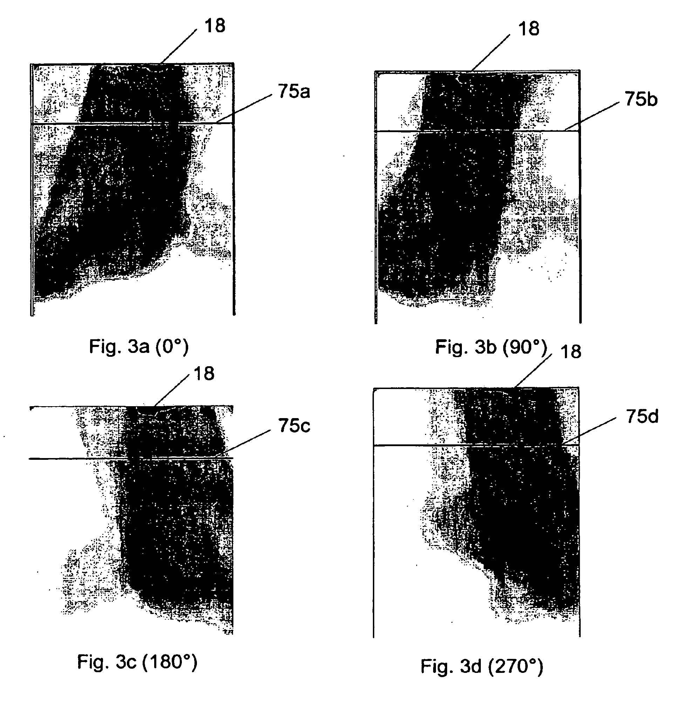

Une image de contrôle à 360° a donc été réalisée qui se superpose exactement à l'image à 0°, permettant de vérifier que la rotation a été effectuée convenablement. A titre d'exemple, nous joignons en annexe les images suivantes : figures 3a à 3d, les images à 0°, 90°, 180°, 270° des intensités détectées.

b) Dans un deuxième temps, on a procédé à une analyse par couples rectangulaires : - 0-90° ; 90- 180° ; 180-270° ; 270-360° (0)

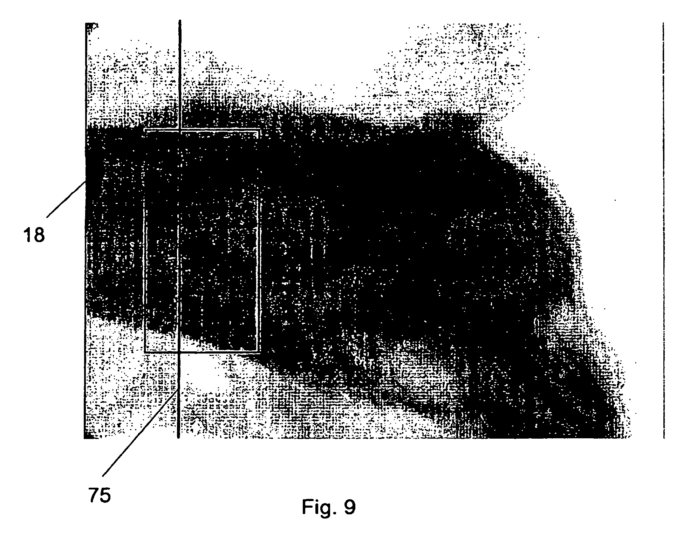

c) En effet on découpe à une certaine distance du plan de référence (que l'on voit apparaître dans les images des figures 3a à 3d et 9 en rapport avec une tache noire 18 qui est l'extrémité de la tige de rotation 19, une tranche étroite d'une épaisseur de 1 mm, soit un trentième de la largeur de chaque image. On obtient ainsi quatre bandes 75a à 75d correspondant à 0°, 90°, 180° et 270°.

Chaque bande de 1 mm d'épaisseur est à son tour découpée en segments élémentaires de 1 mm de long correspondant à une surface élémentaire de 1mm$^2$, dans la partie utile de l'image qui est de 30 mm (approximativement). On lit grâce à un logiciel approprié la valeur moyenne de l'intensité des pixels dans chacune des surfaces élémentaires. On obtient alors un vecteur de trente (ou trente et un) termes, correspondant aux moyennes de chacune des surfaces élémentaires.

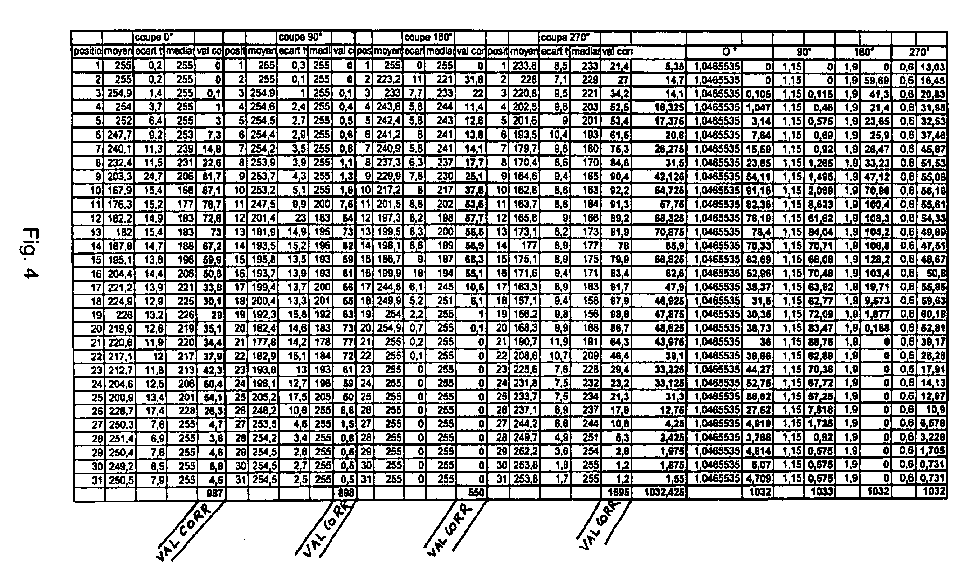

Comme on le constate à la lecture du tableau de la figure 4, les valeurs varient entre 0 et 255. Pour 255, le segment élémentaire est complètement blanc ; dans ces conditions on admet que le coefficient d'atténuation le long de la ligne aboutissant au terme correspondant du vecteur, est égal à 255 moins la valeur de l'intensité lumineuse de la tache homologue. Dans ces conditions, s'il n'y a pas d'objet interposé, la valeur du coefficient d'atténuation est égale à 0. Si le segment élémentaire est complètement noir, la valeur du coefficient d'atténuation est égale à 255, la totalité du rayonnement du faisceau a été absorbée.

On renouvelle le même traitement pour les bandes à 90°, 180° et 270° ce qui apparaît dans le tableau de la figure 4, dans les colonnes titrées VAL CORR (valeur corrigée). Les valeurs corrigées apparaissent pour les quatre coupes, 0°, 90°, 180° et 270°. Sur ce tableau, les moyennes sont estimées par un logiciel approprié ainsi que les écarts types qui restent dans des limites acceptables.

Dans la mesure où le nombre de pixels reconnu est élevé, on peut poursuivre l'analyse jusqu'à une définition largement inférieure au millimètre. On redresse les valeurs obtenues pour que la somme des valeurs de chacune des colonnes soit égale à la valeur moyenne, puisque dans les mêmes conditions de distance, l'absorption d'un corps donné est constante.

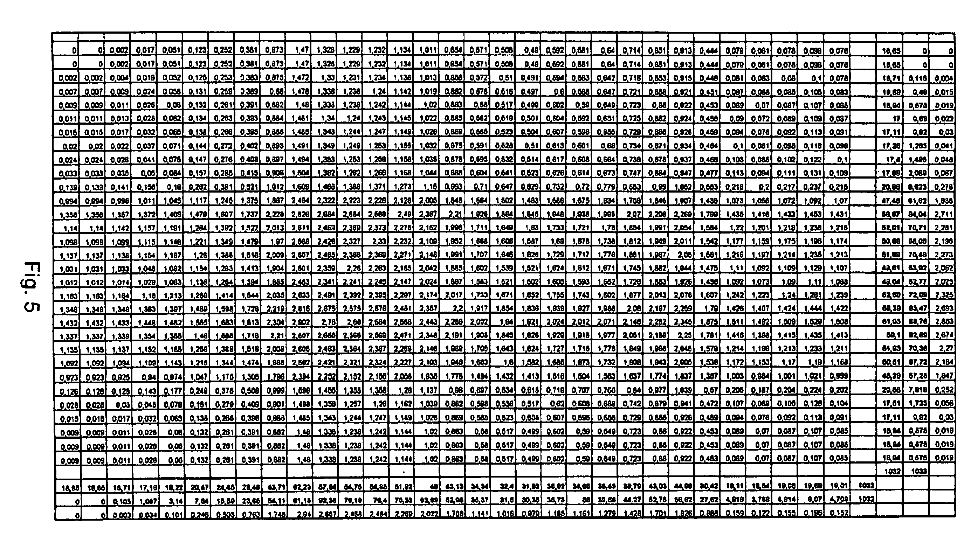

d) On divise par 31 le terme précédent pour en déduire la valeur de contrainte horizontale (90°) ou verticale (0°), ces valeurs apparaissent dans le tableau de la figure 5. Ce tableau (matrice initiale) fait donc apparaître :

- les sommes des lignes et des colonnes,

- les contraintes tirées du tableau de la figure 4,

- les écarts entre sommes et contraintes,

- les écarts réduits par la division par 31 des écarts ci-dessus.

Cette matrice initiale apparaît dans le tableau de la figure 5, après calcul de chaque terme.

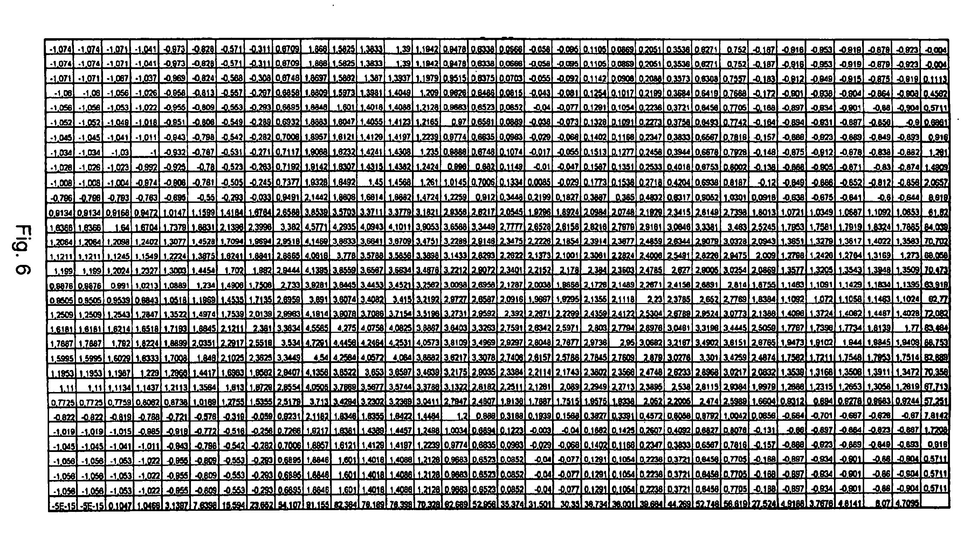

f) Si l'on veut obtenir rapidement une image à la définition de 1 mm, on effectue le calcul d'ajustement, ce qui conduit au tableau de résultat de la figure 6.

On peut reprendre le processus que nous avons utilisé, qui consiste à créer 36 images à partir de 36 coupes effectuées dans 36 images radio-photographiques élémentaires et en calculant couple par couple les données estimées comme indiqué précédemment pour le découpage pour le premier angle de rotation égal à zéro associé au découpage pour le deuxième angle de rotation égal à 90°.

On superpose alors les 36 images en faisant effectuer une rotation de chacune des images (sauf la première), d'un angle égal à l'opposé de l'angle de rotation à partir du point 0°.

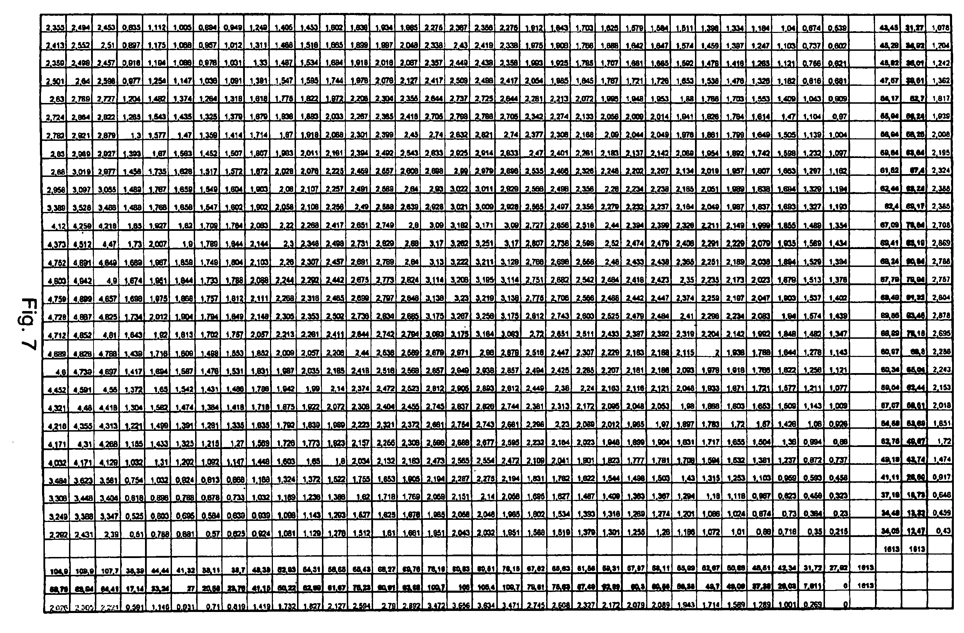

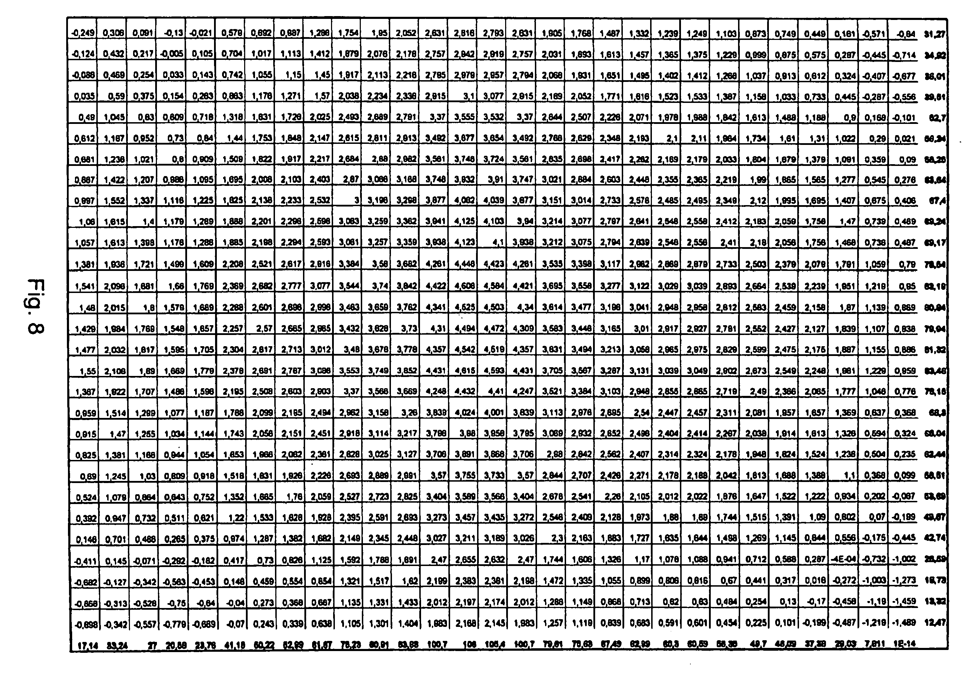

Si l'on agrége les tableaux obtenus pour les couples 0° - 90°, 90° - 180°, 180° - 270° et 270° - 360° on est conduit, après rotation, aux tableaux des figures 7 et 8.

Pour obtenir une image à haute définition, il a été nécessaire de créer un logiciel ayant les fonctions suivantes :

- acquérir et enregistrer les images élémentaires et les données numériques associées comme celles apparaissant sur les figures 3a à 3d.

- définir graphiquement une bande 75 de l'étendue du corps à examiner 9 irradié par le faisceau de la source 11 à rayons X, perpendiculaire à l'axe de rotation du support par rapport à la source, figure 9.

- tirer dans cette tranche les valeurs associées aux images situées dans ce même plan, par exemple 36 coupes effectuées dans 36 images radio-photographiques élémentaires prisées à 36 angles de rotation, de 0 à 360° incrémentées de 10°.

- effectuer les calculs pour générer, dans ce cas 36 images, en associant les valeurs deux à deux pour des couples d'angle de rotation dont le décalage est de 90°.

- faire tourner les images en fonction du décalage d'un angle égal à l'angle de rotation de sorte à superposer de manière homogène les 36 images.

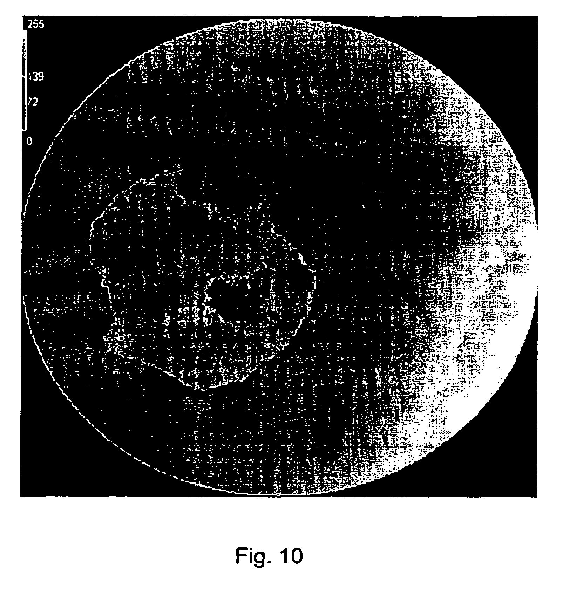

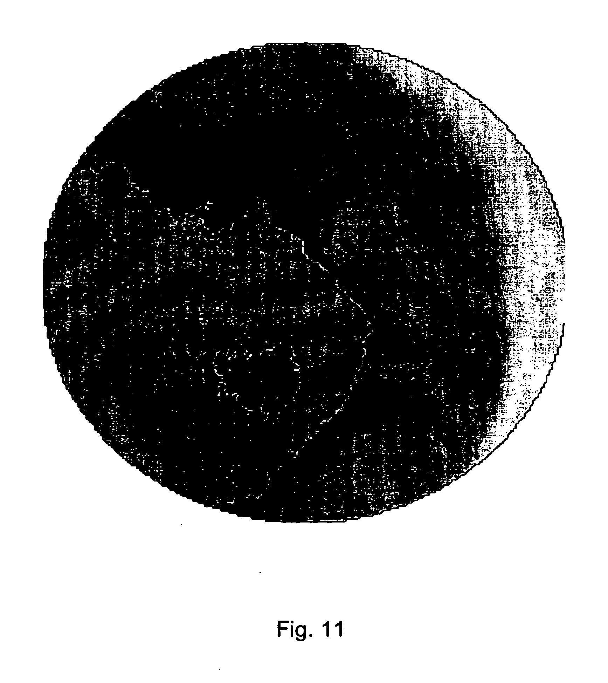

- produire une image de synthèse telle qu'apparaissant sur les figures 10 et 11 qui montrent une coupe de l'os de poulet examiné dans le plan de coupe choisi, perpendiculaire à l'axe de rotation et dans lequel la bande s'étend.

La figure 10 est une coupe de l'os dans laquelle apparaît une légère tâche qui correspond à une singularité due à la présence d'un petit élément métallique. La figure 11 est un agrandissement qui permet de mieux examiner cet élément métallique.

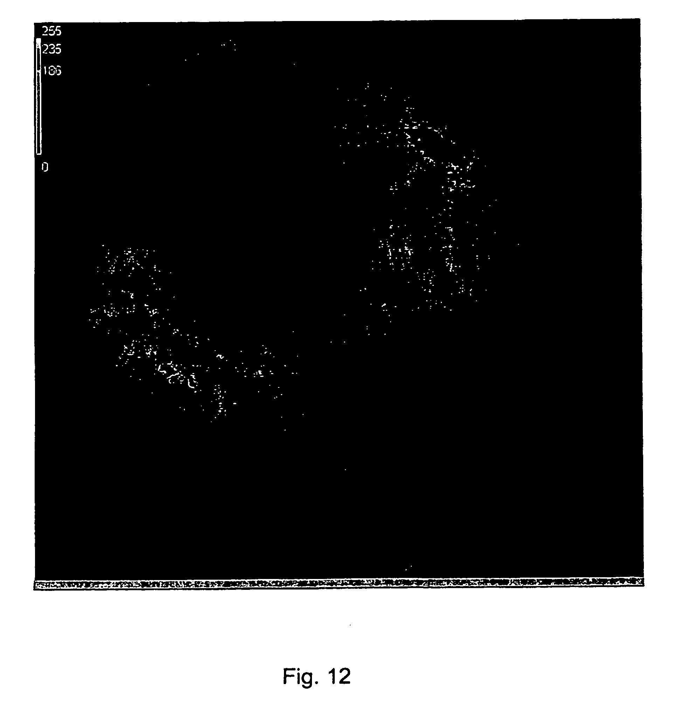

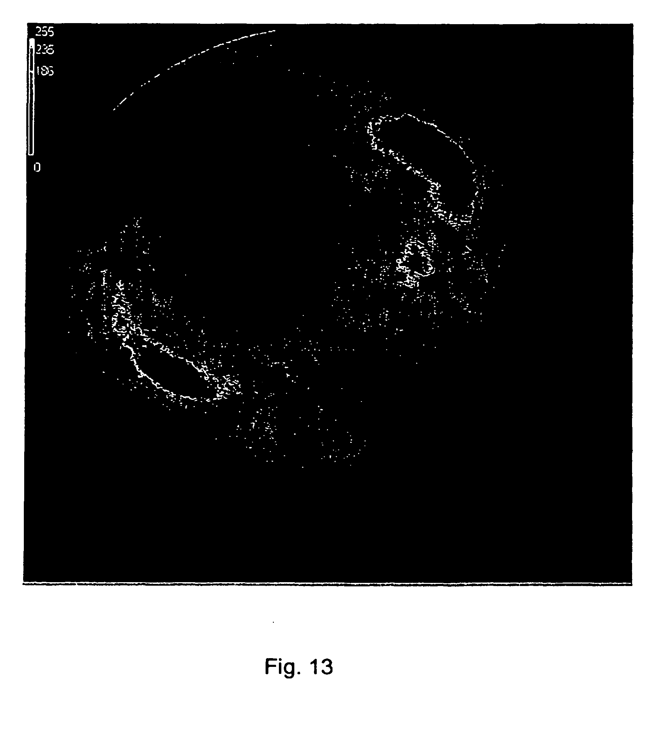

De manière plus précise, on peut examiner deux images de synthèse à des définitions respectives de 100 microns et 25 microns par exemple. La première, figure 12, montre la présence de billes métalliques dans l'os examiné. La deuxième, figure 13, permet une meilleure connaissance de la singularité.

On peut rappeler que le calcul terme à terme résulte de la formule :

$$C_{ij} = B_{ij} + \left(\frac{1}{n}\right) \cdot \left(\rho_j - \sum_1^n B_{ij}\right) + \left(\frac{1}{m}\right) \cdot \left(c_i - \sum_{j=1}^m B_{ij}\right) - \left(\frac{1}{nm}\right) \cdot \left(\sum_{j=1}^m \rho_j - \sum ij B_{ij}\right)$$

Pour chaque couple ou paire d'angles de rotation décalés de 90°, nous avons obtenu une image différente que l'on peut associer en superposant les différentes images après rotation conformément à un procédé qui sera expliqué ici.

En effet il est possible grâce à un calcul simple d'obtenir un opérateur simple.

Cet opérateur est constitué par la matrice inverse de la matrice suivante :

| COSINUS A | - SINUS A | 0 |
|---|---|---|
| SINUS A | COSINUS A | 0 |
| 0 | 0 | 1 |

Donnons un exemple, exprimé par les trois tableaux ci dessous :

Prenons par exemple un point de coordonnées égales respectivement à X=-2 ; Y= 1 ; Z= 0.

Les tableaux suivants montrent le processus de calcul :

| ANGLE EN DEGRE | 270 |
|---|---|
| ANGLE EN RADIAN | 4.7124 |
| SINUS | -1 |
| COSINUS | 0 |

Matrice initiale

| 0 | 1 | 0 |
|---|---|---|
| -1 | 0 | 0 |
| 0 | 0 | 1 |

Matrice inverse

| 0 | -1 | 0 |
|---|---|---|
| 1 | 0 | 0 |
| 0 | 0 | 1 |

Cette matrice est multipliée par le vecteur X, Y, Z, ce qui conduit aux coordonnées suivantes :

X' = -1 ; Y' = -2 , Z' = 0

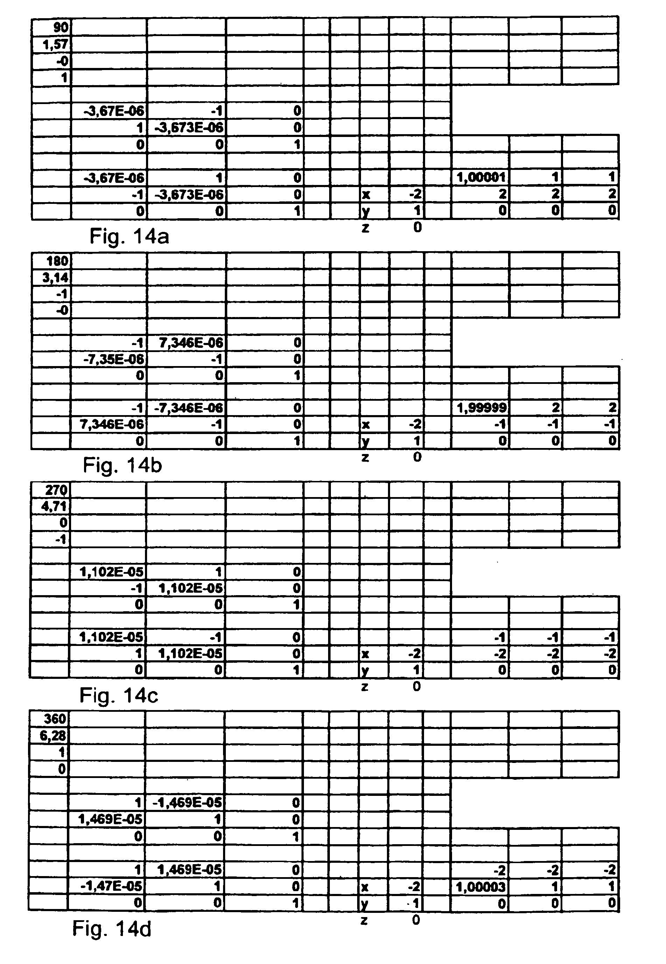

Dans le cas exposé plus haut nous avons été conduits à constater un décalage de l'axe de rotation et fait tourner cet axe, voir les tableaux des figures 14a à 14d pour retrouver ses coordonnées dans chaque tableau décalé de 90°, 180°, 270° de sorte à recentrer les tableaux et produire une image de synthèse ad hoc.
En tenant compte de ces décalages, nous avons généré une matrice initiale 29 x 29 (tableau de la figure 7) et une matrice résultat (tableau de la figure 8).
Le tableau de la figure 7 est obtenu, après rotation des matrices obtenues pour créer et recentrer les tableaux de résultats avec des angles de rotation.

✓ 0° pour le graphe 90 - 180,

✓ 270° pour le graphe 90 - 180,

✓ 180°pour le graphe 180 - 270,

✓ 90° pour le graphe 270 - 0.

Ces rotations ont été simplifiées par l'utilisation d'un opérateur matriciel simple illustré ci-dessous :

| 0 | 0 | 0 | 1 |
|---|---|---|---|
| 0 | 0 | 1 | 0 |
| 0 | 1 | 0 | 0 |
| 1 | 0 | 0 | 0 |

La matrice initiale est alors multipliée par cet opérateur et la matrice intermédiaire qui en résulte est ensuite transposée pour obtenir la matrice initiale tournée de 90°.
Une rotation de 270° est ainsi le résultat de trois rotations successives de 90°.
Autrement dit, pour superposer les matrices résultat obtenues pour deux paires d'angles, par exemple la paire 0°,90° et la paire 10°,100° ayant tournée de 10 degrés, il faut effectuer une rotation de la matrice résultat obtenue pour 10°,100°, d'un angle de signe opposé, ici -10°. De préférence, on met en oeuvre une méthode de pré-position pour traiter cette rotation d'une façon automatique et rapide. Cette méthode est illustrée à l'aide des tableaux donnés par les figures .

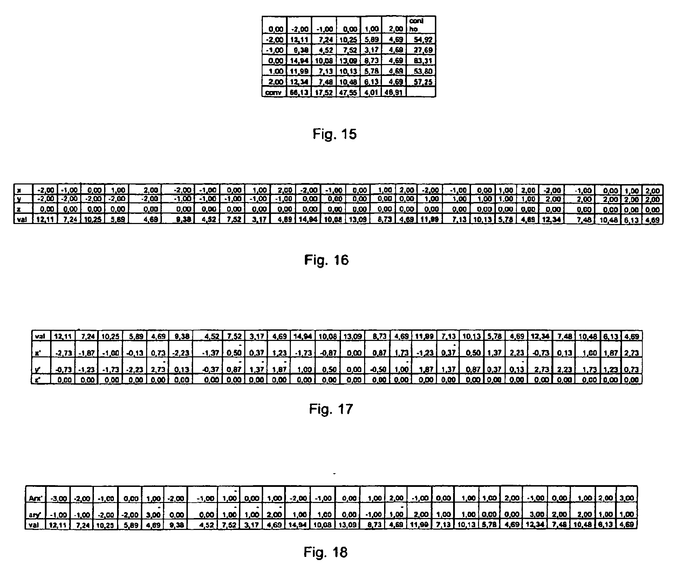

Soit, figure 15, la matrice résultat des valeurs Cij, ajustées à partir des valeurs de contrainte de ligne et de colonne obtenues pour les deux directions de propagation perpendiculaires du faisceau de rayons X à respectivement 10° et 100°.

Pour superposer ces valeurs à celles obtenues pour les deux directions de propagation à respectivement 0° et 90°, il faut faire tourner la matrice des valeurs ajustées Cij de -10°. Pour effectuer cette rotation, on commence par déployer la matrice de taille [5,5] en une matrice de taille [3,25] où, figure16, les trois lignes correspondent respectivement à la coordonnée X du point de la zone élémentaire, du quadrillage en 25 zones élémentaires, dont la valeur est Cij, à la coordonnée Y du point, et à la coordonnée Z du point. On peut alors multiplier la matrice déployée [3,25] par l'opérateur de rotation indiqué précédemment, de taille [3,3] pour aboutir, figure17, à la matrice tournée [3,25]. Les coordonnées tournées X', Y' et Z' en chaque point ont des valeurs non entières. On procède alors, figure18, à un arrondi pour rendre entières X", Y" et Z" ces coordonnées tournées. Ce changement de coordonnées de X, Y ,Z en X", Y" Z" est effectué une fois pour toutes. De la sorte, on assigne à chaque valeur ajustée Cij du point de coordonnées X, Y, Z dans la matrice (10°, 100°), la pré-position de coordonnées (X", Y", Z") correspondant à une rotation de -10° de cette matrice. L'effet de l'arrondi des coordonnées X', Y', Z' en X", Y". Z" est négligeable.

De préférence, le procédé objet de l'invention est mis en oeuvre de la façon suivante :

- on effectue l'étape (1) pour un premier groupe de quatre paires d'angles de rotation, de préférence orthogonaux entre eux (0-90° ; 90°-180° ; 180°-270° ; 270°-360°) pour construire quatre vecteurs générateur colonne ayant chacun pour coordonnées les n valeurs moyennes obtenues pour le premier angle de rotation (0° ; 90° ; 180°, 270°) et quatre vecteurs générateur ligne ayant chacun pour coordonnées les m valeurs moyennes obtenues pour le deuxième angle de rotation (90° ; 180° ; 270° ; 360°) de chacune des quatre paires d'angles,

- on traite les quatre vecteurs colonne et les quatre vecteurs ligne par un opérateur de rotation pour les superposer sur une même paire d'angles de rotation (0°-90°) puis on construit un vecteur générateur colonne réduit et un vecteur générateur ligne réduit en moyennant terme à terme les coordonnées des vecteurs colonne et ligne superposés sur la même paire d'angles de rotation (0°-90°),

- on effectue l'étape (2) à partir des termes des vecteurs générateurs colonne et ligne réduits,

- on effectue l'étape (3) pour aboutir à une matrice ajustée pour laquelle les valeurs de bordure de ligne et de colonne calculées à l'aide des valeurs ajustées sont égales, pour chaque ligne et pour chaque colonne, respectivement aux termes des vecteurs générateurs ligne et colonne réduits et

- on effectue les étapes (4) et (5) pour différents groupes de quatre paires d'angles de rotation, décalés d'un multiple d'un angle de référence (10°) par rapport aux angles de rotation des paires du premier groupe.

Ce mode d'exécution préféré permet de diminuer les temps de calcul, comme on peut s'en rendre compte par l'exemple ci-dessous, pris pour 36 images.

On regroupe les vecteurs générateurs des matrices en un groupe **I,** constitué par les vecteurs générateurs ligne et colonne de la matrice 0-90° inchangée, les vecteurs générateurs ligne et colonne de la matrice 90-180°, ces vecteurs ayant tournés de 90°, les vecteurs générateurs ligne et colonne de la matrice 180-270°, ces vecteurs ayant tournés de 180°, et les vecteurs générateurs de la matrice 270-0°, ces vecteurs ayant tournés de 270°.

On regroupe ces 4 vecteurs générateurs ligne et colonne en un vecteur générateur ligne respectivement colonne dont les termes sont égaux à la somme des vecteurs générateurs homologues divisée par 4.

On génère une matrice initiale et une matrice ajustée qui correspond à la superposition des 4 matrices avec une division des termes par 4.

On regroupe en un groupe II les vecteurs 10°, 100°, 190°, 280° pour générer le vecteur ligne de la matrice de synthèse du groupe 2, et les vecteurs 100°, 190°, 280°, 370° (10°) pour générer le vecteur colonne de la matrice de synthèse de ce groupe 2, etc....

On obtient ainsi 9 matrices de synthèse intermédiaires que l'on superpose après rotation de l'ensemble des matrices avec des angles appropriés :

|  |  |
|---|---|
| matrice groupe I : | inchangée |
| matrice groupe II : | rotation 10° |

(suite)

| matrice groupe III : | rotation 20° |
|---|---|
| matrice groupe IV: | rotation 30° |
| matrice groupe V: | rotation 40° |
| matrice groupe VI: | rotation 50° |
| matrice groupe VII: | rotation 60° |
| matrice groupe VIII: | rotation 70° |
| matrice groupe IX : | rotation 80° |

Dans ces conditions, le temps de calcul est divisé par 4 pour les rotations, sans compter les simplifications apportées à la génération des matrices. De surcroît, le calcul d'erreur montre que la précision atteint des niveaux beaucoup plus élevés que dans le cas de la génération des 36 matrices et de leur agrégation à cause de la diminution du nombre de rotations.

On peut aussi envisager d'utiliser uniquement 4 groupes, le groupe I correspondant, à partir du point 0, à quatre décalages angulaires de 0°, 90°, 180° et 270°, regroupés sur une matrice décalée de 0°, le groupe II correspondant aux décalages 30°, 120°, 210°, 300°, regroupés sur une matrice décalée de 30°, le groupe III, correspondant aux décalages 60°, 150°, 240°, 330°, regroupés sur une matrice décalée de 60°, et le groupe IV correspondant aux décalages 90°, 180°, 270°, 360°, regroupés sur une matrice décalée de 90°.

On génère ainsi quatre matrices de synthèse, dont trois subissent une rotation pour obtenir la matrice de synthèse finale. Ainsi la matrice de synthèse finale est obtenue après seulement 3 rotations au lieu de 35 dans le cas pas à pas. On aura alors une précision comparable à celle obtenue par l'utilisation de 36 matrices. Le temps de calcul devrait donc être divisé en gros par 12, sans compter l'économie de calcul provenant des nouvelles modalités de génération de matrice. En particulier, la matrice initiale peut être produite à partir deux vecteurs réduits correspondant l'un aux lignes, l'autre aux colonnes. Les termes du premier vecteur sont déduits des termes du vecteur contrainte par une division par le facteur 2 * n. De même, les termes du deuxième vecteur sont déduits des termes du vecteur contrainte de colonne par une division par le facteur 2 * m. Ainsi, chacun des termes de la matrice n'est que la somme des deux termes des vecteurs réduits correspondants. Cette méthode s'applique de manière analogue à la matrice résultat. Pour les très grandes matrices, elle permet de réduire considérablement le temps de calcul, puisque le génération de chaque terme ne met en oeuvre que des additions.

On peut envisager encore d'utiliser des valeurs intermédiaires, par exemple avec des décalages de 15°, et de regroupement par groupes de 4, soit les matrices de pôle 0°, 15°, 30°, 45°, 60°, 75°, soit 6 groupes de matrices représentant 24 matrices de base. Le nombre de rotations est ramené à 5 et la précision meilleure que dans le cas actuel à 36.

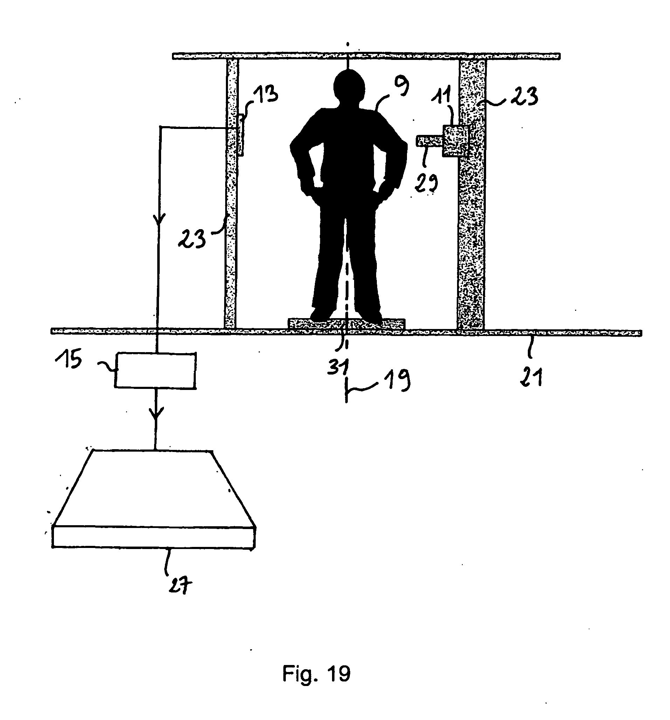

Il résulte de cette expérience que l'on ne peut envisager un nouveau type de dispositif d'imagerie X ou infrarouge tel que décrit à la figure 19 et constitué comme suit :

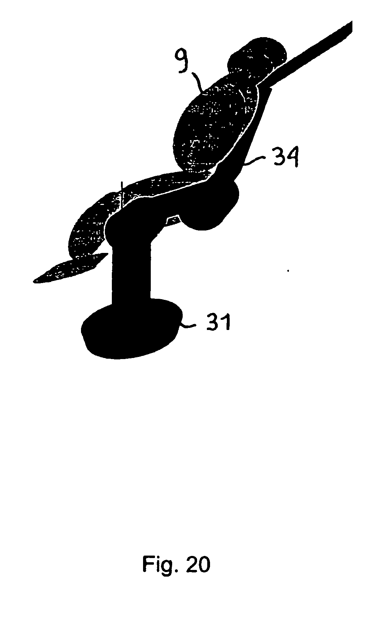

- un plateau tournant 31, sur lequel une personne (ou un objet) à examiner est placé. Les personnes peuvent être normalement debout, mais si elles sont souffrantes, on peut les placer sur un siège articulé pour leur permettre de s'asseoir tout en restant inclinées pour que la région à examiner puisse l'être commodément grâce aux articulations du siège ; pour certains patients, il est prévu de les faire asseoir sur un fauteuil articulé 34 transparent aux rayons X pouvant tourner pour les prises de vue, comme illustré par la figure20.

- un faisceau émis par une source à rayons X 11 à axe horizontal déplaçable le long d'une potence verticale 23 ;

- un détecteur 13 pouvant être placé verticalement ou horizontalement le long d'une potence verticale 25 selon la taille de la région à examiner ; à la place de la potence, on peut également utiliser un chariot élévateur comprenant un moyen à courroie crantée supportant deux plaques tenant le module de jonction parallélépipédique. La rotation de la courroie permet de déplacer le module de jonction vers le bas ou vers le haut. Le chariot est lui-même mobile pour déplacer le module de jonction dans un plan horizontal.

- un ordinateur 27 qui reçoit, via un convertisseur 15 analogique-numérique, instantanément les informations provenant du détecteur 13 pour chacun des flashs du faisceau au moment où le détecteur 13 et faisceau sont alignés sur un axe coupant l'axe de rotation 19 du plateau tournant 31.

Ce dispositif peut être complété par un deuxième couple faisceau-détecteur placé à 90° du premier et fonctionnant de manière synchrone.

Le fonctionnement de ce système peut être le suivant :

- le plateau tournant 31 tourne pas à pas de sorte à ce que l'angle de rotation permette de prendre des images juste accolées les unes aux autres. Si par exemple la distance de l'axe de rotation 19 au détecteur 13 est de 75 cm, celui-ci effectuera un tour complet sur un cercle de l'ordre de 4.70 m ; si le détecteur 13 est une plaque de 23 cm, une vingtaine de pas suffiront au cours d'un seul tour pour obtenir 10 d'images élémentaires à partir de couples ou paires pris à 90° l'un de l'autre ; si le pas est de seulement 6 cm, le mouvement circulaire sera découpé de manière plus précise en environ 80 pas, permettant de produire 40 images à la définition voulue. On peut obtenir des images de 47 cm de largeur sur 10 cm de hauteur, même si le faisceau et les détecteurs ne sont pas disposés dans un cercle de l'ordre de 4.70 m, par un traitement géométrique de l'image obtenue en cas de rapprochement.

Dans le cas où l'on veut examiner des régions peu étendues verticalement on choisira de placer le détecteur 13 en position horizontale, si l'on peut se contenter de zones plus étendues verticalement on placera le détecteur 13 en position verticale, et dans certains cas on déplacera le patient pour bien cibler la zone à analyser.

On peut aussi envisager que le patient se déplace verticalement pour se placer au niveau convenu permettant l'examen d'une partie quelconque de son corps. Ceci est possible si le patient est placé sur le fauteuil articulé 34 pouvant se déplacer verticalement sur un ensemble télescopique 33.

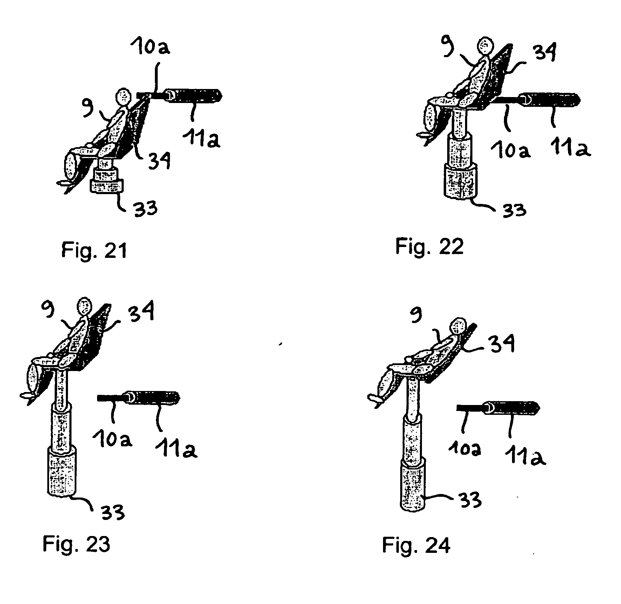

Les figures 21 à 24 illustrent le fonctionnement du fauteuil télescopique : figure21, il est possible de scanner la partie supérieure du patient, tête et épaules ; figure22, il est possible de scanner la partie médiane, notamment l'abdomen : figure23, il est possible de scanner la partie inférieure, les jambes. Dans la position de la figure24, il est prévu que le fauteuil articulé 34 bascule légèrement limiter la hauteur de l'ensemble télescopique à 2.40 m ou 2.50 m.

Mais on peut aussi utiliser d'autres configurations de détecteurs pour toutes applications particulières sans que le système soit réellement alourdi.

On peut ajuster la taille du détecteur 13 en utilisant des plaques de détection différentes dont le coût est aujourd'hui raisonnable pour obtenir toute une gamme de possibilités.

Rappelons qu'un tour peut être effectué sans dommages en une minute et dans le cas examiné on recueille 20 ou 80 fois de l'ordre de 12 millions de pixels d'information permettant de produire un nombre considérable de coupes densitométriques à la définition que l'opérateur pourra définir à son gré.

Bien entendu plus la définition est élevée, plus le temps de calcul le sera.

L'opérateur pourra choisir son protocole une fois les images stockées pour obtenir dans un premier temps des images à définition basse ou moyenne et affiner pour telle ou telle partie de l'organisme sa recherche en conservant les images créées au cours du balayage, le temps de poursuivre son investigation après avoir libéré son patient.

De toute manière, pour des images à basse définition elles sont susceptibles d'apparaître sur l'écran quelques secondes après l'investigation, et le cas échéant, l'investigation peut se poursuivre pour d'autres régions de l'organisme étudié.

Un corps humain a généralement une dimension horizontale maximale de l'ordre de 48 cm (en particulier au niveau des épaules ou du bassin). Ceci suppose que la plaque de détection ait de l'ordre de 48 cm, que le faisceau lui-même puisse avoir une dimension horizontale de 48 cm. Dans ces conditions, il faudrait une distance du faisceau au détecteur au maximum de l'ordre de 3.25 m. En effet un cercle de 3.25 m de diamètre a une circonférence de l'ordre de 10 m, si l'on veut obtenir 20 images (il faut que l'angle élémentaire soit de l'ordre de 18°, soit un arc d'environ 50 cm et une corde d'environ 48 cm). La distance entre le faisceau et le détecteur de 3.25 m est donnée à titre indicatif, mais on peut obtenir des images à des distances plus courtes, en définissant une dimension du faisceau compatible en fonction de la distance à la taille du détecteur.

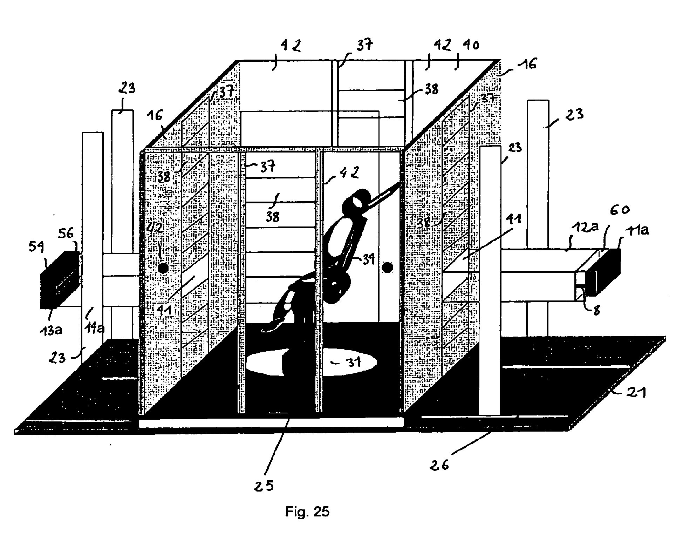

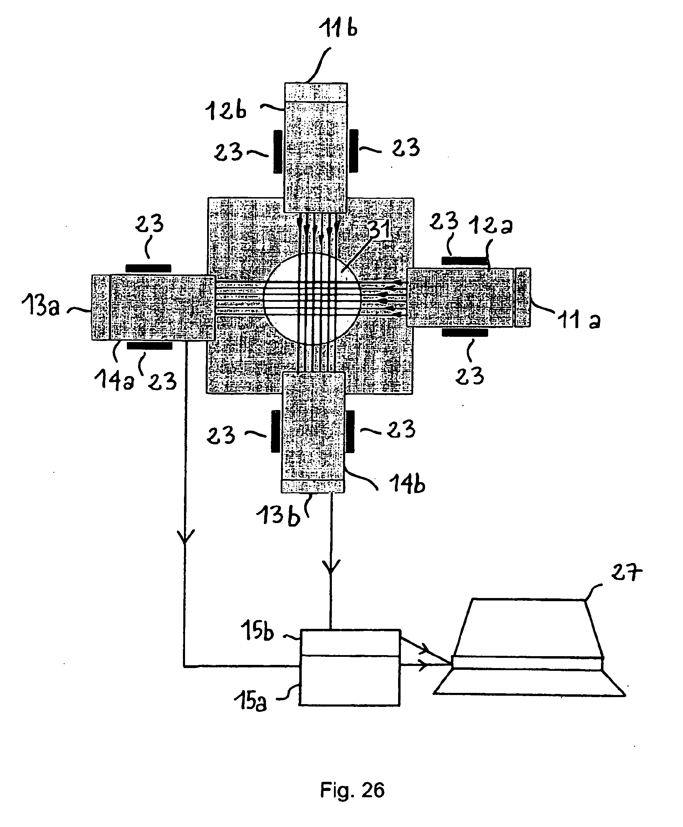

Cette première considération définissant la géométrie du système de prise de vue pour obtenir plus de 36 vues avec des plaques de détection de 48 cm, le choix a été porté sur une géométrie autorisant 20 vues. L'ensemble est donc composé d'une cabine par exemple de 175x175x205 cm ou de 190x190x205 cm, réalisant un dispositif spécialement conçu pour la mise ne oeuvre d'un procédé selon l'invention et comprenant, figures 25 et 26 :

- une cabine dont les dimensions sont de 175 x 175 x 220 cm, ayant un double rôle de structure de l'ensemble du système et de protection de l'environnement contre les rayons X.

- quatre parallélépipèdes de jonction 12a, 12b, 14a, 14b, permettant de porter les détecteurs et les faisceaux X fonctionnant de manière orthogonale.

- quatre potences doubles 23 permettant la translation verticale et horizontale des parallélépipèdes.

- deux détecteurs 13a, 13b, placés sur deux parallélépipèdes 14a, 14b.

- deux faisceaux X 11a, 11 b, placés sur les deux autres parallélépipèdes 12a, 12b.

- un système informatique 27, recevant les données des détecteurs pour générer les images élémentaires et de synthèse.

- une console de commande de l'ensemble des fonctions cinématiques.

La cabine est conçue à double détection pour tenir compte de la rapidité d'acquisition des détecteurs et des mouvements imprévisibles du patient. Elle est ainsi pourvue de deux faisceaux identiques, placés à 90° et à exactement la même hauteur au moment des prises de vue, lesquelles sont synchrones. Il en résulte une définition de la cabine construite ainsi :

- un plancher 21 en acier de 175 x 175 cm supportant la structure d'accrochage des plaques au plomb.

- un plancher 25 en plomb de 175 x 175 cm placé sur le plancher acier à environ 15 cm du sol et pouvant être démonté pour permettre l'accès au moteur électrique de rotation d'un fauteuil 34.

- une structure métallique en cornière et tubes d'acier pour soutenir les plaques de plomb.

- en face avant, une paroi frontale composée, au centre, d'un portique de support 37 de hauteur 205 cm, de largeur 55 cm pouvant porter vingt panneaux 38 de 52.5 x 10 cm, coulissant verticalement pour éviter la présence de zones non traitées entre deux niveaux ; à droite et à gauche du portique, d'une porte 42 de verre au plomb de 205 de hauteur et de 61.25 cm de largeur.

- du coté droit, une paroi composée, au centre, d'un portique de support 37 de hauteur 205 cm, de largeur 55 cm pouvant porter vingt panneaux 38 au plomb de 52.5 x 10 cm coulissant verticalement vers le haut pour éviter la présence de zones non traitées entre deux niveaux ; à droite et à gauche, d'une paroi 16 au plomb de 205 x 61.25 cm.

- du coté gauche, une paroi composée, au centre, d'un portique de support 37 de hauteur 205 cm, de largeur 55 cm pouvant porter vingt panneaux 38 au plomb de 52.5 x 10 cm coulissant verticalement vers le haut pour éviter la présence de zones non traitées entre deux niveaux ; à droite et à gauche, d'une paroi 16 au plomb de 205 x 61.25 cm.

- au fond, d'une paroi composée, au centre, d'un portique de support 37 de hauteur 205 cm, de largeur 55 cm pouvant porter vingt panneaux 38 de 52.5 x 10 cm coulissant verticalement vers le haut pour éviter la présence de zones non traitées entre deux niveaux ; à droite et à gauche, une porte 42 de verre au plomb de 205 de hauteur et de 61.25 cm de largeur.

- un plafond 40 au plomb de 175 x 175 cm pouvant supporter des équipements de relevage des groupes de panneaux coulissant:

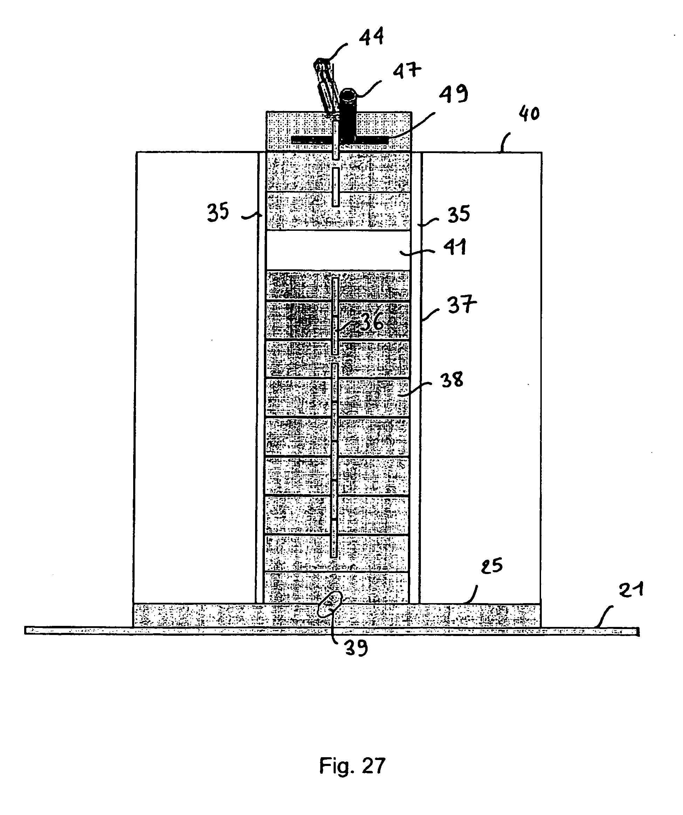

Pour tenir compte du problème que pose des charnières, pouvant laisser passer des rayons X, et du problème d'une zone non traitée située à cheval entre deux zones ouvertes, les panneaux 38 coulissent dans des rails verticaux 35 protégés par des petites plaquettes en forme de L. Ils sont relevés, figure27, par groupe pour ouvrir la fenêtre 41 déterminée, en étant solidarisés par des éléments d'accrochage 36 pouvant être ouverts et fermés manuellement ou automatiquement.

Si l'on solidarise par exemple trois panneaux, l'ensemble des trois panneaux est relevé d'une hauteur choisie par l'opérateur pour permettre l'introduction des parallélépipèdes de jonction. On peut aussi relever les panneaux inférieurs de sorte à ce que la zone choisie soit quelconque dans le système, grâce à une came de relevage 39. Dans ces conditions, on ouvre simultanément une fenêtre 41 dans les quatre portiques centraux de la cabine, au même niveau, par une synchronisation des mouvements des panneaux coulissants. La mécanique permettant de soulever le groupe de panneaux rendus solidaires est placée sur le toit 40 de la cabine. Pour faciliter l'entretien, la plaque inférieure 25 est rendue démontable, ce qui permet l'accès au moteur d'entraînement du fauteuil sur lequel est placé le patient.

Pour permettre l'ouverture de la fenêtre 41 et l'introduction dans la cabine du parallélépipède de jonction à travers la fenêtre, on peut procéder de deux manières au moins :

- par un mécanisme à poulie entraînant par l'intermédiaire d'un fil métallique, un groupe de panneaux et comprenant deux treuils sur lesquels s'enroulent des films métalliques, chacun des treuils étant entraîné par un moteur pas à pas, par exemple de la marque ORIENTAL MOTORS, et dont le couple est de l'ordre de 20 Newton mètres avec un pas inférieur à 1 degré, ou

- par un mécanisme utilisant des vérins, tels ceux fabriqués par la Société HOERBIGER. Le vérin est construit de la manière suivantes : sur une vis sans fin, fixée aux deux extrémités, on place une barre métallique, liée à la vis sans fin par un tube ayant un pas compatible avec celui de la vis. En faisant tourner la vis sans fin par un moteur électrique, on soulève jusqu'à 1500 Newtons, à des vitesses pouvant dépasser plusieurs dizaines de centimètres par seconde. Le vérin 44 est alors disposé sur une plaque de métal 49, solidaire du toit 40 de la cabine et entraîné par un moteur 47 d'une puissance adéquate pouvant fonctionner par impulsion, pour provoquer le déplacement dans un sens ou dans l'autre dans des limites ou à des vitesses choisies.

La protection est assurée pour un faisceau X de 200 kV par un excellent jointage des portes et des panneaux coulissant.

A titre d'exemple, les parallélépipèdes de jonction ont les dimensions suivantes : hauteur intérieure, 10 cm, hauteur extérieure, 10.8 cm, profondeur intérieure, 52.5 cm, profondeur extérieure, 53.3cm et largeur 75 cm. Le poids de chaque parallélépipède est donc de l'ordre de 22 kg et chaque parallélépipède supporte un poids supplémentaire qui peut atteindre 26 kg pour le détecteur ou le faisceau et le tunnel. On prévoit de déplacer verticalement un ensemble de l'ordre de 50 kg avec une précision de la cote verticale de 1/2 millimètre.

Les potences doubles sont montées sur des rails 26 fixés à la plaque au sol 21 de la cabine pour être déplacées en translation horizontalement et ainsi permettre l'introduction des parallélépipèdes de jonction dans la cabine à travers les ouvertures 41 créées lors du relevage des panneaux coulissants 38. On prévoit de déplacer horizontalement un parallélépipède de jonction avec une précision de l'ordre de 1 centimètre.

Les parallélépipèdes de jonction sont mobiles verticalement le long des doubles potences 23 pour placer le faisceau 11 et le détecteur 13 exactement face à face dans les ouvertures 41 des portiques centraux formées par le relevage des panneaux coulissants.

Les dimensions horizontales de la cabine peuvent être réduites, à condition de compenser la réduction par une augmentation des longueurs des modules parallélépipédiques 12,14. De la même manière, pour obtenir un plus grand nombre d'images, il est possible de remplacer les modules parallélépipèdes par des modules de même forme ayant une longueur plus grande. Le choix de la longueur des modules dépendra de la précision souhaitée, dans le cas où les modules sont allongés, il faudra prévoir des faisceaux X de plus grande puissance et des détecteurs de plus grande sensibilité. On comprend que les modules de jonction parallélépipédiques 12,14 permettent de réduire l'encombrement de la cabine en rapprochant les parois latérales frontale et de fond du plateau tournant 31.

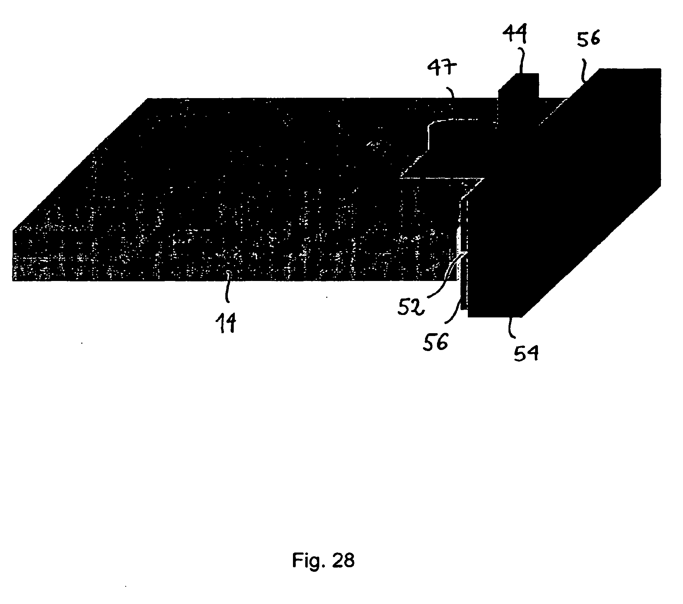

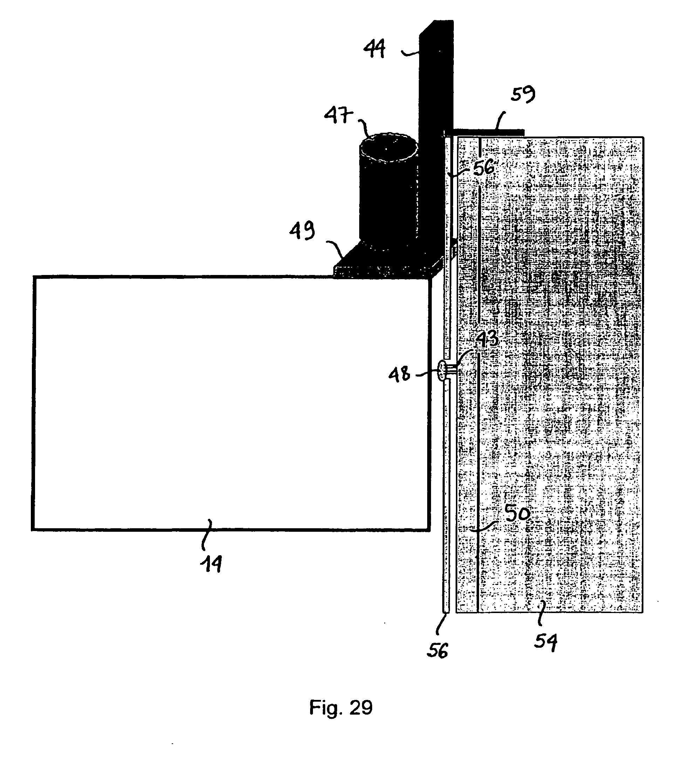

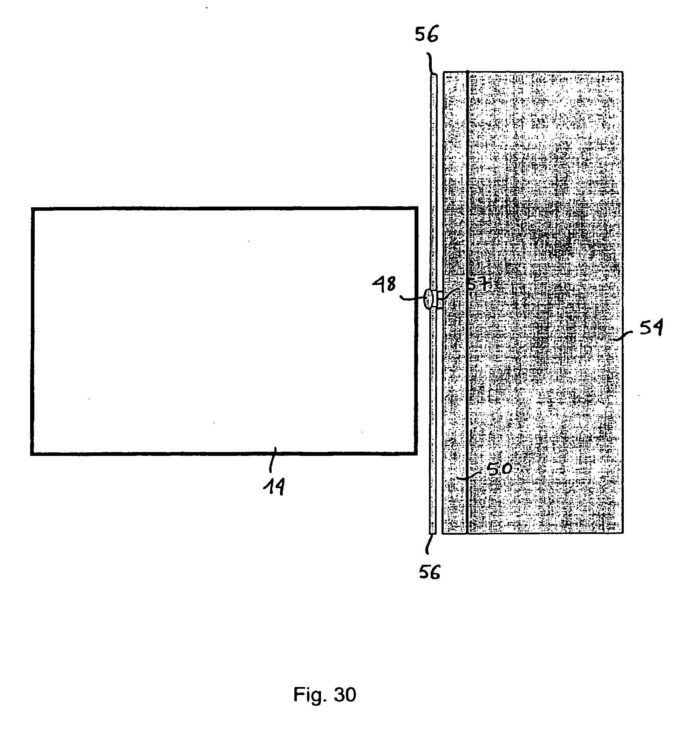

Le détecteur 13, figures 28 à30, est fixé sur une plaque 59 en étant disposé à l'extrémité extérieure ou intérieure du parallélépipède de jonction 14. Plusieurs types de détecteurs peuvent être montés sur la plaque. Le détecteur 13 comprend de préférence une double barrette de détection 48, par exemple du type ATMEL AT71957 de 23x 0.6 cm, soit au total 46 cm en largeur, un support 50 de la double barrette, reliée par des connexions 43 à un ensemble électronique 54 permettant de convertir des données analogiques en données digitales, de les stocker sur une mémoire tampon, de les transférer à un ordinateur sous forme d'une matrice constituée de lignes dont la dimension physique équivalente est de l'ordre de 46 cm, les lignes étant espacées de 27 microns, et pouvant ainsi générer une matrice correspondant à une géométrie de l'ordre de 10 x 46 cm. Ce bloc électronique a une dimension approximative de 50 x 20 x 5 cm.

Pour protéger l'ensemble électronique 54, on prévoit de fixer deux plaques de plomb 56 sur le support 50 en les séparant par un intervalle de 1 cm environ, constituant une lumière 52 pour la double barrette de détection 48. Une plaque 57 de faible largeur est également à l'arrière des deux barrettes de détection 48.

Pour éviter la présence de zones noires entre les deux barrettes qui sont estimées à 1.4 cm, on prévoit de décaler le patient pour que l'axe de rotation du fauteuil articulé 34 ne coïncide pas avec l'axe de rencontre des faisceaux orthogonaux. Dans un premier temps, on déplace le boîtier électronique 54 à 0.7 cm à gauche de l'axe central de coupe, puis on déplace le boîtier à droite de l'axe, à 0.7 cm, et on refait un balayage vertical, pour obtenir ainsi deux images que le traitement informatique permettra de superposer pour avoir une image sans zone noire.

Le détecteur 13 est monté mobile par rapport au module de jonction 14 par l'intermédiaire d'un mécanisme à base de vérin motorisé 44, 47 du type de celui décrit pour le relevage des panneaux 38 coulissant dans les portiques centraux 37. Le vérin motorisé est fixé au module de jonction 14 par l'intermédiaire d'une plaque de reprise d'effort 49.

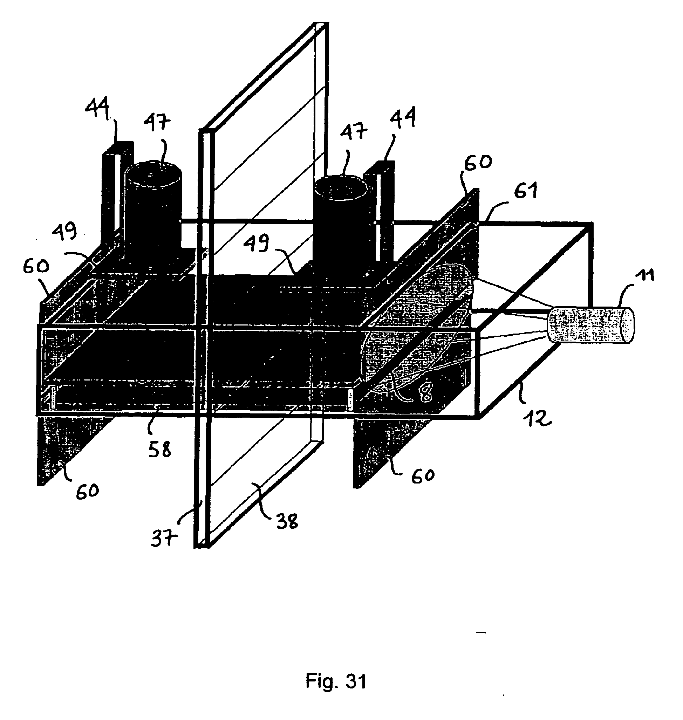

Le faisceau X 11, figure31, est fixé au parallélépipède de jonction 12 par l'intermédiaire de deux plaques 60 disposées à travers une fente 61 supérieure, respectivement inférieure, du parallélépipède de jonction, à courte distance de l'extrémité extérieure.

Plusieurs types de faisceaux peuvent être montés sur ladite plaque. On peut ainsi utiliser un faisceau ayant un transformateur haute tension intégré, alimenté par une tension allant par exemple de 40 à 110 kV et d'une puissance de 3200 watts, fonctionnant par séquence de quelques secondes. On peut aussi utiliser un faisceau de ce type alimenté sous 125 kV, d'une puissance de 30 000 watts et fonctionnant par séquences de 1 milli-seconde à 1,6 seconde. De préférence, on prévoit d'utiliser un faisceau alimenté sous 160 kV, d'une puissance continue de 4000 watts, ayant une électrode active de 4 mm refroidie par une circulation d'huile, elle-même refroidie par un échangeur huile/eau.

Entre les plaques 60, on crée une lumière 8 d'environ 1 cm de hauteur sur 48 cm à 50 cm environ de largeur, correspondant à la lumière 52 de 1 cm formée par l'intervalle de séparation des deux plaques de protection 56 du détecteur 13. Cet agencement a l'avantage de limiter la quantité de radiation reçue par le patient à celle qui est juste nécessaire à l'irradiation de la barrette de détection 48 du détecteur 13.

De préférence, on prévoit un moyen de collimation du faisceau X à l'intérieur du module de jonction 12 pour encore diminuer l'exposition aux rayons X. Ce moyen de collimation comprend les deux plaques 60, deux plaques 60 analogues disposées à l'extrémité opposée du module de jonction 12 et deux plaques horizontales 58 s'étendant à l'intérieur du module de jonction en étant fixées, par exemple par soudage ou par vissage, chacune aux deux plaques 60 d'extrémité de façon à former un tunnel de collimation. Cet ensemble est mobile verticalement par rapport au module de jonction 12 sur lequel le faisceau X est fixé pour balayer la hauteur du module. Le déplacement du tunnel de collimation par rapport au module de jonction 12 est là encore assuré par un ou deux vérins motorisés 44, 47 du type du vérin motorisé décrit pour le déplacement des panneaux 38 coulissant dans les portiques centraux 37. Les vérins motorisés sont fixés au module de jonction 12 par l'intermédiaire d'une plaque de reprise d'effort 49.

Les deux plaques horizontales 58 sont en plomb au molybdène d'environ 2 à 4 mm d'épaisseur. Elles sont espacées d'un intervalle de l'ordre de 1 cm, de sorte à créer le tunnel de collimation du faisceau X. On crée ainsi un faisceau de rayons X de faible épaisseur, de sorte à limiter la quantité de radiation reçue par le patient.

On peut de la même manière prévoir un collimateur dans le module de jonction 14 du détecteur 13, de sorte à ce que le faisceau de rayons X vienne toucher exactement la barrette de détection 48 du détecteur.

A l'intérieur de la cabine, un plateau tournant 31, dont la rotation est motorisée, est placé sur la plaque horizontale 25. Le mouvement de rotation est programmable, pour effectuer un ou plusieurs tours avec des angles de rotation pas à pas définis par le programme. On prévoit un dispositif d'immobilisation du patient 46 ou un fauteuil articulé 34, fixé sur le plateau 31, en matériau transparent aux rayons X et sur lequel peuvent être accrochées des sangles d'immobilisation du patient.

Le matériau composite est constitué de feuilles de plomb de 2 à 4 mm d'épaisseur, enserrant des feuilles de polyéthylène de 4 mm d'épaisseur, avec un revêtement de polyéthylène sur les faces intérieures.

La console de commande est prévue pour réaliser les opérations suivantes :

- positionner à même niveau horizontal les quatre parallélépipèdes de jonction.

- ouvrir un espace d'examen de l'ordre de 20 cm par relèvement des panneaux coulissants.

- faire pénétrer les parallélépipèdes de jonction et leurs moyens d'obturation des faisceaux.

- refermer de manière précise les panneaux sur les parallélépipèdes de jonction.

- commander les déplacements simultanés des faisceaux et des détecteurs sur une hauteur de 10 cm pour générer deux images synchrones, cette opération devant prendre de l'ordre de 2 à 4 secondes. Eventuellement le détecteur peut fonctionner à deux reprises dans le sens vertical, avec un décalage entre les deux positions de 1.4 cm

- commander le fonctionnement du faisceau définissant notamment la durée du flash.

- faire tourner le patient d'un angle par exemple de 10° ou plus.

- refaire les opérations précédentes sous un nouvel angle.

- recommencer la séquence entre 12 et 36 fois pour obtenir les images de base génératrices de l'image de synthèse.

L'ensemble des commandes est organisé temporellement pour être commandés selon différents protocoles.

Le système informatique permet l'acquisition des données provenant des détecteurs conformément à la séquence suivante :

- conversion des données analogiques en données numériques, cette conversion peut être effectuée par une puce spécialisée, intégrée au détecteur, et

- stockage des données numériques sur un disque de dimensions suffisantes.

- possibilité de clonage du disque pour être transmis à différents opérateurs susceptibles grâce à un logiciel approprié de réaliser les différentes images des coupes scannées, en fonction des besoins de l'examen médical.

La possibilité de disposer de deux ensembles faisceau-détecteur décalés de 90°, permet d'obtenir en quelques fractions de secondes des images constituées d'informations prises au même moment. En environ 2 à 3 secondes, le temps d'une rotation, on peut obtenir 10 ou 40 images de telle ou telle partie de l'organisme et dans ce cas disposer d'une possibilité de produire une série d'images décalées de quelques fractions de seconde avec des vitesses de défilement élevées.

Il est clair que la cabine peut également être conçue en simple détection. Dans ce cas, on ne dispose qu'un seul faisceau X et qu'un seul détecteur.

Des moyens de filtrage et de linéarisation des faisceaux sont disposés dans les modules de jonction.

La mise en place des filtres en aluminium destinés à linéariser les faisceaux X a aussi un effet sur la quantité de rayons x atteignant le patient.

Par rapport à l'irradiation des opérateurs et des patients, la cabine protège complètement les opérateurs et la double détection permet d'obtenir plus d'information avec la même quantité de rayons X, ou moins de rayons X pour la même information.

En effet, pour une rotation de 18° par étape, la cabine à double détection permet d'acquérir 20 images synchrones grâce à la double détection et 40 images, 20 par détecteur et non synchrones. En d'autres termes, 60 images sont obtenues avec seulement 40 doses d'irradiation du patient, alors qu'avec une cabine à simple détection, 60 doses d'irradiation sont reçues par le patient pour former 60 images. On comprend que la cabine à double détection diminue de 1/3 le taux d'irradiation à même nombre d'images.

Le modus operandi est le suivant pour un protocole donné :

- on déplace les faisceaux orthogonaux 11 a, 11 b et les détecteurs correspondant 13a, 13b à une même première hauteur par rapport à la plaque au sol 21. Ce déplacement est effectué à l'aide des doubles potences 23 de manière à disposer les modules de jonction 12, 14 en regard des panneaux coulissants 36 des portiques centraux 35 occupant la même hauteur par rapport à la plaque au sol 21.

- on déplace en translation verticale les panneaux coulissants 36 dans les portiques centraux 37 pour ouvrir une fenêtre 41.

- on déplace en translation horizontale les modules de jonction 12, 14 des faisceaux et des détecteurs à travers les fenêtres 41 à l'aide des rails 26 pour rapprocher du patient assis dans le fauteuil articulé 34, l'extrémité de sortie des rayons X du module de jonction des faisceaux et l'extrémité d'entrée des rayons X dans le module de jonction des détecteurs 13. On ajuste la position des modules de jonction à travers les fenêtres 41 à l'aide de la came de relevage 39.

- on déplace par translation verticale les faisceaux 11a, 11 b et les détecteurs 13a, 13b par rapport à leurs modules de jonction respectifs 12, 14 ces derniers restant en position fixe par rapport au potences 23 pendant ce déplacement. Pour ce déplacement, on utilise les vérins motorisés 44, 47. Ces deux déplacements sont effectués de manière synchrone avec une même vitesse de déplacement pour maintenir en correspondance la lumière 8 formée entre les plaques 60 du tunnel de collimation disposées devant les faisceaux 11 a, 11 b et la lumière 52 formée par l'intervalle de séparation entre les deux plaques de plomb 56 des détecteurs 13a, 13b. Au cours de ces deux déplacements, la lumière 8 des faisceaux 11 et la lumière 52 de la barrette de détection 48 parcourent toute la hauteur de 10cm des modules de jonction 12, 14.

Dans le dispositif ainsi décrit, les modules de jonction 12, 14 ont une hauteur de 10 cm afin de diminuer la dimension des plaques de protection 56 du boîtier électronique 54 et le poids à déplacer verticalement. Compte tenu des performances du boîtier électronique, la vitesse de déplacement varie par exemple entre 1,5 et 5 cm par seconde pendant l'acquisition des données, mais elle peut être plus rapide pour remettre l'ensemble en position basse ou haute sans enregistrement des données.

- pendant le déplacement synchrone des faisceaux 11a, 11b et des détecteurs 13a, 13b par rapport aux modules de jonction 12, 14 on acquiert une image de 10x46 cm en 2 à 6 secondes.

- on fait tourner le patient pour obtenir successivement 20 images décalées l'une par rapport à l'autre de 18 degrés. Symétriquement sur l'autre ensemble faisceau-détecteur disposé de manière orthogonale, on obtient aussi 20 images décalées l'une par rapport à l'autre de 18 degrés. On peut alors exploiter 60 images se décomposant en 20 images synchrones deux par deux, provenant l'une d'un détecteur 13a et l'autre de l'autre détecteur 13b, 20 images asynchrones sur le détecteur 13a et 20 images asynchrones sur le détecteur 13b, soit au total 60 images exploitables. L'ensemble de la rotation, durera de l'ordre de 60 secondes.

Ces images sont ensuite traitées pour obtenir des images à la définition voulue. On rappellera que sur une hauteur de 10 cm avec une définition de 25 microns, on peut réaliser des images à des définitions multiples de 25 microns, par superposition informatique des données. La production des images peut alors s'effectuer à des définitions inférieures avec la possibilité de zoomer sur toute zone choisie, ou sur une série de zones placées dans le cylindre du zoom.

La rotation du patient s'effectue de deux manières au moins :

- en plaçant l'axe de rotation 19 à l'intersection des deux faisceaux 11a, 11b, ce qui est susceptible de créer une zone morte située dans cet axe et dont le diamètre serait de l'ordre de 1 cm.

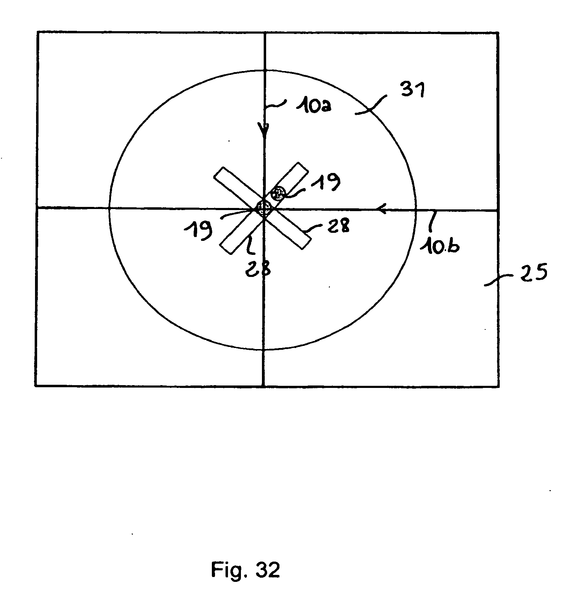

- en plaçant l'axe de rotation 19 de manière excentrée par déplacement le long d'une rainure 28 fixée au plancher 25 comme illustré par la figure32.

On peut aussi excentrer le fauteuil 34 lui-même, à condition qu'il soit placé sur une glissière, accrochée au tube de pivotement du fauteuil articulé.

Rappelons ici quelques chiffres : le poids du patient peut atteindre 120 kg, le poids du fauteuil avec ses articulations pourrait atteindre 20 kg, c'est la raison pour laquelle le moteur de rotation doit entraîner une plaque solide, supportant l'axe de rotation qui lui-même supporte le fauteuil. Cette plaque solide peut être située sous le plancher et avoir la dimension des rainures pour protéger le moteur situé en dessous et tous ses systèmes de commande.

- on déplace en sens inverse les modules de jonction 12, 14 dans les rails 26 pour les retirer des fenêtres 41 que l'on referme en rabaissant verticalement les panneaux coulissants 36 dans les portiques centraux 37 pour fermer la cabine par rapport au faisceaux 11 et aux détecteurs 13.

- on déplace verticalement les modules de jonction 12, 14 pour les disposer en regard des panneaux coulissants 36 disposés à une deuxième hauteur par rapport à la plaque au sol 21.

- on déplace horizontalement les modules de jonction 12, 14 dans les rails 26, à travers les fenêtres 41 nouvellement ouvertes, pour rapprocher du patient l'extrémité de la sortie du module de jonction des faisceaux 11 ainsi que l'extrémité de l'entrée du module de jonction des détecteurs 13. On ajuste la position des modules de jonction à travers les fenêtres 41 à l'aide de la came de relevage 39.

- on déplace à nouveau les faisceaux 11 et les détecteurs 13 par rapport aux modules de jonction 12, 14 portés à la deuxième hauteur et on reconduit l'acquisition des 60 images selon la procédure décrite précédemment en rapport avec la première hauteur de prise de vue.

Il va de soi qu'il est parfaitement possible de prendre des détecteurs plus petits, auquel cas les images seraient situées dans un cylindre dont le diamètre est fonction de la largeur du détecteur.

On définira la séquence des radio photographies en fonction de la taille du détecteur, le pas par exemple de rotation pourra être de 9°, pour un détecteur de 24 cm environ et permettra d'obtenir 40 images dont la qualité sera excellente mais ne couvrant qu'une zone réduite.

La dimension de ce cylindre peut être suffisante pour examiner une partie du corps humain.

En déplaçant le sujet sur la plaque de rotation 31, on peut couvrir plusieurs parties du corps avec les définitions voulues.

Le calcul d'un balayage élémentaire de 46x46 cm, qui nécessite la connaissance de deux vecteurs provenant respectivement de chaque faisceau s'effectue suffisamment rapidement pour obtenir une image de synthèse à haute définition en temps réel ou en quelques secondes.

L'opération conduisant à la réalisation d'un balayage s'effectue selon la séquence suivante.

- acquisition de l'information pour une zone de 46 cm de hauteur avec par exemple 20 doubles prises de vue par rotation angulaire à chaque pas de 18°,

- enregistrement sur un disque dur de toutes les bitmaps,

- premier examen par le radiologiste avec une définition de 400 microns, soit un peu moins de 1200 coupes réalisées en environ une minute et demie,

- examen complémentaire par un spécialiste avec une définition plus élevée pour tout ou partie de la région examinée.

Dans le cas pratique où la définition est de 50 microns sur la totalité des coupes, cas des recherches de métastases par exemple, les calculs pourraient durer un temps relativement élevé. Les temps de calcul pourront être réduits d'un facteur 10 à 100, si l'on utilise un système multiprocesseur coûteux en particulier sur le plan de la programmation. Un tel système pourra être installer après les premiers essais et en fonction des résultats obtenus.

On peut ainsi réaliser une vue dynamique de l'intérieur d'un organisme en percevoir les mouvements, en déduire des informations supplémentaires, par exemple sur la respiration, ou les mouvements cardiaques.

Le même dispositif est naturellement applicable à l'observation d'objets pour permettre :

- un examen non destructif d'un objet quelconque ;

- et même une série d'images lorsque l'on veut observer des mouvements à l'intérieur d'objets clos,

- en effet un objet physique peut être mis en rotation rapidement par exemple à une vitesse de 10 ou 25 tours par seconde.

- en utilisant un détecteur de 6 cm de large on réalisera 40 images par tours associables pour créer une image de synthèse parfaite et pour 25 tours par seconde obtenir une image dynamique équivalente à celle produite sur un écran de télévision.

Un exemple va maintenant être décrit en relation avec des images panoramiques du visage en vue de repérer l'ensemble de la dentition et d'en vérifier la géométrie.

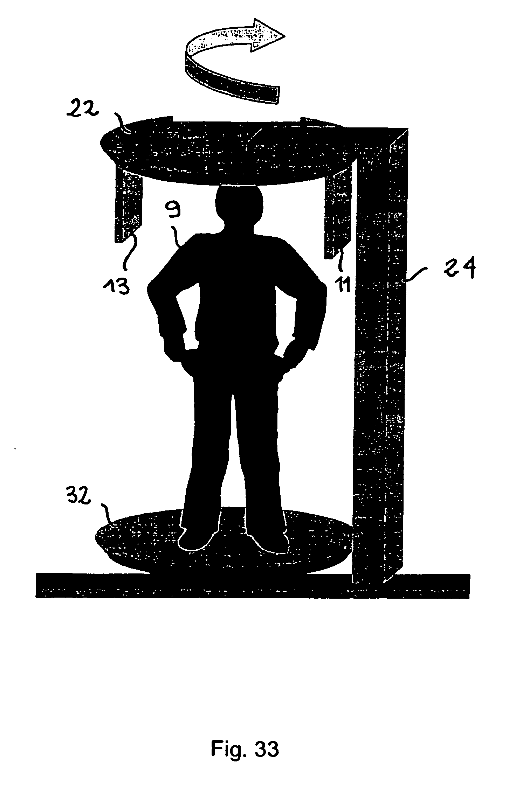

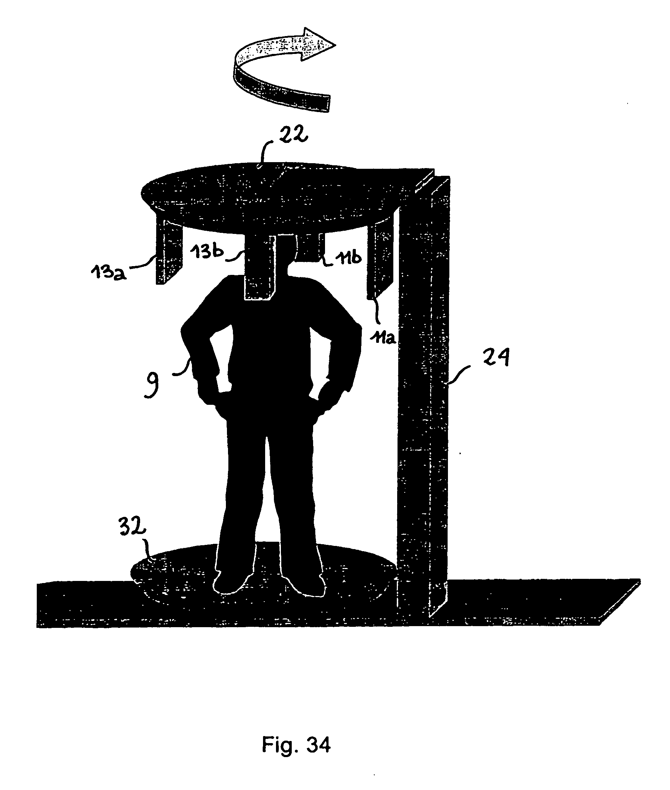

L'invention permet ici la réalisation de vues en trois dimensions et une analyse par coupe des mâchoires et éventuellement de la boîte crânienne. Les figures 33 et 34 montrent un dispositif comprenant :

- un plateau 32 rotatif ou non, s'étendant dans un plan horizontal et sur lequel le patient est placé debout,

- au dessus, une potence verticale 24 permettant de supporter un ensemble comprenant une console 22 horizontale rotative autour d'un axe de rotation vertical, portant un détecteur 13 d'environ 25 cm de haut et 6 cm de large et un faisceau X 11 permettant de projeter l'image d'une fraction du patient sur un détecteur.

Le fonctionnement est le suivant : on fait tourner la console supérieure 22 d'un angle en position 0, on alimente pour environ 1/2 seconde le faisceau X en vue d'obtenir grâce au système d'acquisition une image qui aura par exemple 6x25 cm, on fait tourner à nouveau l'ensemble détecteur - faisceau d'un angle égal par exemple à 10°, on prend une nouvelle image, que l'on enregistre à son tour et ainsi de suite.

Le diamètre de la console est d'environ 70 cm et la distance entre le faisceau et le détecteur, de l'ordre de 68 cm, pour que les images obtenues soient jointives.

Si l'on utilise une double détection, figure34, avec deux faisceaux orthogonaux 11a,11b irradiant les deux détecteurs 13a,13b et permettant des images à 90°, en gardant les mêmes dimensions, on obtient 36 images synchrones et 72 images asynchrones. La qualité de l'information est telle que l'on peut facilement reconstituer en trois dimensions l'ensemble de la boîte crânienne.

On peut d'ailleurs en choisissant la graduation colorée ou en utilisant plusieurs graduations de couleur différente obtenir des images de haute qualité dans lesquelles les parties dures, os et dents, peuvent apparaître avec leur couleur naturelle blanc crème et les parties très irriguées, comme la langue, le palais, apparaître en rouge, les parties telles le cerveau en gris.

On peut envisager aussi pour des raisons de protection contre les rayons X, placer l'ensemble dans une cabine de petite dimension en plomb avec une porte en verre au plomb.

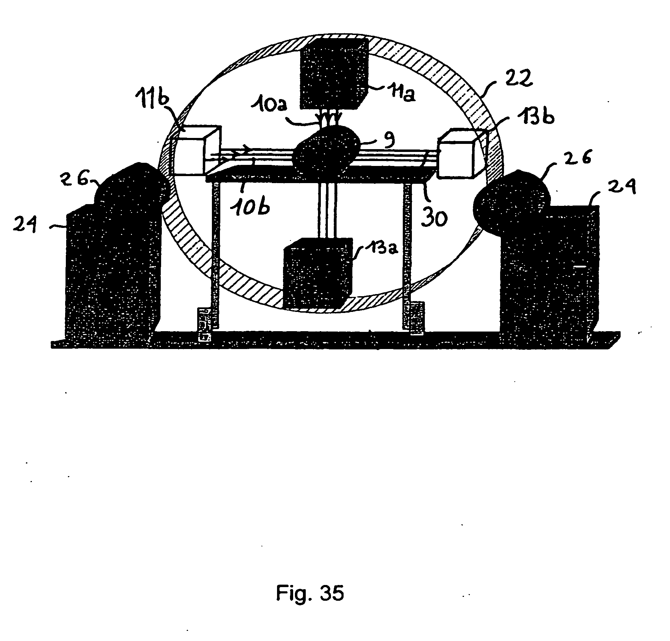

La figure 35 illustre une autre exécution d'un dispositif selon l'invention, comprenant :

- un support 30 pour recevoir un corps à examiner 9,

- une source 11a,11b émettant un faisceau de rayons X ou lumineux suivant une direction de propagation pour irradier ou illuminer le corps à examiner 9,

- un détecteur 13a,13b irradié ou illuminé par le faisceau pour détecter une intensité atténuée en fonction d'une traversée des rayons X ou lumineux à travers le corps à examiner 9,

- le support 30 d'une part et la source et le détecteur d'autre part étant mobiles l'un par rapport aux autres autour d'un axe de rotation 19 horizontal, la source 11 et le détecteur 13 sont dédoublés en deux sources 11a,11b et deux

detecteurs 13a,13b pour former deux faisceaux de rayons X ou lumineux se propageant de préférence suivant deux directions orthogonales 10a, 10b pour irradier ou illuminer respectivement les deux détecteurs 13a,13b.

Mais même pour des personnes on peut améliorer le caractère dynamique de la prise d'images en association plusieurs couples travaillant de manière synchrone deux à deux pour obtenir un nombre suffisant d'images de synthèse en un tour de une ou deux secondes de durée.

De tels dispositifs plus complexes seront dans un premier temps utilisés par la recherche.

Les faisceau X peuvent t être remplacés par un faisceaux lumineux par exemple infrarouge à fort pouvoir de pénétration.

Pour vérifier le fonctionnement du dispositif décrit, une routine a été ajoutée au logiciel de base. Cette routine permet de calculer point par point l'écart type relatif à ce point, et en divisant cet écart type par la valeur de référence, d'obtenir le niveau d'erreur relatif au point, puis la moyenne de ces niveaux d'erreur donc aussi la précision de l'image dans son ensemble ou par des zones particulières.

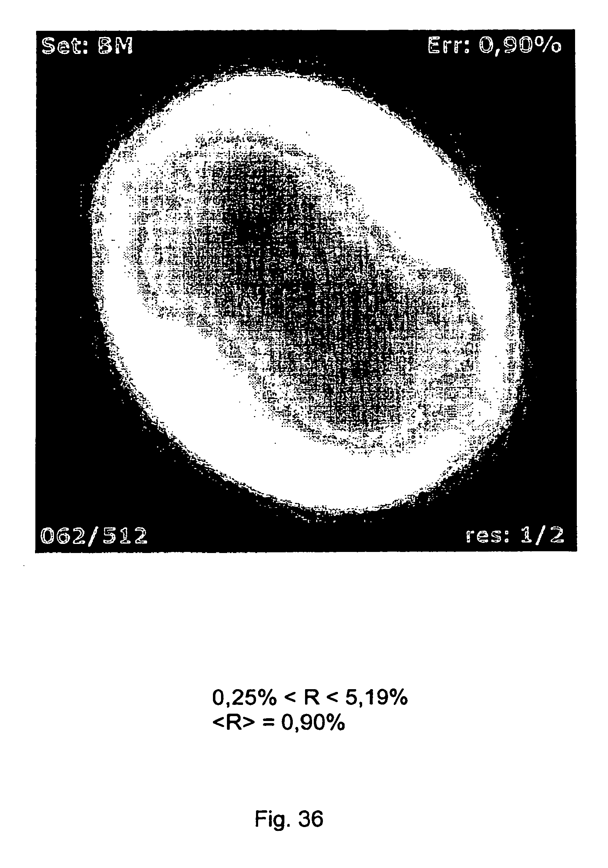

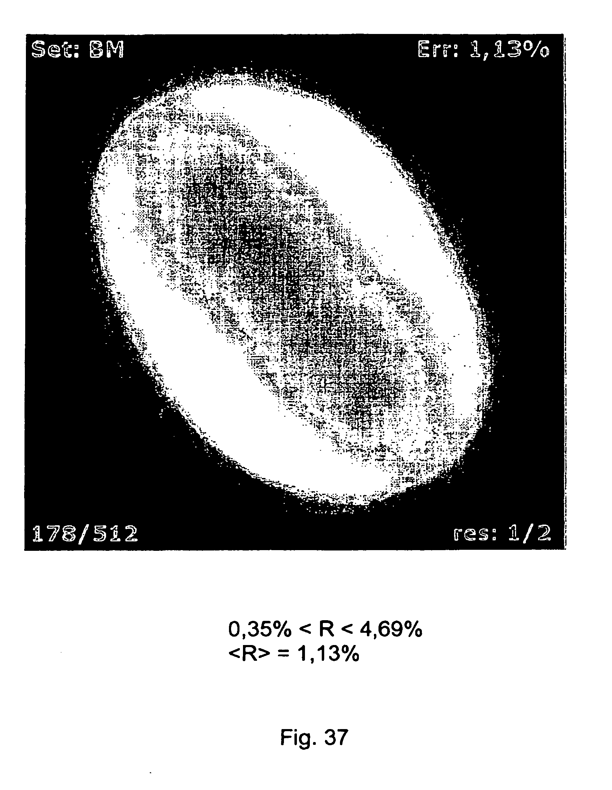

La figure 36 donne une coupe tomodensitométrique dans le 62-ème plan à partir du plan de fixation de l'axe de rotation. La figure 37 donne une coupe tomodensitométrique dans le 178-ème plan. La qualité des images peut être évaluée : l'erreur moyenne pour l'ensemble de l'image de la figure 36 est de 1,90 % pour la figure 36 et de 1,13 % pour la figure 37.

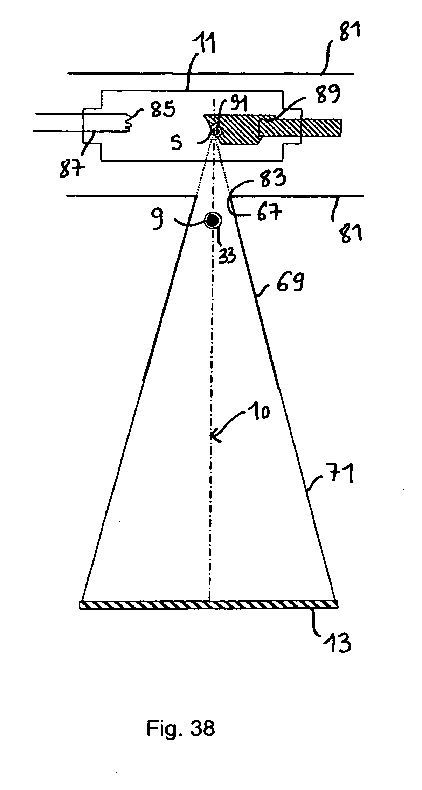

En référence aux figures 38 à 43, on décrit un sixième mode d'exécution de l'invention. Pour obtenir des images à très haute définition, on peut soit utiliser un détecteur à très haute définition, soit réaliser une amplification géométrique sur la base du principe suivant :

- un faisceau conique 71 ou pyramidal 73 centré sur la direction axiale 10 traverse l'objet à examiner 9,

- ce faisceau aboutit à un détecteur 13, dont la définition est par exemple de 25 microns.

En effet, il n'existe pas actuellement sur le marché, de détecteurs dont la définition soit meilleure que 25 microns.

Pour aboutir à une définition de 0.1 micron, le dispositif selon l'invention comprend, figure 38, un détecteur 13 d'une dimension de 230 mm, et d'une définition de 25 microns, fabriqué par ATMEL, et une source 11 à rayons X fabriquée par KODAK TROPHY, de tension 70'000 Volts, ce qui permet une longueur d'onde de l'ordre de 0.02 nanomètres.

On introduit un corps à examiner 9 de petite dimension, par exemple millimétrique ou microscopique, dans un tube optique 33 dont le diamètre intérieur est de l'ordre de 100 microns, ce tube optique 33 est entraîné en rotation autour de l'axe de rotation 19 par un micro-moteur pas à pas, avec des pas qui peuvent être de 1 °, 5°, 10°, 18°, en vue d'obtenir 360, 72, 36, 20 positions angulaires.

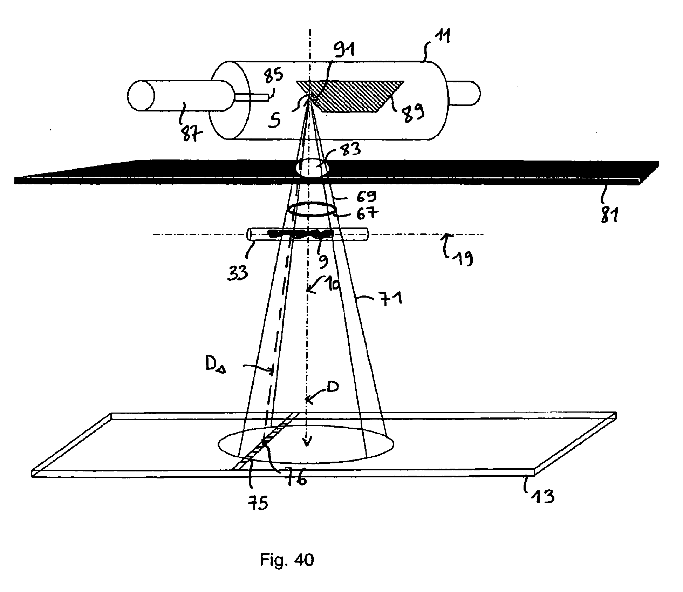

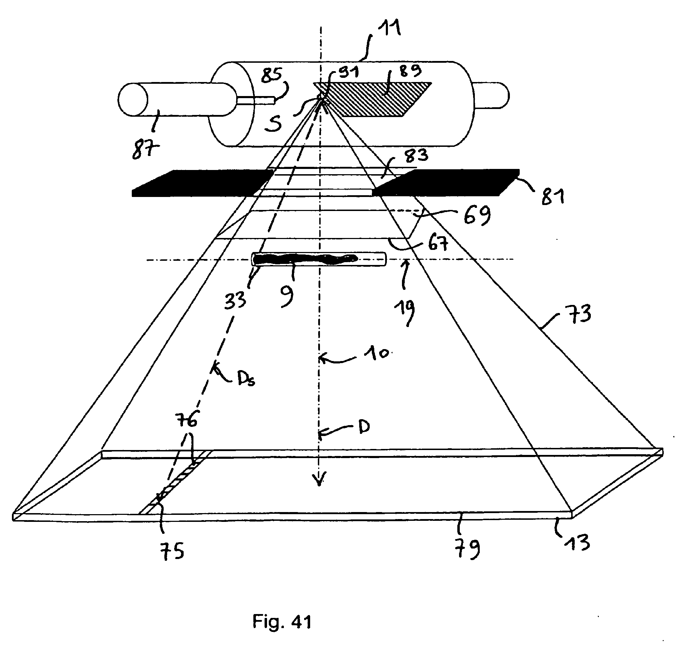

Le tube 11 à rayons X est disposé dans une gaine 81. On fixe sur la gaine 81 un moyen de projection 69 de la source 11 en un faisceau conique 71 ou pyramidal 73. Les figures 40 et 41 montrent respectivement des exemples de projection conique et pyramidale. Figure 40, le moyen de projection 69 est un tronc de cône. Figure 41, le moyen de projection 69 est un tronc de pyramide. La gaine 81 étanche aux rayons X est pourvue d'une ouverture 83 en regard du moyen de projection 69. L'intersection entre le faisceau conique 71 ou pyramidal 73 et le détecteur 13 dessine un cercle 77, une ellipse ou un polygone 79.

Ce tube à rayons X est lui-même en verre ou en matériau transparent aux rayons X et contient un filament 85 relié à une cathode 87 et une anode massive 89 placée face au filament. Cette anode est en matériau ayant une bonne conduction thermique, par exemple en cuivre. On insère dans l'anode un foyer 91 en tungstène de l'ordre de 1 mm. Lorsque le foyer 91 est touché par le faisceau d'électrons, ces électrons sont freinés et une partie de leur énergie cinétique est transformée en rayons X dont la longueur d'onde est fonction du nombre d'électronvolt du faisceau d'électrons. A titre d'exemple, pour un tube de 160 000 volts, la longueur d'onde est égale à 0.00774 nanomètres. La définition qui peut être atteinte, la demi longueur d'onde, est bien au-delà de 0,1 micron.

Le détecteur 13 est disposé de sorte à ce qu'au niveau de l'objet à examiner 9, le tronc de cône ou de pyramide ait une dimension de l'ordre de 100 à 1000 microns, et que le détecteur ait une dimension de 230 mm. L'amplification géométrique varie alors entre 2300 et 230.

Dans ces conditions on peut obtenir des définitions variant entre 0.1 et 1 micron. Bien entendu, des réglages simples permettent de modifier la distance entre la source et le détecteur pour obtenir une amplification géométrique adéquate. Le coefficient d'amplification géométrique est égal au rapport entre d'une part, la distance entre le sommet du cône et le détecteur, et d'autre part, la distance entre le sommet du cône et l'objet à examiner.

L'émission de rayons X est omnidirectionnelle, mais le faisceau 71 émis par le tube 11 est de forme conique si le moyen de projection 69 est tronconique et pourvu d'une ouverture 67 à base circulaire. Dans ce cas, le cône a pour sommet S le foyer 91, et pour angle d'ouverture, l'angle autorisé par l'ouverture 67 du moyen de projection, égale à l'ouverture 83 de la gaine 81.

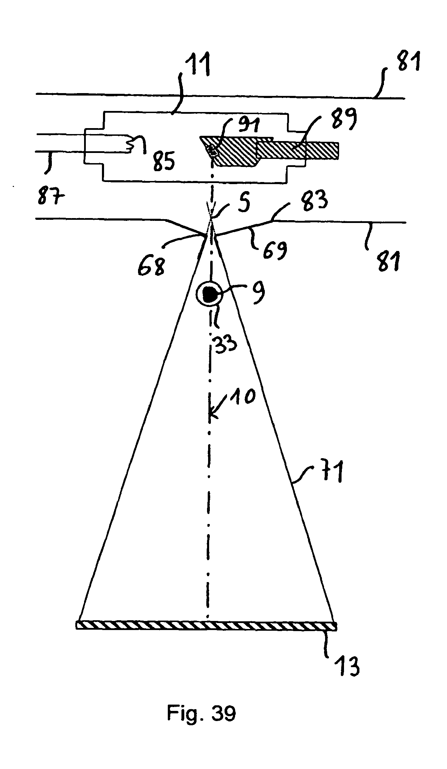

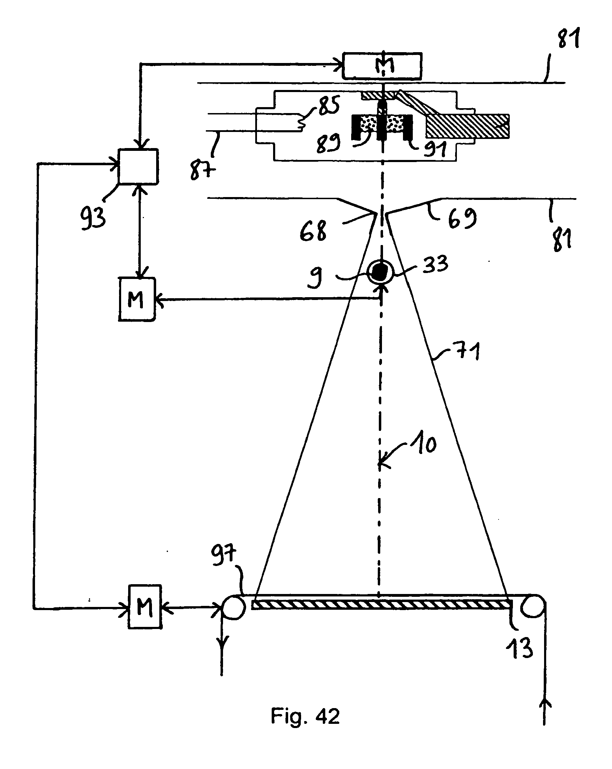

Lorsque le sommet S du cône se confond avec le foyer 91, le coefficient d'amplification est limité par la distance entre l'ouverture 67 du moyen de projection 69 et le détecteur 13. En créant un étranglement 68, on place le sommet S du cône en dehors du tube 11, comme illustré par la figure 39 et par la figure 42.

Pour commander la source à rayons X en une ou plusieurs impulsions, on prévoit avantageusement d'utiliser une anode rotative, commandée par un moteur M.

On peut utiliser l'anode 89 portant, figure 42, plusieurs foyers 91 et tournant rapidement pour provoquer une succession de flashs dont la durée est fonction de la largeur du foyer et du diamètre de l'anode. On peut par exemple disposer 36 foyers de 1mm de largeur sur une anode de 11,4 cm de diamètre, donc d'environ 360 mm de circonférence, chaque foyer occupant un arc de l'ordre de 1 mm, soit environ 1°. Un tour complet produit donc 36 flashs, qui sont avantageusement synchronisés par un moyen de synchronisation 93, des moteurs M du support 33 et de l'anode tournante 89 avec la rotation du support 33 de l'objet 9 pour obtenir 36 images décalées angulairement de 10°. Ainsi, chaque impulsion de la source irradie ou illumine le détecteur 13 entre chaque rotation du support 33.

Ceci suppose une très grande vitesse d'enregistrement des flashs. Si cette vitesse est de 10 à 50 tours par seconde, on obtient 10 à 50 images en une seconde, chaque image résultant de l'agrégation des 36 images élémentaires. Bien entendu, le temps de calcul est largement supérieur au temps d'acquisition, mais le calcul fait, on peut obtenir un véritable film à 50 images par seconde de l'objet à examiner.

La rotation de l'anode peut être obtenue de plusieurs manières bien connues grâce par exemple à un moteur M fixé sur l'anode et commandé par un courant électrique basse tension ou par un champ magnétique tournant et agissant à l'intérieur du tube 11 sur un rotor fixé sur l'anode 89.

Pour travailler de manière dynamique avec d'anode rotative décrite précédemment, si le détecteur 13 n'est pas assez rapide, on prévoit d'utiliser un film argentique 97 à grains fins à grande vitesse de réaction.

On fait défiler un tel film 97 en déclenchant régulièrement des faisceaux par la rotation de l'anode 89 portant plusieurs foyers 91, le film étant déplacé d'une façon saccadée par un moyen de déplacement M synchronisé 93 avec la rotation de l'anode tournante 89 pour que chaque impulsion de la source 11 irradie ou illumine le film 97 entre chaque déplacement saccadé, pour avoir par exemple 500 prises de vue par seconde. Avec une rotation du tube optique 33 par pas de 18° et le déplacement du film à la cadence appropriée, on obtient un film avec 25 images par seconde, ce qui conduit au traitement d'un nombre considérable d'images, nécessitant l'utilisation de supercalculateurs. Pour la conversion des intensités détectées, on utilise un convertisseur analogique-numérique 15 comprenant une caméra pour lire le film photographique.

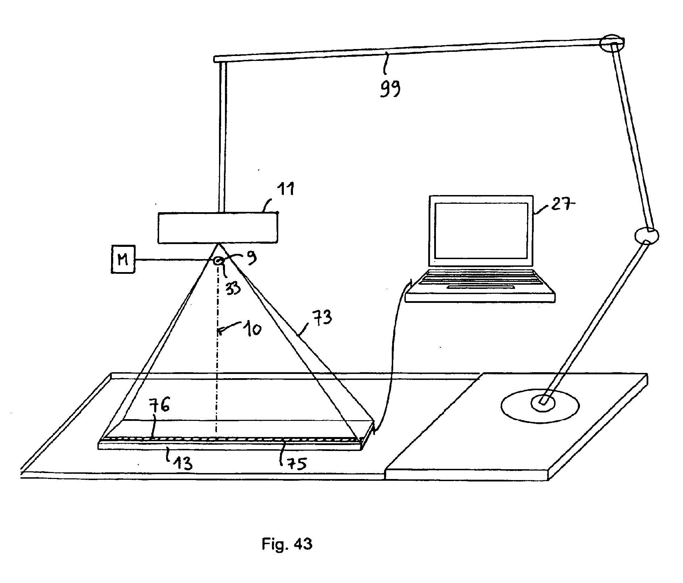

Le dispositif comprend, figure 43,

- dans la partie supérieure, la source 11 à rayon X, dont le déplacement est obtenu aisément grâce à un bras articulé 99,

- le moyen de projection constitué par un tronc de pyramide 69, projetant la source en un faisceau pyramidal 73, dont la base a 230 mm x 60 mm, et dont le sommet est un orifice de l'ordre de 1 mm,

- le tube optique 33 servant de support au corps à examiner 9, de diamètre environ 1 mm, et

- un moteur pas à pas M commandant le tube optique 33 en rotation.

Le fonctionnement est le suivant :

- pour une première position angulaire du tube optique 33 autour de l'axe de rotation 19, on actionne la source 11 pour exciter le détecteur 13 pendant un temps qui peut varier entre 1 milliseconde et 100 millisecondes et on recueille sous forme de bitmap cette première image dans l'ordinateur 27.

On recommence l'opération 35 fois, en provoquant une rotation du tube optique 33 de 10° entre chaque opération. On obtient ainsi 36 images que l'on traite pour obtenir des coupes tomodensitométriques dans n'importe quel plan de coupe de l'étendue irradiée, perpendiculaire à l'axe de rotation 19. Si le procédé est renouvelé, on obtient des images décalées dans le temps permettant une vision dynamique du corps examiné. De plus, il est possible d'obtenir des coupes tomodensitométriques dans l'étendue du corps à examiner suivant l'axe de rotation 19 du tube optique 33 permettant la génération d'images en trois dimensions.

Le traitement des données provenant des intensités détectées est le même que celui décrit précédemment. Il suffit de rappeler qu'à l'aide de l'ordinateur 27 dûment programmé, on effectue les étapes suivantes :

- moyenner les données provenant de la conversion des intensités détectées dans une bande 75 du détecteur 13 pour un premier angle de rotation autour de l'axe de rotation 19, en n valeurs moyennes à l'intérieur de n segments élémentaires 76 de la bande et moyenner les données provenant de la conversion des intensités détectées dans la bande 75 du détecteur 13 pour un deuxième angle de rotation, de préférence différent de 90 degrés du premier angle de rotation, en m valeurs moyennes à l'intérieur de m segments élémentaires 76 de la bande. Les n et m segments élémentaires correspondent à un quadrillage en n x m zones élémentaires d'un plan de coupe de l'objet 9 perpendiculaire à l'axe de rotation 19. Les n et m valeurs moyennes obtenues constituant les termes respectivement d'un vecteur générateur colonne et d'un vecteur générateur ligne.

- construire une matrice initiale (n,m) avec les termes des deux vecteurs générateurs, en affectant à chaque zone élémentaire un terme de ligne et de colonne (Bij) représentant un coefficient d'atténuation et défini par la demi-somme, du terme homologue (i) du vecteur générateur colonne divisé par le nombre (m) de termes du vecteur générateur ligne et du terme homologue (j) du vecteur générateur ligne divisé par le nombre (n) de termes du vecteur générateur ligne.

- ajuster le coefficient d'atténuation en chaque zone élémentaire par une méthode des moindres carrés en tenant compte, des valeurs de bordure de ligne définies par la somme des termes (Bij) sur chacune des lignes de la matrice initiale et des valeurs de bordure de colonne définies par la somme des termes (Bij) sur chacune des colonnes de la matrice initiale, des termes des vecteurs générateurs comme contraintes de ligne ou de colonne et en utilisant la formule indiquée précédemment pour aboutir à une matrice ajustée pour laquelle les valeurs de bordure de ligne et de colonne calculées à l'aide des valeurs ajustées (Cij) sont égales, pour chaque ligne et pour chaque colonne, respectivement aux termes des vecteurs générateurs ligne et colonne.

Ces étapes sont répétées pour des données acquises avec différentes paires d'angles de rotation. Puis on traite les matrices ajustées, obtenues pour les différentes paires d'angles, par un opérateur de rotation pour toutes les superposer sur une même paire d'angles (0°-90°) et on moyenne terme à terme les matrices ajustées et superposées pour aboutir à une matrice de synthèse exprimant une image des coefficients d'atténuation du corps examiné 9 sous la définition déterminée par le quadrillage.

Toutefois, dans le cas où le faisceau n'est pas cylindrique, les intensités détectées obtenues par le détecteur sont fonction non seulement des coefficients d'absorption le long d'un rayon X, mais aussi de la longueur du rayon X lui-même. Pour traiter l'image de la même manière que dans le cas d'un faisceau cylindrique, il faut effectuer une correction des données correspondant à une cylindrisation virtuelle du faisceau conique ou pyramidal et tenant compte :

- d'une part de la distance D entre le sommet géométrique S du faisceau conique 71 ou pyramidal 73 et le détecteur 13 suivant la direction axiale 10 du faisceau et,

- d'autre part, de la distance Ds entre le sommet géométrique S et un segment élémentaire 76 de la bande 75 de l'étendue irradiée ou illuminée du détecteur 13.

Cette correction correspond à un grossissement virtuel de l'objet à examiner 9 suivant l'axe de rotation 19 et peut être illustrée par le tableau suivant :

| I | II | III | IV | V |
|---|---|---|---|---|
| 1 | 44,4112598 | 1,0002536 | 1,00050726 | 1,00076099 |
| 2 | 44,4450222 | 1,00101401 | 1,00202906 | 1,00304513 |
| 3 | 44,5012359 | 1,00228009 | 1,00456538 | 1,00685587 |
| 4 | 44,5798161 | 1,00404991 | 1,00811622 | 1,01219901 |
| 5 | 44,6806446 | 1,00632082 | 1,0126816 | 1,01908258 |
| 6 | 44,8035713 | 1,00908944 | 1,0182615 | 1,02751694 |
| 7 | 44,9484149 | 1,01235169 | 1,02485594 | 1,03751464 |
| 8 | 45,1149643 | 1,0161028 | 1,0324649 | 1,04909047 |
| 9 | 45,30298 | 1,02033739 | 1,04108839 | 1,0622614 |
| 10 | 45,5121962 | 1,02504946 | 1,0507264 | 1,07704653 |
| 11 | 45,7423218 | 1,03023247 | 1,06137895 | 1,09346706 |

Dans ce tableau, dans la colonne I, on inscrit la distance en cm d'un segment élémentaire 76 au point d'intersection de la direction axiale 10 du faisceau avec le détecteur 13. On calcule dans la colonne II, la distance Ds entre le sommet géométrique S et le segment élémentaire 76, en admettant que la distance D entre le sommet géométrique S et le détecteur suivant la direction axiale 10 est égale à 44.4 cm. On calcule les trois corrections suivantes :

- la correction linéaire, colonne III, directement proportionnelle au rapport entre la valeur distance Ds et 44.4 cm,

- la correction carrée, colonne IV, qui est le carré de la correction linéaire, et

- la correction cubique, colonne V, qui est le cube de la correction linéaire.

On peut appliquer ainsi aux intensités détectées par le détecteur, une correction systématique qui dans le cas général sera égale à la correction carrée. On peut également appliquer une correction empirique obtenue grâce à un étalonnage effectué sur les mesures en tous points du détecteur, d'une image ou d'une grille standard. On peut encore effectuer un ajustement polynomial d'ordre 3, ou le cas échéant d'ordre supérieur, que l'on intégrera directement dans le processus d'évaluation de la correction.

A l'issue de cette correction, on obtient des valeurs corrigées qui sont très proches de celles qui auraient été détectées pour un faisceau cylindrique.

Aussi, l'ordinateur 27 effectue dans ce cas une étape supplémentaire, consistant à corriger les données en les multipliant par un facteur correctif dépendant d'une part de la distance D entre le sommet géométrique S du faisceau conique 71 ou pyramidal 73 et le détecteur 13 suivant la direction axiale 10 du faisceau et de la distance Ds d'autre part, entre le sommet géométrique S et un segment élémentaire de la bande 75 de l'étendue irradiée ou illuminée du détecteur 13. Cette correction correspond à un grossissement virtuel de l'objet à examiner suivant l'axe de rotation 19.

En réalité tout se passe comme si grâce à la correction de distance, on produisait une image grossie par projection cylindrique avec une définition largement améliorée.

Le dispositif qui vient d'être décrit peut être pourvu de deux sources 11a,11b et de deux détecteurs 13a,13b d'une manière analogue à ce qui a été décrit précédemment pour le dispositif à cabine. Dans ce cas, chaque source 11a,11b est pourvue d'un moyen de projection 69.

Les faisceaux orthogonaux fonctionnant de manière synchrone, on peut obtenir pour 20 prises de vues élémentaires, 20 images synchrones, particulièrement utiles lorsque l'on veut produire des vues dynamiques.

On place dans le tube optique 33 des micro-organismes, dont la dimension est par exemple de l'ordre de 2 à 3 microns. Ces micro-organismes pourront être visibles en trois dimensions, si l'on effectue des prises de vue sur une étendue suivant l'axe de rotation 19 du tube optique, l'étendue irradiée ou illuminée dépendant de l'ouverture 67 du moyen de projection 69.

Le scanner dit « cellulaire » qui vient d'être décrit devrait contribuer à améliorer la connaissance de la géométrie et de la structure interne des cellules, humaines ou animales, mais faciliter l'observation de petits objets en particulier ceux qui sont le produit de l'industrie horlogère ou micro électronique. En effet, avec un écran de 75 cmx48 cm, et en supposant qu'on projette une image de 100x65 microns environ, nous avons un effet de grossissement de 7500 fois. En zoomant d'un facteur seulement égal à 10, nous pouvons aisément atteindre la vision interne de cellules de 10 microns et aller à beaucoup mieux pour de petites cellules ou des parties de cellules.

Les vitesses de calculs atteintes permettent de prévoir les chiffres suivants :

- génération d'une image à 0,1 micron de définition pour un champ de 100 microns, soit un million de points, en 0,2 secondes avec un processeur utilisé pour des PC haut de gamme.

- génération de 1000 images avec un système multiprocesseur actuellement disponible sur le marché, de seulement dix processeurs associés, en 20 secondes.

## Revendications

1. Procédé d'imagerie X ou infrarouge d'un corps dans lequel, un corps à examiner (9) étant reçu par un support (1,3,5,7; 31,34; 30; 32; 33),

    - on irradie ou illumine le corps à examiner (9) à l'aide d'une source (11) émettant un faisceau de rayons X ou lumineux suivant une direction de propagation (10),
    - on détecte une intensité atténuée en fonction d'une traversée des rayons X ou lumineux à travers le corps à examiner (9), à l'aide d'un détecteur (13) irradié ou illuminé par le faisceau,

- on convertit les intensités détectées en données permettant de déterminer une atténuation par le corps à examiner des rayons X ou lumineux, à l'aide d'un convertisseur (15) analogique-numérique,
- on fait tourner d'un angle de rotation le support (1-7;31,34) monté mobile autour d'un axe de rotation (19) par rapport à la source (11) et au détecteur (13) montés sur un bâti (21,23,25) ou tourner d'un angle de rotation la source (11) et le détecteur (13) montés sur un bâti (22) mobile autour d'un axe de rotation par rapport au support (30, 32), et
- à l'aide d'un ordinateur (27) dûment programmé, on effectue les étapes suivantes :

(1) moyenner les données provenant de la conversion des intensités détectées dans une bande (75) du détecteur (13) pour un premier angle de rotation, en n valeurs moyennes à l'intérieur de n segments élémentaires (76) de la bande et moyenner les données provenant de la conversion des intensités détectées dans la bande (75) du détecteur (13) pour un deuxième angle de rotation, de préférence différent de 90 degrés du premier angle de rotation, en m valeurs moyennes à l'intérieur de m segments élémentaires (76) de la bande, les n et m segments élémentaires correspondant à un quadrillage en n x m zones élémentaires d'un plan de coupe de l'objet (9) perpendiculaire à l'axe de rotation (19), les n et m valeurs moyennes obtenues constituant les termes respectivement d'un vecteur générateur colonne et d'un vecteur générateur ligne,

(2) construire une matrice initiale (n,m) avec les termes des deux vecteurs générateurs, en affectant à chaque zone élémentaire un terme de ligne et de colonne (Bij) représentant un coefficient d'atténuation et défini par la demi-somme, du terme homologue (i) du vecteur générateur colonne divisé par le nombre (m) de termes du vecteur générateur ligne et du terme homologue (j) du vecteur générateur ligne divisé par le nombre (n) de termes du vecteur générateur colonne,

(3) ajuster le coefficient d'atténuation en chaque zone élémentaire par une méthode des moindres carrés en tenant compte, des valeurs de bordure de ligne définies par la somme des termes (Bij) sur chacune des lignes de la matrice initiale et des valeurs de bordure de colonne définies par la somme des termes (Bij) sur chacune des colonnes de la matrice initiale, des termes des vecteurs générateurs comme contraintes de ligne ou de colonne et en utilisant la formule suivante :

$$C_{ij} = B_{ij} + \left(\frac{1}{n}\right) \cdot \left(\rho_j - \sum_1^n B_{ij}\right) + \left(\frac{1}{m}\right) \cdot \left(c_i - \sum_{j=1}^m B_{ij}\right)$$

où, dans cette formule,

Cij = la valeur recherchée
Bij = la valeur estimée initialement
(n) = le nombre de lignes de la matrice initiale
(m) = le nombre de colonnes de la matrice initiale

$$\sum_{i=1}^n C_{ij} = \rho_j \quad \text{pour toutes les valeurs de i, la contrainte de la colonne j}$$

$$\sum_{j=1}^m C_{ij} = c_i \quad \text{pour toutes les valeurs de j, la contrainte de la ligne i,}$$

pour aboutir à une matrice ajustée pour laquelle les valeurs de bordure de ligne et de colonne calculées à l'aide des valeurs ajustées (Cij) sont égales, pour chaque ligne et pour chaque colonne, respectivement aux termes des vecteurs générateurs ligne et colonne,

(4) répéter les étapes (1) à (3) pour des données acquises avec différentes paires d'angles de rotation, et

(5) traiter les matrices ajustées, obtenues pour les différentes paires d'angles, par un opérateur de rotation pour toutes les superposer sur une même paire d'angles (0°-90°) puis moyenner terme à terme les matrices ajustées et superposées pour aboutir à une matrice de synthèse exprimant une image des coefficients d'atténuation du corps examiné (9) sous une définition déterminée par le quadrillage.

**2.** Procédé d'imagerie X ou infrarouge selon la revendication 1, dans lequel :

- on effectue l'étape (1) pour quatre paires d'angles de rotation, de préférence orthogonaux entre eux (0-90°; 90°-180°; 180°-270°; 270°-360°) pour construire quatre vecteurs générateurs colonne ayant chacun pour coordonnées les n valeurs moyennes obtenues pour le premier angle de rotation (0°; 90°; 180°, 270°) de chacune des quatre paires d'angles et quatre vecteurs générateurs ligne ayant chacun pour coordonnées les m valeurs moyennes obtenues pour le deuxième angle de rotation (90°; 180°; 270°; 360°),

- on traite les quatre vecteurs générateurs colonne et les quatre vecteurs ligne par un opérateur de rotation pour les superposer sur une même paire d'angles de rotation (0°-90°) puis on construit un vecteur générateur colonne réduit et un vecteur générateur ligne réduit en moyennant terme à terme les termes homologues des vecteurs générateurs colonne et ligne superposés sur la même paire d'angles de rotation (0°-90°),

- on effectue l'étape (2) à partir des termes des vecteurs générateurs colonne et ligne réduits,

- on effectue l'étape (3) pour aboutir à une matrice ajustée pour laquelle les valeurs de bordure de ligne et de colonne calculées à l'aide des valeurs ajustées (Cij) sont égales, pour chaque ligne et pour chaque colonne, respectivement aux termes des vecteurs générateurs ligne et colonne réduits et

- on effectue les étapes (4) et (5) pour différents groupes de quatre paires d'angles de rotation, décalés d'un multiple d'un angle de référence (10°), par rapport aux angles de rotation des paires du premier groupe.

**3.** Procédé d'imagerie X ou infrarouge selon la revendication 1 ou 2, dans lequel, le bâti (21,23,25,22) comprenant deux sources (11a,11b) émettant un premier et un deuxième faisceau de rayons X ou lumineux suivant une première (10a) et une deuxième (10b) direction axiale de propagation, de préférence différentes de 90 degrés, et deux détecteurs (13a,13b) irradiés ou illuminés par le premier et le deuxième faisceau, :

- à l'aide de l'ordinateur (27) dûment programmé:

- on effectue l'étape (1) en moyennant les données provenant de la conversion des intensités détectées dans une première bande (75a) du premier détecteur (13a) et en moyennant les données provenant de la conversion des intensités détectées dans une deuxième bande (75b) du deuxième détecteur (13b), pour le plan de coupe de l'objet perpendiculaire à l'axe de rotation (19) dans lequel les première (75a) et deuxième (75b) bandes s'étendent, et

- on effectue les étape (2), (3) et (4) en considérant d'une part les intensités détectées simultanément par les deux détecteurs (13a,13b) pour obtenir des images synchrones et d'autre part, les intensités détectées par l'un ou l'autre des deux détecteurs pour obtenir des images asynchrones.

**4.** Procédé selon la revendication 1, 2 ou 3, **caractérisé en ce qu'**on irradie ou illumine en une ou plusieurs impulsions de commande de la source (11,11a,11b), une étendue du corps à examiner (9) parallèlement à l'axe de rotation (19) et,

- à l'aide de l'ordinateur (27) dûment programmé:

(6) on enregistre les données provenant de la conversion des intensités détectées dans toute l'étendue irradiée ou illuminée du détecteur (1313a,13b),

(7) on appelle les données enregistrées provenant de la conversion des intensités détectées dans la bande (75) de l'étendue irradiée ou illuminée du détecteur (13) pour le premier et le deuxième angle de rotation ou dans la première (75a) et la deuxième (75b) bande respectivement du premier (13a) et du deuxième (13b) détecteur, et

- on effectue les étapes (1) à (5) à partir des données appelées.

**5.** Procédé selon la revendication 4, **caractérisé en ce qu'**on irradie ou illumine l'étendue, voire la totalité, du corps à examiner (9), en projetant la source (11,11a,11b) en un faisceau conique (71) ou pyramidal (73) et,

- à l'aide de l'ordinateur (27) dûment programmé:

(8) on corrige les données appelées en les multipliant par un facteur correctif dépendant d'une part de la distance (D) entre le sommet géométrique (S) du faisceau conique (71) ou pyramidal (73) et le détecteur (13,13a,13b) suivant la direction axiale (10) du faisceau et de la distance (Ds) d'autre part, entre le sommet géométrique (S) et un segment élémentaire de la bande (75,75a,75b) de l'étendue irradiée ou illuminée du détecteur (13,13a,13b), cette correction correspondant à un grossissement virtuel de l'objet à examiner suivant l'axe de rotation (19), et

- on effectue les étapes (1) à (5) à partir des données appelées et corrigées.

**6.** Dispositif spécialement conçu pour la mise en oeuvre d'un procédé selon la revendication 1, 2, ou 4, notamment dans le cas où le corps à examiner est le corps d'un individu, comprenant :

- un support (31,34 ; 32) pour recevoir un corps à examiner (9)
- une source (11,11a,11b) émettant un faisceau de rayons X ou lumineux suivant une direction de propagation pour irradier ou illuminer le corps à examiner (9),
- un détecteur (13,13a,13b) irradié ou illuminé par le faisceau pour détecter une intensité atténuée en fonction d'une traversée des rayons X ou lumineux à travers le corps à examiner (9),

et dans lequel,
le support (31,34 ; 32) comprend un plateau (31) tournant par rapport à la source (11,11a,11b) et au détecteur (13,13a,13b) autour d'un axe de rotation vertical (19) pour que l'individu soit reçu en position debout ou assise par le support

et le support (31,34; 32) et le plateau tournant (31) sont disposés dans une cabine (16,42,37,38,25) étanche aux rayons X où la source (11,11a,11b) ou le détecteur (13,13a,13b) émet ou reçoit les rayons X à travers un module de jonction (12,12a,12b,14,14a,14b) mobile en translation verticale à l'aide de moyens de déplacement verticaux (23) pour être déplacé en regard d'une fenêtre (41) de la cabine formée dans une paroi (37,38) et mobile en translation horizontale à l'aide de moyens de déplacement horizontaux (26) pour être déplacé à travers la fenêtre (41) et déboucher dans la cabine.

**7.** Dispositif selon la revendication 6, **caractérisé en ce que** le plateau (31) est pourvu d'un moyen d'immobilisation (46) de l'individu ou d'un fauteuil (34) transparent aux rayons X, le fauteuil (34) étant de préférence monté sur un pied télescopique (33).

**8.** Dispositif selon la revendication 6 ou 7, dans lequel la source (11,11a,11b) et le détecteur (13,13a,13b) sont mobiles en translation verticale par rapport aux module de jonction (12,12a,12b,14,14a,14b) à l'aide de moyens de déplacement verticaux (44,47,49) commandés de façon synchrone.

**9.** Dispositif selon la revendication 8, dans lequel des panneaux coulissants (38) sont relevés par groupe dans des portiques (37) de la cabine par des moyens de levage (44,47,49,36,39) pour ouvrir une ouverture formant la fenêtre (41) à travers laquelle les modules de jonction (12,12a,12b,14,14a,14b) sont déplacés horizontalement pour déboucher dans la cabine.

**10.** Dispositif spécialement conçu pour la mise en oeuvre d'un procédé selon la revendication 3, notamment dans le cas où le corps à examiner est le corps d'un individu, dans lequel la source (11), le détecteur (13) sont dédoublés en deux sources (11a,11b) et deux détecteurs (13a,13b) pour former deux faisceaux de rayons X ou lumineux se propageant de préférence suivant deux directions orthogonales (10a,10b) pour irradier ou illuminer respectivement deux bandes (75a,75b) des deux détecteurs (13a,13b) qui s'étendent dans un plan perpendiculaire à l'axe de rotation (19) en définissant le plan de coupe de l'objet à examiner.

**11.** Dispositif spécialement conçu pour la mise en oeuvre d'un procédé selon la revendication 5, notamment dans le cas où le corps à examiner est de taille millimétrique ou microscopique, comprenant :

- un support (33) pour recevoir un corps à examiner (9)
- une source (11,11a,11b) émettant un faisceau de rayons X ou lumineux suivant une direction de propagation (10) pour irradier ou illuminer le corps à examiner (9),
- un détecteur (13,13a,13b) irradié ou illuminé par le faisceau pour détecter une intensité atténuée en fonction d'une traversée des rayons X ou lumineux à travers le corps à examiner (9),
- le support (33) d'une part, la source (11,11a,11b) et le détecteur (13,13a,13b) d'autre part, étant mobiles le premier par rapport aux deux autres autour d'un axe de rotation (19).

et dans lequel,

- un moyen de projection (69) est prévu pour que la source (11,11a,11b) irradie ou illumine le détecteur (13,13a, 13b) avec un faisceau conique (71) ou pyramidal (73) centré sur la direction axiale (10) du faisceau.

**12.** Dispositif selon la revendication 11, dans lequel la source (11,11a,11b) comprend une anode tournante (89) pourvue de plusieurs foyers (91) et commandée en rotation par un moyen de déplacement (M) synchronisé (93) avec la rotation du support (33) par rapport à la source (11,11a,11b) pour que chaque impulsion de la source irradie ou illumine le détecteur (13,13a,13b) entre chaque rotation du support (33).

**13.** Dispositif selon l'une quelconque des revendications 6 à 12, dans lequel le détecteur (13,13a,13b) comprend un film photographique (97) et le convertisseur analogique-numérique (15) comprend une caméra pour lire les intensités détectées sur le film photographique et les convertir en données numériques.

**14.** Dispositif selon la revendication 13, dans lequel le film photographique (97) est déplacé d'une façon saccadé par un moyen de déplacement (M) synchronisé (93) avec la rotation de l'anode tournante (89) pour que chaque impulsion de la source (11) irradie ou illumine le film photographique (97) entre chaque déplacement saccadé.

**15.** Ordinateur (27) dûment programmé pour la mise en oeuvre d'un procédé selon l'une des revendications 1 à 5.

**16.** Programme d'ordinateur pour la mise en oeuvre d'un procédé selon l'une des revendications 1 à 5 lorsqu'il est chargé dans un ordinateur (27).

**Claims**

**1.** X-ray or infrared imaging method in which a body to be examined (9) is received by a support (1, 3, 5, 7; 31, 34; 30; 32; 33) and in which,

- the body to be examined (9) is irradiated or illuminated by a source (11) emitting a beam of X-rays or light rays in a propagation direction (10),
- an intensity that is attenuated according to the passage of the X-rays or light rays through the body to be examined (9) is detected by a detector (13) irradiated or illuminated by the beam,
- the detected intensities are converted by an analogue-to-digital converter (15) into data enabling an attenuation of the X-rays or light rays by the body to be determined, and
- the support (1-7 ;31,34) is rotating and turned by a rotation angle about a rotation axis (19) with respect to the source (5) and the detector (13) mounted on a stand (21,23,25), or the source (11) and the detector (13) are mounted on a rotating stand (22) and turned by a rotation angle about a rotation axis with respect to the support (30,32), and
- the following stages are carried out with the help of a suitably programmed computer (13):

    (1) to average the data resulting from the conversion of the detected intensities in a strip (75) of the detector (13) for a first angle of rotation, to obtain n mean values ($c_i$) in n elementary segments (76) of the strip, and to average the data resulting from the conversion of the detected intensities in the band (75) of the detector (13) for a second angle of rotation, preferably differing by 90° from the first angle of rotation, to obtain m mean values ($\rho_j$) in m elementary segments (76) of the band, wherein the n and m elementary segments produce a grid of n x m elementary zones of a sectional plane of the object to be examined (9), perpendicular to the axis of rotation (19), and wherein the n and m mean values respectively are the ($c_i$) terms of a column generating vector and the ($\rho_j$) terms of a line generating vector,
    (2) to build an initial matrix (n, m) with the terms of the two generating vectors, by assigning to each elementary area a line and column term ($B_{ij}$) which represents an attenuation coefficient and is equal to the half sum of the homologous term ($c_i$) of the column generating vector divided by the number (m) of terms of the line generating vector and the homologous term ($\rho_j$) of the line generating vector divided by the number (n) of terms of the column generating vector,
    (3) to adjust the coefficient of attenuation in each elementary zone by a method of least squares taking account of line boundary values defined by the sum of the ($B_{ij}$) terms along a line of the initial matrix and column boundary values defined by the sum of the ($B_{ij}$) terms along a column of the initial matrix, as well as of the terms of the generating vectors regarded as line or column constraints and by using the following formula:

$$C_{ij} = B_{ij} + \left(\frac{1}{n}\right) * (\rho_j - \sum_1^n Bij) + \left(\frac{1}{m}\right) * (c_i - \sum_{j=1}^m Bij)$$

where, in this formula,

$C_{ij}$ = the desired value
$B_{ij}$ = the initially estimated value
(n) = the line number of the initial matrix
(m) = the column number of the initial matrix

$$\sum_{i=1}^{n} Cij = \rho_j \text{ for all the values of i, the constraint of the column j}$$

$$\sum_{j=1}^{m} Cij = c_i \text{ for all the values of j, the constraint of the line i}$$

to arrive at a properly adjusted matrix, for which the line and column boundary values calculated using the adjusted values ($C_{ij}$) are respectively equal, for every line and every column, to the terms of the line and column generating vectors,
(4) to repeat steps (1) to (3) with data acquired for different pairs of rotation angles, and
(5) to process the properly adjusted matrices obtained for the different pairs of angles, by means of a rotation operator so as to superimpose all of them on a same pair of angles (0°-90°), then to term-by-term average the properly adjusted and superimposed matrices in order to arrive at a synthesis matrix representing an image of the coefficients of attenuation of the body examined under a definition determined by the grid.

2. X-ray or infrared imaging method according to claim 1, wherein:

- stage (1) is carried out for four pairs of angles of rotation, preferably mutually orthogonal (0°-90°; 90°-180°; 180°-270°; 270°-360°) so as to form four column generating vectors each having as co-ordinates the n mean values obtained for the first angle of rotation (0°; 90°; 180°; 270°) and four line generating vectors each having as co-ordinates the m mean values obtained for the second angle of rotation (90°; 180°; 270°; 360°) of each of the four pairs of angles,
- the four column generating vectors and the four line generating vectors are treated by a rotation operator so as to superimpose them on the same pair of angles of rotation (0°-90°), then a reduced column generating vector and a reduced line generating vector are formed by term-by-term averaging of the homologous co-ordinates of the column vectors and line generating vectors superimposed on the same pair of angles of rotation (0°-90°),
- stage (2) is carried out starting from the co-ordinates of the reduced column and line generating vectors,
- stage (3) is carried out to obtain an adjusted matrix for which the line and column boundary values calculated for the adjusted values ($C_{ij}$) are equal, respectively, for each line and column, to the terms of the reduced line and column generating vectors, and
- stages (4) and (5) are carried out for different groups of four pairs of angles of rotation, shifted by a multiple of a reference angle (10°), with respect to the angles of rotation of the pairs of the first group.

3. X-ray or infrared imaging method according to claim 1 or 2, which, the stand (21, 23, 25, 22) comprising a first source (11 a) and a second source (11 b) emitting a first beam of X-rays or light rays and a second beam of X-rays or light rays in a first (10a) and a second (10b) propagation direction, which are preferably orthogonal, and a first detector (13a) irradiated or illuminated by the first beam and by a second detector (13b) irradiated or illuminated by the second beam,

- by means of the suitably programmed computer (27) :
- stage (1) is carried out by averaging the data obtained from the conversion of the intensities detected in a first band (75a) of the first detector (13a) and by averaging the data obtained from the conversion of the intensities detected in a second band (75b) of the second detector (13b), for the sectional plane of the object, perpendicular to the axis of rotation (19) and in which the first (75a) and second (75b) bands extend, and
- stages (2), (3) and (4) are carried out taking into account on one hand, the intensities detected simultaneously by the two detectors (13a,13b) to obtain synchronous images and on the other hand, the intensities detected by one or the other detector to obtain non synchronous images.

4. Method according to claim 1, 2 or 3, wherein an area of the body to be examined (9), parallel to the axis of rotation (19), is irradiated or illuminated in one or more control pulses of the source (11,11a,11b) and the following supplementary stages are carried out with the help of the suitably programmed computer (27):

(6) recording the data resulting from the conversion of the detected intensities in the whole of the irradiated or illuminated area of the detector (13,13a,13b);
(7) selecting, from among the recorded data, those that are derived from the conversion of the detected intensities in the band (75) of the irradiated or illuminated area of the detector (13) for the first and the second angle of rotation, or in the first (75a) and the second (75b) band respectively of the first (13a) and the second (13b) detector; and

- carrying out stages (1) to (5) starting from these selected data.

5. Method according to claim 4, wherein a large or the total area of the body to be examined (9) is irradiated or illuminated by the source (11, 11a, 11b) so as to project a conical (71) or pyramidal (73) beam and, the following supplementary stages are carried out with the help of the suitably programmed computer (27):

(8) the selected data are corrected by multiplying them by a correction factor depending on the one hand on the distance (D) between the geometrical vertex (S) of the conical beam (71) or pyramidal beam (73) and the detector (13,13a,13b) in the axial direction of the beam (10), and on the other hand on the distance (Ds) between the geometrical vertex (S) and an elementary segment (75,75a,75b) of the band of the irradiated or illuminated area of the detector (13,13a,13b), this correction corresponding to a virtual enlargement of the object to be examined along the axis of rotation (19); and

- stages (1) to (5) are carried out using the selected and corrected data.

6. Apparatus specifically designed for the implementation of a method according to claims 1, 2 or 4, in particular in the case where the body to be examined is the body of an individual, comprising:

- a support (31,34; 32) to receive a body to be examined (9),
- a source (11,11a,11b) emitting a beam of X-rays or light rays in a propagation direction to irradiate or illuminate the body to be examined (3),
- a detector (13,13a,13b) irradiated or illuminated by the beam, to detect an intensity attenuated according to the passage of the X-rays or light rays through the body to be examined (9), wherein,

the support (31,34;32) comprises a plate (31) rotating with respect to the source (11,11a,11b) and the detector (13,13a,13b) about a vertical axis of rotation (19) so the individual is accommodated in a standing or sitting position by the support,
and the support (31,34;32) and the rotating plate (31) are arranged in a cabin (16,42,37,38,25) that is impermeable to X-rays there inside the source (11,11a,11b) or the detector (13,13a,13b) emits or receives the X-rays through a junction module (12,12a,12b,14,14a,14b) that can be moved vertically with the help of vertical displacement means (23) so as to be displaced with respect to a window (41) formed in a wall (37,38) of the cabin, and that can be moved horizontally with the help of horizontal displacement means (26) so that it can be moved through the window (41) and into the cabin.

7. Apparatus according to claim 6, **characterised in that** the plate (31) is provided with means (46) for immobilising the individual or with an armchair (34) that is transparent to the X-rays, the armchair (34) being preferably mounted on a telescopic leg (33).

8. Apparatus according to claim 6 or 7, wherein the source (11,11a,11b) and the detector (13,13a,13b) can be moved vertically with respect to the junction module (12,12a,12b,14,14a,14b) with the help of vertical displacement means (44,47,49) controlled in a synchronous manner.

9. Apparatus according to claim 8, wherein sliding panels (38) are raised as a group in gantry supports (37) of the cabin by lifting means (44,47,49,36,39) so as to open an aperture forming the window (41) through which the junction modules (12,12a,12b,14,14a,14b) are moved horizontally so as to enter the cabin.

10. Apparatus specifically designed for the implementation of a method according to claim 3, in particular in the case where the body to be examined is the body of an individual, wherein the source and the detector are split into two sources (11a,11b) and two detectors (13a,13b) so as to form two X-ray beams or light beams that preferably propagate in two orthogonal directions (10a,10b) so as to irradiate or illuminate respectively two bands (75a,75b) of the two detectors (13a,13b) which extend in a plane perpendicular to the axis of rotation (19) thus defining the sectional plane of the body to be examined.

11. Apparatus specifically designed for the implementation of a method according to claim 5, in particular in the case where the body to be examined is of a millimetre or microscopic size, comprising:

- a support (33) to receive a body to be examined (9),
- a source (11,11a,11b) emitting a beam of X-rays or light rays in a propagation direction to irradiate or illuminate the body to be examined (3),
- a detector (13,13a,13b) irradiated or illuminated by the beam, to detect an intensity attenuated according to the passage of the X-rays or light rays through the body to be examined (9), wherein
- the support (33) on the one hand is mobile about an axis of rotation (19) with respect to both the source (11,11a,11b) and the detector (13,13a,13b) on the other hand are mobile and in which,
- a projection means (69) is provided so that the source (11,11a,11b) irradiates or illuminates the detector (13,13a,13b) with a conical (71) or pyramidal beam (73) centred on the axial direction of the beam (10).

12. Apparatus according to claim 11, in which the source (11,11a,11b) comprises a rotating anode (89) provided with a plurality of focuses (91) and is controlled in rotation by a displacement means (M) synchronised (93) with the rotation of the support (33) with respect to the source (11,11 a,11 b) so that each pulse of the source irradiates or illuminates the detector (13,13a,13b) between each rotation of the support (33).

13. Apparatus according to one of the claims 6 to 12, in which the detector (13,13a,13b) comprises a photographic film (97) and the analogue-digital converter (15) comprises a camera for reading the intensities detected on the photographic film and converting them into digital data.

14. Apparatus according to claim 13, in which the photographic film (97) is moved in an irregular, stop-start manner by a displacement means (M) synchronised (96) with the rotation of the rotating anode (89) so that each pulse of the source (11) irradiates or illuminates the photographic film (97) between each stop-start movement.

15. Computer programmed to carry out a method according to one of the claims 1 to 5.

16. Computer program with the help of which a method according to one of the claims 1 to 5 is carried out when loaded in a computer (13).

**Patentansprüche**

1. Röntgen -oder infrarot bildgebendes Verfahren, worin ein überprüft zu werden Körper (9) auf einer Unterstützung (1,3,5,7 ;31,34 ;30 ;32 ;33) steht und worin,

- der Körper (9), mittels einer Quelle (11) bestrahlt oder beleuchtet wird, die Röntgenstrahlen oder Lichtstrahlen in einer Fortpflanzungsrichtung (10) ausstrahlt,
- eine beim Durchgang der Röntgenstrahlen oder Lichtstrahlen durch den Körper (9) geschwächte Intensität, mittels eines von den Röntgenstrahlen oder Lichtstrahlen bestrahlten oder beleuchteten Detektor (13) registriert wird,
- die registrierten Intensitäten, mittels eines analog-digitalen Konverters (15) in Daten konvertiert werden, um eine Schwächung der Röntgenstrahlen oder Lichtstrahlen beim Durchgang durch den Körper zu bestimmen,
- die Quelle (11) und der Detektor (13) an einem Stand (21,23,25) angebracht sind und die Unterstützung (1-7 ; 31,34) bezüglich der Quelle (5) und des Detektors (13) in einem Rotationswinkel bezüglich einer Rotationsachse (19) gedreht wird, oder die Quelle (11) und der Detektor (13) an einem drehbaren Stand (22) angebracht sind und bezüglich der Unterstützung (30,32) in einem Rotationswinkel bezüglich einer Rotationsachse gedreht werden, und

- die folgenden Schritten mittels eines ordnungsgemäß programmierten Computers (13) durchgeführt werden:

(1) den Mittelwert der Daten auszurechen, die von der Konvertierung der in einem Streifen (75) des Detektors (13) registrierten Intensitäten kommen, für einen ersten Rotationswinkel, um in n grundlegenden Segmenten (76) des Streifens n Mittelwerten ($c_i$) zu erhalten, und den Mittelwert der Daten auszurechen, die von der Konvertierung der in dem Streifen (75) des Detektors (13) registrierten Intensitäten kommen, für einen zweiten Rotationswinkel, der vorzugsweise senkrecht auf dem ersten Rotationswinkel ist, um in m grundlegenden Segmenten (76) des Streifens m Mittelwerten ($\rho_j$) zu erhalten, wobei die n und m grundlegenden Segmenten ein Rasterfeld von n x m grundlegenden Bereichen einer senkrecht auf der Rotationsachse (19) stehenden Schnittfläche (P) des Körpers (9) bilden, und wobei die n und m Mittelwerte, die Koordinaten ($c_i$) und ($\rho_j$) einem Spalte erzeugenden Vektor und einem Zeile erzeugenden Vektor beziehungsweise sind,

(2) eine initiale Matrix (n, m) mit den Koordinaten der zwei erzeugenden Vektoren so zu erstellen, dass jedem grundlegenden Bereich eine Zeile und Spalte Koordinate (Bij) entspricht, die einen Schwächungskoeffizient darstellt und der halben Summe der homologen Koordinate ($c_i$) des Spalte Vektors, geteilt durch die Zahl (m) der Zeile Vektor Koordinaten und der homologen Koordinate ($\rho_j$) des Zeile Vektors, geteilt durch die Zahl (n) der Spalte Vektor Koordinaten gleich ist,

(3) den Schwächungskoeffizient jedes grundlegenden Bereichs, durch eine Methode der kleinsten Quadraten, durch zu berücksichtigenden Zeile und Spalte Randwerten, die der Summe der Koordinaten (Bij) auf jeder Zeile beziehungsweise Spalte der initialen Matrix gleich sind, durch die als Zeile order Spalte Zwänge betrachteten erzeugenden Vektoren und mittels der folgenden Formel anzugleichen:

$$C_{ij} = B_{ij} + \left(\frac{1}{n}\right) * \left(\rho_j - \sum_1^n Bij\right) + \left(\frac{1}{m}\right) * \left(c_i - \sum_{j=1}^m Bij\right)$$

wo, in dieser Formel,

$C_{ij}$ = der gewünschte Wert
$B_{ij}$ = der initiale abgeschätzte Wert
(n) = die Zahl der Zeilen der initialen Matrix
(m) = die Zahl der Spalten der initialen Matrix

$$\sum_{i=1}^n Cij = \rho_j \text{ für die gesamten Werten i, der Zwang der Spalte j}$$

$$\sum_{j=1}^m Cij = c_i \text{ für die gesamten Werten j, der Zwang der Zeile i,}$$

um eine angeglichene Matrix zu erhalten, deren mit den angeglichenen Werten ($C_{ij}$) berechneten Zeile und Spalte Randwerten, den Koordinaten der Zeile und Spalte erzeugenden Vektoren für jede Zeile und jede Spalte gleich sind,

(4) Schritte (1) bis (3) mit den Daten zu wiederholen, die für unterschiedliche Paare Rotationswinkel ermittelt worden sind und,

(5) die für die unterschiedlichen Paare Rotationswinkel ermittelten angeglichenen Matrizen mittels eines Rotationsoperators zu verarbeiten, um alle Matrizen auf einem gleichen Paar Rotationswinkel (0°-90°) übereinanderzulegen, und dann den Mittelwert der angeglichenen und übereinandergelegten Matrizen zu berechnen um eine Synthesematrix zu erhalten, die einem Bild der Schwächungskoeffizienten des Körpers (9) entspricht, dessen Definition von dem Rasterfeld bestimmt ist.

2. Röntgen -oder infrarot bildgebendes Verfahren nach Anspruch 1, worin:

- der erste Schritt (1) für vier Paare Rotationswinkel durchgeführt wird, die vorzugweise senkrecht sind (0°-90°; 90°-180°; 180°-270°; 270°-360°), um vier Spalte erzeugende Vektoren zu bilden, jedes von ihnen mit n Mittelwerte, die als Koordinaten gelten und die für den erste Rotationswinkel (0° ; 90°; 180°, 270°) jedes von den vier Paare Winkel ermittelt werden, und vier Zeile erzeugende Vektoren zu bilden, jedes von ihnen mit m Mittelwerte, die als Koordinaten gelten und die für den zweite Rotationswinkel jedes von den vier Paare Winkel ermittelt werden (90°; 180°; 270°; 360°),

- die vier Spalte erzeugenden Vektoren und die vier Zeile erzeugenden Vektoren von einem Rotationsoperator verarbeitet werden, um sie auf einem gleichen Paar Rotationswinkel (0°-90°) übereinanderzulegen und dann der punkt für punkt Mittelwert der homologen Koordinaten der auf das gleiche Paar Rotationswinkel übereinandergelegten Spalte und Zeile Vektoren angerechnet wird, um einen reduzierten Spalte erzeugenden Vektor und einen reduzierten Zeile erzeugenden Vektor zu erstellen,

- der zweite Schritt (2) mit den Koordinaten der reduzierten Spalte erzeugenden Vektor und der reduzierten Zeile erzeugenden Vektor durchgeführt wird,

- der dritte Schritt (3) durchgeführt wird, um eine angeglichene Matrix zu erhalten, deren mit den angeglichenen Werten (Cij) berechneten Zeile und Spalte Randwerten, den Koordinaten der reduzierten Zeile und Spalte erzeugenden Vektoren für jede Zeile und jede Spalte gleich sind,

- die Schritte vier (4) und fünf (5) für verschiedene Gruppen von vier Paaren Rotationswinkel durchgeführt werden, die bezüglich auf die Rotationswinkel der der ersten Gruppe zugehörenden Paare um ein Vielfaches von einem Referenzwinkel (10°) verschoben sind.

3. Röntgen -oder infrarot bildgebendes Verfahren nach Anspruch 1 oder 2, worin, die Unterstützung zwei Quellen (11a,11b), die einen ersten und einen zweiten Röntgenstrahlen oder Lichtstrahlen beziehungsweise in einer ersten und einer zweiter Fortpflanzungsrichtungen (10) ausstrahlen, die vorzugweise senkrecht aufeinander stehen, und auch zwei von dem ersten und dem zweiten Strahlen bestrahlte oder beleuchtete Detektoren (13a,13b) aufweist, und,

- mittels des ordnungsgemäß programmierten Computers (13) :
- beim Schritt (1), der Mittelwert der Daten, die von der Konvertierung der in einem ersten Streifen (75a) des ersten Detektors (13a) registrierten Intensitäten kommen, und auch der Mittelwert der Daten, die von der Konvertierung der in einem zweiten Streifen (75b) des zweiten Detektors (13b) registrierten Intensitäten kommen, angerechnet werden, in Bezug auf die Schnittfläche (P) des Körpers, die senkrecht auf der Rotationsachse (19) steht und die die erste Streife (75a) und die zweite Streife (75b) aufweist, und
- bei den Schritten (2), (3) und (4), die von den beiden Detektoren (13a,13b) gleichzeitig detektierten Intensitäten einerseits in Betracht werden, um synchrone Bildungen zu erhalten, und die von dem einem oder dem anderen der beiden Detektoren detektierten Intensitäten andererseits in Betracht werden, um asynchrone Bildungen zu erhalten.

4. Verfahren nach Anspruch 1, 2 oder 3, worin ein parallel zu der Rotationsachse (19) Bereich des überprüft zu werden Körpers bestrahlt oder beleuchtet wird, mittels eines oder mehrerer Steuerimpulse der Quelle (11,11a,11b), und

- mittels des ordnungsgemäß programmierten Computers (13):

(6) Daten zu registrieren, die von der Konvertierung der Intensitäten kommen, die im Ganzen des bestrahlten oder beleuchteten Bereichs des Detektors (13,13a,13b) detektiert werden,
(7) die registrierten Daten aufzurufen, die von der Konvertierung der Intensitäten kommen, die im Streifen (75) des bestrahlten oder beleuchteten Bereichs des Detektors (13) für den ersten und den zweiten Rotationswinkel oder im ersten (75a) und zweiten Streifen (75b) beziehungsweise des ersten (13a) und zweiten Detektors (13b) detektiert werden, und

- Schritte (1) bis (5) mit den aufgerufenen Daten durchzuführen.

5. Verfahren nach Anspruch 4, worin die Quelle (11,11a,11b) einen konischen (71) oder pyramidenförmigen (73) Strahl projiziert um das Bereich des Körpers (9), gegebenenfalls den Körper (9) im Ganze, zu bestrahlen oder zu beleuchten und,

- mittels des ordnungsgemäß programmierten Computers (27):

(8) die aufgerufene Daten, durch einen Korrekturfaktor multipliziert werden, um sie zu berichtigen, worin der Korrekturfaktor einerseits auf dem Abstand (D) zwischen dem geometrischen Gipfel (S) des konischen (71) oder pyramidenförmigen (73) Strahles und dem Detektor (13,13a, 13b) in der axialen Richtung des Strahles (10) und anderseits auf dem Abstand (D) zwischen dem geometrischen Gipfel (S) und einem grundlegenden Segment (75,75a,75b) des Streifens des bestrahlten oder beleuchteten Bereichs des Detektors (13,13a,13b) abhängt, und worin diese Berichtigung einer virtuellen Vergrößerung des überprüft zu werden Gegenstandes entlang der Rotationsachse (19) entspricht, und

- Schritte (1) bis (5) mit den aufgerufenen und berichtigten Daten durchgeführt werden.

6. Vorrichtung besonders bestimmt für die Anwendung eines Verfahrens nach Anspruch 1, 2 oder 4, insbesondere im Fall in dem der überprüft zu werden Körper der Körper einer Einzelperson ist, mit:

- einer Unterstützung (31,34;32), um einen überprüft zu werden Körper (9) unterbringen zu können,
- einer Quelle (11,11a,11b), die Röntgenstrahlen oder Lichtstrahlen in einer Fortpflanzungsrichtung ausstrahlt, um den Körper (3) zu bestrahlen oder zu beleuchten,
- einem von den Röntgenstrahlen oder Lichtstrahlen bestrahlten oder beleuchteten Detektor (13,13a,13b), um eine beim Durchgang der Röntgenstrahlen oder Lichtstrahlen durch den Körper (9) geschwächte Intensität zu registrieren,

worin,
die Unterstützung (31,34;32) eine Platte (31) enthält, die in Bezug auf die Quelle (11,11a,11b) und den Detektor (13,13a,13b) um einer vertikalen Rotationsachse (19) dreht, um die Einzelperson in einer Stellung- oder Setzungsposition auf die Unterstützung unterzubringen,
und die Unterstützung (31,34;32) und die drehende Platte (31) in einer Kabine (16,42,37,38,25) angeordnet werden, die die Röntgenstrahlen absorbiert und worin die Quelle (11,11a,11b) oder der Detektor (13,13a,13b) die Röntgenstrahlen durch ein Verbindungselement (12,12a,12b,14,14a,14b) ausstrahlt oder empfängt, das mittels vertikaler Bewegung Vorrichtungen (23) vertikal verschoben werden kann, um bevor ein Fenster (41) verschoben zu werden, das in einer Wand (37,38) der Kabine gebildet ist und mittels horizontaler Bewegung Vorrichtungen (26) horizontal verschoben werden kann, um durch das Fenster (41) verschoben zu werden und in die Kabine zu münden.

7. Vorrichtung nach Anspruch 6, **dadurch gekennzeichnet, dass** die Platte (31) ein Mittel (46) für das Stillstellen der Einzelperson oder einen Lehnsessel (34), der zu den Röntgenstrahlen transparent ist und vorzugsweise an einem teleskopischen Bein (33) angebracht wird, aufweist.

8. Vorrichtung nach Anspruch 6 oder 7, worin die Quelle (11,11a,11b) und der Detektor (13,13a,13b) in Bezug auf die Verbindungselemente (12,12a,12b,14,14a,14b) mittels vertikaler Bewegung Vorrichtungen (44,47,49), die synchron gesteuert werden, vertikal verschoben werden können.

9. Vorrichtung nach Anspruch 8, worin Schiebeplatte (38) in Bockunterstützungen (37) der Kabine von Anhebung Vorrichtungen (44,47,49,36,39) von Gruppe angehoben werden um eine Öffnung zu öffnen, die das Fenster (41) bildet durch das die Verbindungselemente (12,12a,12b,14,14a,14b) horizontal verschoben werden, um in die Kabine zu münden.

10. Vorrichtung, besonders bestimmt für die Anwendung eines Verfahrens nach Anspruch 3, insbesondere im Fall in dem der überprüft zu werden Körper der Körper einer Einzelperson ist, worin die Quelle und der Detektor in zwei Quellen (11a,11b) und in zwei Detektoren (13a, 13b) aufgespalten sind um zwei Röntgenstrahlen oder Lichtstrahlen zu bilden, die vorzugsweise in zwei senkrechten Richtungen (10a, 10b) fortpflanzen, um beziehungsweise zwei Streifen (75a, 75b) der zwei Detektoren (13a, 13b) zu bestrahlen oder zu beleuchten, die sich in einer auf der Rotationsachse (19) senkrechten Ebene erstrecken und die Schnittfläche des überprüft zu werden Körpers definieren.

11. Vorrichtung, besonders bestimmt für die Anwendung eines Verfahrens nach Anspruch 5, insbesondere im Fall, in dem der überprüft zu werden Körper eine Millimeter oder mikroskopische Größe enthielt, mit:

- einer Unterstützung (33), um einen überprüft zu werden Körper (9) unterbringen zu können,
- einer Quelle (11,11a,11b), die Röntgenstrahlen oder Lichtstrahlen in einer Fortpflanzungsrichtung (10) ausstrahlt, um den Körper (9) zu bestrahlen oder zu beleuchten,
- einem von den Röntgenstrahlen oder Lichtstrahlen bestrahlten oder beleuchteten Detektor (13,13a,13b), um eine beim Durchgang der Röntgenstrahlen oder Lichtstrahlen durch den Körper (9) geschwächte Intensität zu registrieren, und worin,
- die Unterstützung (33) einerseits, in Bezug auf die Quelle (11,11a,11b) und den Detektor (13,13a, 13b) anderseits, über einer Rotationsachse (19) beweglich ist, und

- eine Projektion Vorrichtung (69) vorgesehen ist um der Quelle (11,11a,11b) es zu erlauben, den Detektor (13,13a,13b) mit einem konischen (71) oder pyramidenförmigen Strahl (73), der zentriert auf der axialen Richtung des Strahles (10) ist, ausstrahlen oder beleuchten.

12. Vorrichtung nach Anspruch 11, worin, die Quelle (11,11 a,11 b) eine drehende Anode (89) aufweist, die mehrere Fokusse (91) enthält und die von einer Bewegung Vorrichtung (M) drehbar gesteuert wird, die mit der Umdrehung der Unterstützung (33) bezüglich auf die Quelle (11,11a,11b) synchronisiert ist um den Detektor (13,13a,13b) mittels jedes Impulses der Quelle zwischen jede Umdrehung der Unterstützung (33) auszustrahlen oder zu beleuchten.

13. Vorrichtung nach einer den Ansprüchen 6 bis 12, worin der Detektor (13,13a,13b) einen fotographischen Film (97) enthält und der analog-digitale Konverter (15) eine Kamera für das Ablesen der detektierten Intensitäten auf dem fotographischen Film und für das Umwandeln dieser in digitalen Daten enthält.

14. Vorrichtung nach Anspruch 13, worin der fotographische Film (97) von einer Bewegung Vorrichtung (M), die mit der Umdrehung der drehende Anode (89) synchronisiert ist, unregelmäßig verschoben wird, um den fotographische Film (97) mittels jedes Impulses der Quelle (11) zwischen jede unregelmäßige Bewegung auszustrahlen oder zu beleuchten.

15. Computer das ordnungsgemäß programmiert ist, um ein Verfahren nach einer den Ansprüchen 1 bis 5 durchzuführen.

16. Computerprogramm um ein Verfahren nach einem von Ansprüchen 1 bis 5 durchzuführen wenn es in einem Computer (13) eingeladen ist.

Fig. 1

EP 1 902 423 B1

Fig. 2

Fig. 3a (0°)

Fig. 3b (90°)

Fig. 3c (180°)

Fig. 3d (270°)

**coupe 0°**

| position | moyen | ecart t | median | val corr |
|---|---|---|---|---|
| 1 | 255 | 0,2 | 255 | 0 |
| 2 | 255 | 0,2 | 255 | 0 |
| 3 | 254,9 | 1,4 | 255 | 0,1 |
| 4 | 254 | 3,7 | 255 | 1 |
| 5 | 252 | 6,4 | 255 | 3 |
| 6 | 247,7 | 9,2 | 253 | 7,3 |
| 7 | 240,1 | 11,3 | 239 | 14,9 |
| 8 | 232,4 | 11,5 | 231 | 22,8 |
| 9 | 203,3 | 24,7 | 206 | 61,7 |
| 10 | 167,9 | 15,4 | 168 | 87,1 |
| 11 | 176,3 | 15,2 | 177 | 78,7 |
| 12 | 182,2 | 14,9 | 183 | 72,8 |
| 13 | 182 | 15,4 | 183 | 73 |
| 14 | 187,8 | 14,7 | 188 | 67,2 |
| 15 | 195,1 | 13,8 | 198 | 69,8 |
| 16 | 204,4 | 14,4 | 206 | 60,6 |
| 17 | 221,2 | 13,9 | 221 | 33,8 |
| 18 | 224,9 | 12,9 | 225 | 30,1 |
| 19 | 226 | 13,2 | 226 | 28 |
| 20 | 219,9 | 12,6 | 219 | 35,1 |
| 21 | 220,6 | 11,9 | 220 | 34,4 |
| 22 | 217,1 | 12 | 217 | 37,8 |
| 23 | 212,7 | 11,8 | 213 | 42,3 |
| 24 | 204,6 | 12,5 | 206 | 50,4 |
| 25 | 200,9 | 13,4 | 201 | 64,1 |
| 26 | 228,7 | 17,4 | 228 | 28,3 |
| 27 | 250,3 | 7,8 | 255 | 4,7 |
| 28 | 251,4 | 6,9 | 255 | 3,8 |
| 29 | 250,4 | 7,6 | 255 | 5,8 |
| 30 | 249,2 | 8,5 | 255 | 5,8 |
| 31 | 250,5 | 7,9 | 255 | 4,5 |
| | | | | 987 |

**coupe 90°**

| position | moyen | ecart t | median | val c |
|---|---|---|---|---|
| 1 | 255 | 0,3 | 255 | 0 |
| 2 | 255 | 0,1 | 255 | 0 |
| 3 | 254,9 | 1 | 255 | 0,1 |
| 4 | 254,6 | 2,4 | 255 | 0,4 |
| 5 | 254,5 | 2,7 | 255 | 0,5 |
| 6 | 254,4 | 2,9 | 255 | 0,6 |
| 7 | 254,2 | 3,5 | 255 | 0,8 |
| 8 | 253,9 | 3,9 | 255 | 1,1 |
| 9 | 253,7 | 4,3 | 255 | 1,3 |
| 10 | 253,2 | 5,1 | 255 | 1,8 |
| 11 | 247,5 | 9,9 | 200 | 7,6 |
| 12 | 201,4 | 23 | 183 | 64 |
| 13 | 181,9 | 14,9 | 195 | 73 |
| 14 | 193,5 | 15,2 | 196 | 62 |
| 15 | 195,8 | 13,5 | 193 | 59 |
| 16 | 193,7 | 13,9 | 193 | 61 |
| 17 | 199,4 | 13,7 | 200 | 66 |
| 18 | 200,4 | 13,3 | 201 | 65 |
| 19 | 192,3 | 15,8 | 192 | 63 |
| 20 | 182,4 | 14,8 | 183 | 73 |
| 21 | 177,8 | 14,2 | 178 | 77 |
| 22 | 182,9 | 15,1 | 184 | 72 |
| 23 | 193,8 | 13 | 193 | 61 |
| 24 | 196,1 | 12,7 | 196 | 59 |
| 25 | 205,2 | 17,5 | 205 | 60 |
| 26 | 248,2 | 10,6 | 255 | 6,8 |
| 27 | 253,5 | 4,6 | 255 | 1,5 |
| 28 | 254,2 | 3,4 | 255 | 0,8 |
| 29 | 254,5 | 2,6 | 255 | 0,6 |
| 30 | 254,5 | 2,7 | 255 | 0,5 |
| 31 | 254,5 | 2,5 | 255 | 0,5 |
| | | | | 898 |

**coupe 180°**

| position | moyen | ecart t | median | val corr |
|---|---|---|---|---|
| 1 | 255 | 0 | 255 | 0 |
| 2 | 223,2 | 11 | 221 | 31,8 |
| 3 | 233 | 7,7 | 233 | 22 |
| 4 | 243,6 | 5,8 | 244 | 11,4 |
| 5 | 242,4 | 5,8 | 243 | 12,6 |
| 6 | 241,2 | 6 | 241 | 13,8 |
| 7 | 240,9 | 5,8 | 241 | 14,1 |
| 8 | 237,3 | 6,3 | 237 | 17,7 |
| 9 | 229,9 | 7,6 | 230 | 25,1 |
| 10 | 217,2 | 8,6 | 217 | 37,8 |
| 11 | 201,5 | 8,6 | 202 | 53,6 |
| 12 | 197,3 | 8,2 | 198 | 57,7 |
| 13 | 199,5 | 8,3 | 200 | 55,6 |
| 14 | 198,1 | 8,6 | 199 | 56,9 |
| 15 | 186,7 | 9 | 187 | 68,3 |
| 16 | 199,9 | 18 | 194 | 55,1 |
| 17 | 244,5 | 6,1 | 245 | 10,5 |
| 18 | 249,9 | 5,2 | 251 | 5,1 |
| 19 | 254 | 2,2 | 255 | 1 |
| 20 | 254,9 | 0,7 | 255 | 0,1 |
| 21 | 255 | 0,2 | 255 | 0 |
| 22 | 255 | 0,1 | 255 | 0 |
| 23 | 255 | 0 | 255 | 0 |
| 24 | 255 | 0 | 255 | 0 |
| 25 | 255 | 0 | 255 | 0 |
| 26 | 255 | 0 | 255 | 0 |
| 27 | 255 | 0 | 255 | 0 |
| 28 | 255 | 0 | 255 | 0 |
| 29 | 255 | 0 | 255 | 0 |
| 30 | 255 | 0 | 255 | 0 |
| 31 | 255 | 0 | 255 | 0 |
| | | | | 550 |

**coupe 270°**

| position | moyen | ecart t | median | val corr |
|---|---|---|---|---|
| 1 | 233,6 | 8,5 | 233 | 21,4 |
| 2 | 228 | 7,1 | 229 | 27 |
| 3 | 220,8 | 9,5 | 221 | 34,2 |
| 4 | 202,5 | 9,6 | 203 | 52,5 |
| 5 | 201,6 | 9 | 201 | 53,4 |
| 6 | 193,5 | 10,4 | 193 | 61,5 |
| 7 | 179,7 | 9,8 | 180 | 76,3 |
| 8 | 170,4 | 8,6 | 170 | 84,8 |
| 9 | 164,6 | 9,4 | 165 | 90,4 |
| 10 | 162,8 | 8,6 | 163 | 92,2 |
| 11 | 183,7 | 8,6 | 184 | 91,3 |
| 12 | 165,8 | 9 | 166 | 89,2 |
| 13 | 173,1 | 8,2 | 173 | 81,9 |
| 14 | 177 | 8,9 | 177 | 78 |
| 15 | 175,1 | 8,9 | 175 | 79,9 |
| 16 | 171,6 | 9,4 | 171 | 83,4 |
| 17 | 163,3 | 8,9 | 183 | 91,7 |
| 18 | 157,1 | 9,4 | 158 | 97,9 |
| 19 | 156,2 | 9,8 | 156 | 98,8 |
| 20 | 168,3 | 9,9 | 168 | 86,7 |
| 21 | 190,7 | 11,9 | 191 | 64,3 |
| 22 | 208,6 | 10,7 | 209 | 46,4 |
| 23 | 225,6 | 7,6 | 228 | 29,4 |
| 24 | 231,8 | 7,5 | 232 | 23,2 |
| 25 | 233,7 | 7,5 | 234 | 21,3 |
| 26 | 237,1 | 6,9 | 237 | 17,9 |
| 27 | 244,2 | 8,6 | 244 | 10,8 |
| 28 | 248,7 | 4,9 | 251 | 6,3 |
| 29 | 252,2 | 3,6 | 254 | 2,8 |
| 30 | 253,8 | 1,8 | 255 | 1,2 |
| 31 | 253,8 | 1,7 | 255 | 1,2 |
| | | | | 1695 |

| (résultat) | 0° | | 90° | | 180° | | 270° | |
|---|---|---|---|---|---|---|---|---|
| 5,35 | 1,0465535 | 0,105 | 1,15 | 0 | 1,9 | 0 | 0,6 | 13,03 |
| 14,7 | 1,0465535 | 1,047 | 1,15 | 0,115 | 1,9 | 0 | 0,6 | 16,49 |
| 14,1 | 1,0465535 | 3,14 | 1,15 | 0,46 | 1,9 | 59,69 | 0,6 | 20,83 |
| 16,325 | 1,0465535 | 7,84 | 1,15 | 0,575 | 1,9 | 41,3 | 0,6 | 31,98 |
| 17,375 | 1,0465535 | 15,59 | 1,15 | 0,69 | 1,9 | 21,4 | 0,6 | 32,63 |
| 20,8 | 1,0465535 | 23,65 | 1,15 | 0,92 | 1,9 | 23,65 | 0,6 | 37,48 |
| 26,275 | 1,0465535 | 54,11 | 1,15 | 1,265 | 1,9 | 25,9 | 0,6 | 46,87 |
| 31,5 | 1,0465535 | 81,16 | 1,15 | 1,496 | 1,9 | 28,47 | 0,6 | 51,53 |
| 42,125 | 1,0465535 | 82,36 | 1,15 | 8,623 | 1,9 | 33,23 | 0,6 | 61,53 |
| 54,725 | 1,0465535 | 76,19 | 1,15 | 61,62 | 1,9 | 47,12 | 0,6 | 65,06 |
| 67,76 | 1,0465535 | 78,4 | 1,15 | 84,04 | 1,9 | 70,96 | 0,6 | 66,18 |
| 68,325 | 1,0465535 | 70,33 | 1,15 | 70,71 | 1,9 | 100,4 | 0,6 | 65,61 |
| 70,875 | 1,0465535 | 62,69 | 1,15 | 68,08 | 1,9 | 108,3 | 0,6 | 54,33 |
| 65,9 | 1,0465535 | 52,96 | 1,15 | 70,48 | 1,9 | 104,2 | 0,6 | 49,89 |
| 66,825 | 1,0465535 | 35,37 | 1,15 | 63,92 | 1,9 | 106,8 | 0,6 | 47,61 |
| 62,6 | 1,0465535 | 31,8 | 1,15 | 62,77 | 1,9 | 128,2 | 0,6 | 48,87 |
| 47,9 | 1,0465535 | 30,35 | 1,15 | 72,09 | 1,9 | 103,4 | 0,6 | 50,8 |
| 49,925 | 1,0465535 | 38,73 | 1,15 | 83,47 | 1,9 | 19,71 | 0,6 | 55,85 |
| 47,875 | 1,0465535 | 36 | 1,15 | 88,78 | 1,9 | 9,573 | 0,6 | 59,83 |
| 49,625 | 1,0465535 | 39,96 | 1,15 | 82,89 | 1,9 | 1,677 | 0,6 | 60,18 |
| 43,976 | 1,0465535 | 44,27 | 1,15 | 70,36 | 1,8 | 0,188 | 0,6 | 62,81 |
| 39,1 | 1,0465535 | 52,76 | 1,15 | 87,72 | 1,9 | | 0,6 | 39,17 |
| 33,226 | 1,0465535 | 69,62 | 1,15 | 57,25 | 1,9 | 0 | 0,6 | 28,28 |
| 33,126 | 1,0465535 | 27,62 | 1,15 | 7,818 | 1,9 | 0 | 0,6 | 17,91 |
| 31,3 | 1,0465535 | 4,919 | 1,15 | 1,726 | 1,9 | 0 | 0,6 | 14,13 |
| 12,76 | 1,0465535 | 3,766 | 1,15 | 0,92 | 1,9 | 0 | 0,6 | 12,97 |
| 4,25 | 1,0465535 | 6,07 | 1,15 | 0,575 | 1,9 | 0 | 0,6 | 10,9 |
| 2,425 | 1,0465535 | 4,814 | 1,15 | 0,576 | 1,9 | 0 | 0,6 | 6,678 |
| 1,875 | 1,0465535 | 7,818 | 1,15 | 0,576 | 1,9 | 0 | 0,6 | 3,228 |
| 1,875 | 1,0465535 | 6,07 | 1,15 | 0,576 | 1,9 | 0 | 0,6 | 1,705 |
| 1,65 | 1,0465535 | 4,709 | 1,15 | 0,576 | 1,9 | 0 | 0,6 | 0,731 |
| 1032,425 | 1032 | | 1032 | 1033 | 1032 | | 1032 | |

VAL CORR · VAL CORR · VAL CORR · VAL CORR

Fig. 4

Fig. 5

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| -1.074 | -1.074 | -1.071 | -1.041 | -0.973 | -0.828 | -0.571 | -0.311 | 0.6709 | 1.866 | 1.5825 | 1.3833 | 1.39 | 1.1942 | 0.9478 | 0.6338 | 0.0668 | -0.058 | -0.095 | 0.1105 | 0.0869 | 0.2051 | 0.3538 | 0.6271 | 0.752 | -0.187 | -0.916 | -0.953 | -0.919 | -0.879 | -0.923 | -0.004 |
| -1.074 | -1.074 | -1.071 | -1.041 | -0.973 | -0.828 | -0.571 | -0.311 | 0.6709 | 1.866 | 1.5825 | 1.3833 | 1.39 | 1.1942 | 0.9478 | 0.6338 | 0.0668 | -0.058 | -0.095 | 0.1105 | 0.0869 | 0.2051 | 0.3538 | 0.6271 | 0.752 | -0.187 | -0.916 | -0.953 | -0.919 | -0.879 | -0.923 | -0.004 |
| -1.071 | -1.071 | -1.067 | -1.037 | -0.969 | -0.824 | -0.568 | -0.308 | 0.6746 | 1.8697 | 1.5882 | 1.387 | 1.3937 | 1.1979 | 0.9515 | 0.6375 | 0.0703 | -0.055 | -0.092 | 0.1142 | 0.0906 | 0.2086 | 0.3573 | 0.6308 | 0.7557 | -0.183 | -0.912 | -0.849 | -0.915 | -0.875 | -0.919 | 0.1113 |
| -1.06 | -1.06 | -1.056 | -1.026 | -0.958 | -0.813 | -0.557 | -0.297 | 0.6858 | 1.8809 | 1.5973 | 1.3981 | 1.4049 | 1.209 | 0.9626 | 0.6486 | 0.0815 | -0.043 | -0.081 | 0.1254 | 0.1017 | 0.2199 | 0.3684 | 0.6419 | 0.7688 | -0.172 | -0.901 | -0.838 | -0.904 | -0.864 | -0.808 | 0.4592 |
| -1.056 | -1.056 | -1.053 | -1.022 | -0.955 | -0.809 | -0.553 | -0.293 | 0.6895 | 1.8846 | 1.601 | 1.4018 | 1.4086 | 1.2128 | 0.9663 | 0.6523 | 0.0852 | -0.04 | -0.077 | 0.1291 | 0.1054 | 0.2238 | 0.3721 | 0.6456 | 0.7705 | -0.168 | -0.897 | -0.834 | -0.901 | -0.88 | -0.904 | 0.5711 |
| -1.052 | -1.052 | -1.049 | -1.018 | -0.951 | -0.806 | -0.549 | -0.289 | 0.6932 | 1.8883 | 1.6047 | 1.4055 | 1.4123 | 1.2165 | 0.97 | 0.6561 | 0.0889 | -0.038 | -0.073 | 0.1328 | 0.1091 | 0.2273 | 0.3758 | 0.6493 | 0.7742 | -0.164 | -0.894 | -0.931 | -0.897 | -0.858 | -0.9 | 0.6891 |
| -1.045 | -1.045 | -1.041 | -1.011 | -0.943 | -0.798 | -0.542 | -0.282 | 0.7006 | 1.8957 | 1.6121 | 1.4129 | 1.4197 | 1.2239 | 0.9774 | 0.6835 | 0.0963 | -0.029 | -0.068 | 0.1402 | 0.1168 | 0.2347 | 0.3833 | 0.6567 | 0.7816 | -0.157 | -0.888 | -0.923 | -0.889 | -0.849 | -0.893 | 0.816 |
| -1.034 | -1.034 | -1.03 | -1 | -0.932 | -0.787 | -0.531 | -0.271 | 0.7117 | 1.9068 | 1.6232 | 1.4241 | 1.4308 | 1.235 | 0.9888 | 0.6748 | 0.1074 | -0.017 | -0.055 | 0.1513 | 0.1277 | 0.2458 | 0.3944 | 0.6678 | 0.7928 | -0.148 | -0.875 | -0.912 | -0.878 | -0.838 | -0.882 | 1.291 |
| -1.028 | -1.026 | -1.023 | -0.992 | -0.925 | -0.78 | -0.523 | -0.263 | 0.7192 | 1.9142 | 1.8307 | 1.4315 | 1.4382 | 1.2424 | 0.896 | 0.882 | 0.1149 | -0.01 | -0.047 | 0.1587 | 0.1351 | 0.2533 | 0.4018 | 0.6753 | 0.8002 | -0.139 | -0.888 | -0.805 | -0.871 | -0.83 | -0.874 | 1.4809 |
| -1.008 | -1.008 | -1.004 | -0.974 | -0.908 | -0.781 | -0.505 | -0.245 | 0.7377 | 1.9328 | 1.8492 | 1.45 | 1.4568 | 1.261 | 1.0145 | 0.7006 | 0.1334 | 0.0085 | -0.029 | 0.1773 | 0.1538 | 0.2718 | 0.4204 | 0.6938 | 0.8187 | -0.12 | -0.849 | -0.866 | -0.852 | -0.812 | -0.858 | 2.0657 |
| -0.786 | -0.786 | -0.783 | -0.763 | -0.695 | -0.55 | -0.293 | -0.033 | 0.9491 | 2.1442 | 1.8606 | 1.6614 | 1.8682 | 1.4724 | 1.2259 | 0.812 | 0.3448 | 0.2199 | 0.1827 | 0.3887 | 0.365 | 0.4832 | 0.6317 | 0.9052 | 1.0301 | 0.0916 | -0.638 | -0.675 | -0.641 | -0.6 | -0.644 | 8.818 |
| 0.9134 | 0.9134 | 0.9168 | 0.9472 | 1.0147 | 1.1599 | 1.4184 | 1.6764 | 2.6588 | 3.8539 | 3.5703 | 3.3711 | 3.3779 | 3.1821 | 2.9358 | 2.6217 | 2.0545 | 1.9296 | 1.8924 | 2.0984 | 2.0748 | 2.1929 | 2.3415 | 2.8149 | 2.7398 | 1.8013 | 1.0721 | 1.0349 | 1.0687 | 1.1092 | 1.0853 | 61.82 |
| 1.6368 | 1.8368 | 1.64 | 1.6704 | 1.7378 | 1.8831 | 2.1396 | 2.3996 | 3.382 | 4.5771 | 4.2935 | 4.0943 | 4.1011 | 3.9053 | 3.6588 | 3.3449 | 2.7777 | 2.6528 | 2.6158 | 2.8216 | 2.7979 | 2.9161 | 3.0646 | 3.3381 | 3.463 | 2.5245 | 1.7953 | 1.7581 | 1.7919 | 1.8324 | 1.7885 | 84.038 |
| 1.2064 | 1.2064 | 1.2098 | 1.2402 | 1.3077 | 1.4528 | 1.7094 | 1.9694 | 2.9518 | 4.1469 | 3.8633 | 3.6641 | 3.8709 | 3.4751 | 3.2286 | 2.9148 | 2.3475 | 2.2226 | 2.1854 | 2.3914 | 2.3877 | 2.4859 | 2.6344 | 2.9079 | 3.0328 | 2.0943 | 1.3851 | 1.3279 | 1.3617 | 1.4022 | 1.3583 | 70.702 |
| 1.1211 | 1.1211 | 1.1245 | 1.1549 | 1.2224 | 1.3875 | 1.6241 | 1.8941 | 2.8665 | 4.0616 | 3.778 | 3.5788 | 3.5856 | 3.3898 | 3.1433 | 2.8293 | 2.2622 | 2.1001 | 2.3061 | 2.2824 | 2.4006 | 2.5491 | 2.8226 | 2.9475 | 2.009 | 1.2798 | 1.2426 | 1.2764 | 1.3169 | 1.273 | 88.056 | |
| 1.199 | 1.199 | 1.2024 | 1.2327 | 1.3003 | 1.4454 | 1.702 | 1.882 | 2.9444 | 4.1395 | 3.8559 | 3.6567 | 3.6634 | 3.4676 | 3.2212 | 2.9072 | 2.3401 | 2.2152 | 2.178 | 2.384 | 2.3603 | 2.4785 | 2.627 | 2.9005 | 3.0254 | 2.0869 | 1.3577 | 1.3205 | 1.3543 | 1.3948 | 1.3509 | 70.473 |
| 0.9876 | 0.9876 | 0.991 | 1.0213 | 1.0889 | 1.234 | 1.4906 | 1.7506 | 2.733 | 3.9281 | 3.8445 | 3.4453 | 3.4521 | 3.2562 | 3.0098 | 2.6958 | 2.1287 | 2.0038 | 1.9668 | 2.1726 | 2.1489 | 2.2671 | 2.4156 | 2.6891 | 2.814 | 1.8755 | 1.1463 | 1.1091 | 1.1429 | 1.1834 | 1.1395 | 63.919 |
| 0.8605 | 0.8605 | 0.9539 | 0.8843 | 1.0518 | 1.1969 | 1.4535 | 1.7135 | 2.6959 | 3.891 | 3.6074 | 3.4082 | 3.415 | 3.2192 | 2.9727 | 2.6587 | 2.0916 | 1.9667 | 1.9295 | 2.1355 | 2.118 | 2.23 | 2.3785 | 2.652 | 2.7769 | 1.8384 | 1.1092 | 1.072 | 1.1058 | 1.1463 | 1.1024 | 62.77 |
| 1.2509 | 1.2509 | 1.2543 | 1.2847 | 1.3522 | 1.4974 | 1.7539 | 2.0139 | 2.9963 | 4.1814 | 3.8078 | 3.7086 | 3.7154 | 3.5196 | 3.2731 | 2.9592 | 2.392 | 2.2671 | 2.2299 | 2.4359 | 2.4122 | 2.5304 | 2.6789 | 2.9524 | 3.0773 | 2.1388 | 1.4098 | 1.3724 | 1.4062 | 1.4487 | 1.4028 | 72.082 |
| 1.6181 | 1.6181 | 1.6214 | 1.6518 | 1.7193 | 1.8845 | 2.1211 | 2.381 | 3.3834 | 4.5585 | 4.275 | 4.0758 | 4.0825 | 3.8867 | 3.6403 | 3.3263 | 2.7591 | 2.8342 | 2.5971 | 2.803 | 2.7794 | 2.8976 | 3.0461 | 3.3196 | 3.4445 | 2.5059 | 1.7787 | 1.7396 | 1.7734 | 1.8139 | 1.77 | 83.484 |
| 1.7887 | 1.7887 | 1.792 | 1.8224 | 1.8899 | 2.0351 | 2.2917 | 2.5518 | 3.534 | 4.7291 | 4.4458 | 4.2464 | 4.2531 | 4.0573 | 3.8109 | 3.4969 | 2.9297 | 2.8048 | 2.7877 | 2.9738 | 2.95 | 3.0682 | 3.2167 | 3.4902 | 3.8151 | 2.8765 | 1.9473 | 1.9102 | 1.944 | 1.8845 | 1.9408 | 88.753 |
| 1.5995 | 1.5995 | 1.6029 | 1.6333 | 1.7008 | 1.848 | 2.1025 | 2.3625 | 3.3449 | 4.54 | 4.2584 | 4.0572 | 4.064 | 3.8682 | 3.6217 | 3.3078 | 2.7406 | 2.6157 | 2.5786 | 2.7845 | 2.7609 | 2.879 | 3.0276 | 3.301 | 3.4259 | 2.4874 | 1.7582 | 1.7211 | 1.7548 | 1.7953 | 1.7514 | 82.889 |
| 1.1853 | 1.1853 | 1.1887 | 1.229 | 1.2866 | 1.4417 | 1.6983 | 1.8582 | 2.8407 | 4.1358 | 3.8522 | 3.653 | 3.6597 | 3.4639 | 3.2175 | 2.9035 | 2.3384 | 2.2114 | 2.1743 | 2.3802 | 2.3566 | 2.4748 | 2.6233 | 2.8968 | 3.0217 | 2.0832 | 1.3539 | 1.3168 | 1.3508 | 1.3911 | 1.3472 | 70.358 |
| 1.11 | 1.11 | 1.1134 | 1.1437 | 1.2113 | 1.3564 | 1.613 | 1.8729 | 2.8554 | 4.0505 | 3.7669 | 3.5677 | 3.5744 | 3.3786 | 3.1322 | 2.8182 | 2.2511 | 2.1261 | 2.089 | 2.2949 | 2.2713 | 2.3895 | 2.538 | 2.8115 | 2.9364 | 1.9979 | 1.2686 | 1.2315 | 1.2653 | 1.3058 | 1.2619 | 67.713 |
| 0.7725 | 0.7725 | 0.7759 | 0.8062 | 0.8738 | 1.0189 | 1.2755 | 1.5355 | 2.5179 | 3.713 | 3.4294 | 3.2302 | 3.2369 | 3.0411 | 2.7947 | 2.4807 | 1.9136 | 1.7887 | 1.7515 | 1.9575 | 1.8338 | 2.052 | 2.2005 | 2.474 | 2.5989 | 1.6604 | 0.8312 | 0.694 | 0.8278 | 0.8683 | 0.9244 | 57.251 |
| -0.822 | -0.822 | -0.819 | -0.788 | -0.721 | -0.578 | -0.319 | -0.059 | 0.9231 | 2.1182 | 1.8346 | 1.6355 | 1.6422 | 1.4464 | 1.2 | 0.886 | 0.3188 | 0.1939 | 0.1568 | 0.3827 | 0.3391 | 0.4572 | 0.6058 | 0.8792 | 1.0042 | 0.0656 | -0.664 | -0.701 | -0.667 | -0.626 | -0.67 | 7.8142 |
| -1.019 | -1.019 | -1.015 | -0.985 | -0.918 | -0.772 | -0.516 | -0.256 | 0.7268 | 1.9217 | 1.8381 | 1.4389 | 1.4457 | 1.2498 | 1.0034 | 0.6894 | 0.1223 | -0.003 | -0.04 | 0.1682 | 0.1425 | 0.2607 | 0.4092 | 0.6827 | 0.8076 | -0.131 | -0.86 | -0.897 | -0.864 | -0.823 | -0.887 | 1.7208 |
| -1.045 | -1.045 | -1.041 | -1.011 | -0.943 | -0.798 | -0.542 | -0.282 | 0.7006 | 1.8957 | 1.6121 | 1.4129 | 1.4197 | 1.2239 | 0.9774 | 0.6835 | 0.0963 | -0.029 | -0.068 | 0.1402 | 0.1168 | 0.2347 | 0.3833 | 0.6567 | 0.7816 | -0.157 | -0.888 | -0.923 | -0.889 | -0.849 | -0.893 | 0.816 |
| -1.056 | -1.056 | -1.053 | -1.022 | -0.955 | -0.809 | -0.553 | -0.293 | 0.6895 | 1.8846 | 1.601 | 1.4018 | 1.4086 | 1.2128 | 0.9663 | 0.6523 | 0.0852 | -0.04 | -0.077 | 0.1291 | 0.1054 | 0.2238 | 0.3721 | 0.6456 | 0.7705 | -0.168 | -0.897 | -0.934 | -0.901 | -0.88 | -0.804 | 0.5711 |
| -1.056 | -1.056 | -1.053 | -1.022 | -0.955 | -0.809 | -0.553 | -0.293 | 0.6895 | 1.8846 | 1.601 | 1.4018 | 1.4086 | 1.2128 | 0.9663 | 0.6523 | 0.0852 | -0.04 | -0.077 | 0.1291 | 0.1054 | 0.2238 | 0.3721 | 0.6456 | 0.7705 | -0.168 | -0.897 | -0.934 | -0.901 | -0.86 | -0.804 | 0.5711 |
| -1.056 | -1.056 | -1.053 | -1.022 | -0.955 | -0.809 | -0.553 | -0.293 | 0.6895 | 1.8846 | 1.601 | 1.4018 | 1.4086 | 1.2128 | 0.9663 | 0.6523 | 0.0852 | -0.04 | -0.077 | 0.1291 | 0.1054 | 0.2238 | 0.3721 | 0.6456 | 0.7705 | -0.168 | -0.897 | -0.934 | -0.901 | -0.86 | -0.904 | 0.5711 |
| -5E-15 | -5E-15 | 0.1047 | 1.0468 | 3.1387 | 7.6398 | 15.594 | 23.652 | 54.107 | 91.155 | 82.384 | 78.189 | 78.398 | 70.328 | 62.689 | 52.956 | 35.374 | 31.501 | 30.35 | 39.734 | 38.001 | 39.684 | 44.269 | 52.748 | 56.619 | 27.524 | 4.9188 | 3.7878 | 4.8141 | 8.07 | 4.7095 | |

**Fig. 6**

Fig. 7

Fig. 8

18

75

Fig. 9

Fig. 10

Fig. 11

Fig. 12

Fig. 13

| 90 | | | | | | | | | |
|---|---|---|---|---|---|---|---|---|---|
| 1,57 | | | | | | | | | |
| -0 | | | | | | | | | |
| 1 | | | | | | | | | |
| | -3,67E-06 | -1 | 0 | | | | | | |
| | 1 | -3,673E-06 | 0 | | | | | | |
| | 0 | 0 | 1 | | | | | | |
| | -3,67E-06 | 1 | 0 | | | | 1,00001 | 1 | 1 |
| | -1 | -3,673E-06 | 0 | x | -2 | | 2 | 2 | 2 |
| | 0 | 0 | 1 | y | 1 | | 0 | 0 | 0 |
| | | | | z | 0 | | | | |

Fig. 14a

| 180 | | | | | | | | | |
|---|---|---|---|---|---|---|---|---|---|
| 3,14 | | | | | | | | | |
| -1 | | | | | | | | | |
| -0 | | | | | | | | | |
| | -1 | 7,346E-06 | 0 | | | | | | |
| | -7,35E-06 | -1 | 0 | | | | | | |
| | 0 | 0 | 1 | | | | | | |
| | -1 | -7,346E-06 | 0 | | | | 1,99999 | 2 | 2 |
| | 7,346E-06 | -1 | 0 | x | -2 | | -1 | -1 | -1 |
| | 0 | 0 | 1 | y | 1 | | 0 | 0 | 0 |
| | | | | z | 0 | | | | |

Fig. 14b

| 270 | | | | | | | | | |
|---|---|---|---|---|---|---|---|---|---|
| 4,71 | | | | | | | | | |
| 0 | | | | | | | | | |
| -1 | | | | | | | | | |
| | 1,102E-05 | 1 | 0 | | | | | | |
| | -1 | 1,102E-05 | 0 | | | | | | |
| | 0 | 0 | 1 | | | | | | |
| | 1,102E-05 | -1 | 0 | | | | -1 | -1 | -1 |
| | 1 | 1,102E-05 | 0 | x | -2 | | -2 | -2 | -2 |
| | 0 | 0 | 1 | y | 1 | | 0 | 0 | 0 |
| | | | | z | 0 | | | | |

Fig. 14c

| 360 | | | | | | | | | |
|---|---|---|---|---|---|---|---|---|---|
| 6,28 | | | | | | | | | |
| 1 | | | | | | | | | |
| 0 | | | | | | | | | |
| | 1 | -1,469E-05 | 0 | | | | | | |
| | 1,469E-05 | 1 | 0 | | | | | | |
| | 0 | 0 | 1 | | | | | | |
| | 1 | 1,469E-05 | 0 | | | | -2 | -2 | -2 |
| | -1,47E-05 | 1 | 0 | x | -2 | | 1,00003 | 1 | 1 |
| | 0 | 0 | 1 | y | -1 | | 0 | 0 | 0 |
| | | | | z | 0 | | | | |

Fig. 14d

| 0,00 | -2,00 | -1,00 | 0,00 | 1,00 | 2,00 | cont ho |
|---|---|---|---|---|---|---|
| -2,00 | 12,11 | 7,24 | 10,25 | 5,89 | 4,69 | 54,92 |
| -1,00 | 9,38 | 4,52 | 7,52 | 3,17 | 4,69 | 27,69 |
| 0,00 | 14,94 | 10,08 | 13,09 | 8,73 | 4,69 | 83,31 |
| 1,00 | 11,99 | 7,13 | 10,13 | 5,78 | 4,69 | 53,80 |
| 2,00 | 12,34 | 7,48 | 10,48 | 6,13 | 4,69 | 57,25 |
| conv | 56,13 | 17,52 | 47,55 | 4,01 | 48,91 | |

Fig. 15

| x | -2,00 | -1,00 | 0,00 | 1,00 | 2,00 | -2,00 | -1,00 | 0,00 | 1,00 | 2,00 | -2,00 | -1,00 | 0,00 | 1,00 | 2,00 | -2,00 | -1,00 | 0,00 | 1,00 | 2,00 | -2,00 | -1,00 | 0,00 | 1,00 | 2,00 |
|---|---|---|---|---|---|---|---|---|---|---|---|---|---|---|---|---|---|---|---|---|---|---|---|---|---|
| y | -2,00 | -2,00 | -2,00 | -2,00 | -2,00 | -1,00 | -1,00 | -1,00 | -1,00 | -1,00 | 0,00 | 0,00 | 0,00 | 0,00 | 0,00 | 1,00 | 1,00 | 1,00 | 1,00 | 1,00 | 2,00 | 2,00 | 2,00 | 2,00 | 2,00 |
| z | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 |
| val | 12,11 | 7,24 | 10,25 | 5,89 | 4,69 | 9,38 | 4,52 | 7,52 | 3,17 | 4,69 | 14,94 | 10,08 | 13,09 | 8,73 | 4,69 | 11,99 | 7,13 | 10,13 | 5,78 | 4,69 | 12,34 | 7,48 | 10,48 | 6,13 | 4,69 |

Fig. 16

| val | 12,11 | 7,24 | 10,25 | 5,89 | 4,69 | 9,38 | 4,52 | 7,52 | 3,17 | 4,69 | 14,94 | 10,08 | 13,09 | 8,73 | 4,69 | 11,99 | 7,13 | 10,13 | 5,78 | 4,69 | 12,34 | 7,48 | 10,48 | 6,13 | 4,69 |
|---|---|---|---|---|---|---|---|---|---|---|---|---|---|---|---|---|---|---|---|---|---|---|---|---|---|
| x' | -2,73 | -1,87 | -1,00 | -0,13 | 0,73 | -2,23 | -1,37 | 0,50 | 0,37 | 1,23 | -1,73 | -0,87 | 0,00 | 0,87 | 1,73 | -1,23 | 0,37 | 0,50 | 1,37 | 2,23 | -0,73 | 0,13 | 1,00 | 1,87 | 2,73 |
| y' | -0,73 | -1,23 | -1,73 | -2,23 | 2,73 | 0,13 | -0,37 | 0,87 | 1,37 | 1,87 | 1,00 | 0,50 | 0,00 | -0,50 | 1,00 | 1,87 | 1,37 | 0,87 | 0,37 | 0,13 | 2,73 | 2,23 | 1,73 | 1,23 | 0,73 |
| z' | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 | 0,00 |

Fig. 17

| Anx' | -3,00 | -2,00 | -1,00 | 0,00 | 1,00 | -2,00 | -1,00 | 1,00 | 0,00 | 1,00 | -2,00 | -1,00 | 0,00 | 1,00 | 2,00 | -1,00 | 0,00 | 1,00 | 1,00 | 2,00 | -1,00 | 0,00 | 1,00 | 2,00 | 3,00 |
|---|---|---|---|---|---|---|---|---|---|---|---|---|---|---|---|---|---|---|---|---|---|---|---|---|---|
| any' | -1,00 | -1,00 | -2,00 | -2,00 | 3,00 | 0,00 | 0,00 | 1,00 | 1,00 | 2,00 | 1,00 | 1,00 | 0,00 | -1,00 | 1,00 | 2,00 | 1,00 | 1,00 | 0,00 | 0,00 | 3,00 | 2,00 | 2,00 | 1,00 | 1,00 |
| val | 12,11 | 7,24 | 10,25 | 5,89 | 4,69 | 9,38 | 4,52 | 7,52 | 3,17 | 4,69 | 14,94 | 10,08 | 13,09 | 8,73 | 4,69 | 11,99 | 7,13 | 10,13 | 5,78 | 4,69 | 12,34 | 7,48 | 10,48 | 6,13 | 4,69 |

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

0,25% < R < 5,19%
<R> = 0,90%

Fig. 36

$$0,35\% < R < 4,69\%$$
$$<R> = 1,13\%$$

Fig. 37

Fig. 38

Fig. 39

Fig. 40

Fig. 41

Fig. 42

Fig. 43

**EP 1 902 423 B1**

## RÉFÉRENCES CITÉES DANS LA DESCRIPTION

**Documents brevets cités dans la description**

- US 3924131 A

- US 3919552 A